# EUROPÄISCHE PATENTSCHRIFT

(11) **EP 1 863 628 B1**
(45) Veröffentlichungstag und Bekanntmachung des Hinweises auf die Patenterteilung: **12.10.2011**
(21) Anmeldenummer: 06704750.6
(22) Anmeldetag: 16.03.2006
(51) Int. Cl.: B29C 47/90, B29C 47/12

(54) **TRAGANORDNUNG FÜR EIN EXTRUSIONSWERKZEUG UND VERFAHREN ZUR EXTRUSION EINES GEGENSTANDES**
SUPPORT ARRANGEMENT FOR AN EXTRUSION TOOL AND METHOD FOR EXTRUSION MOULDING AN OBJECT
DISPOSITIF SUPPORT POUR UN OUTIL D'EXTRUSION AINSI QUE PROCÉDÉ D'EXTRUSION PERMETTANT DE FACONNER UN ARTICLE

(30) Priorität: 16.03.2005 AT 4412005
(43) Veröffentlichungstag der Anmeldung: 12.12.2007
(73) Patentinhaber: Greiner Tool. Tec GmbH, 4550 Kremsmünster (AT)
(72) Erfinder: KÖSSL, Reinhold, A-4552 Wartberg/Krems (AT)
(74) Vertreter: Burger, Hannes
(86) Internationale Anmeldenummer: PCT/AT2006/000108
(87) Internationale Veröffentlichungsnummer: WO 2006/096898

(56) Entgegenhaltungen:
- EP-A- 0 999 034
- EP-A- 1 249 332
- EP-B1- 1 237 697
- WO-A-99/04949
- WO-A-2004/037516
- WO-A-2005/000557
- DE-A1- 2 412 818
- DE-A1- 10 235 151
- DE-A1- 19 917 837
- US-A- 5 316 459

## Beschreibung

Die Erfindung bezieht sich auf eine Traganordnung zur Halterung mehrerer in Extrusionsrichtung hintereinander angeordneter Kaliberierwerkzeuge einer Kalibriervorrichtung an einem Kalibriertisch einer Extrusionsanlage gemäß Anspruch 1. Weiters betrifft die Erfindung aber auch noch ein Verfahren zur Herstellung eines extrudierten Gegenstandes, umfassend einen ersten Teilabschnitt mit einer Hohlkammer sowie einen weiteren Teilabschnitt aus einem Vollprofil gemäß Anspruch 21.

Die WO 2004/037516 A1 beschreibt ein Verfahren sowie eine Vorrichtung zur Herstellung von Kunststoffprofilen, bei dem mindestens zwei Profilstränge gleichzeitig extrudiert werden. Danach wird jeder der Profilstränge in mindestens einem Kalibrierwerkzeug abgekühlt und kalibriert, wobei die weitgehend erkalteten Profile durch einen Raupenabzug gefördert und letztlich in einer Abtrenneinrichtung zu Profilstücken verarbeitet werden. Der Kalibriertisch weist zwei unabhängig voneinander bewegbare Werkzeugaufnahmen auf, auf denen jeweils getrennte Kalibrierwerkzeuggruppen angeordnet sind. Die Kalibrierwerkzeuggruppen setzen sich jeweils aus mehreren hintereinander angeordneten Trockenkalibrierwerkzeugen sowie nachfolgenden Kalibriertanks zusammen. Die unabhängig nebeneinander angeordneten Werkzeugaufnahmen sind sowohl in Extrusionsrichtung, als auch in Querrichtung zu dieser unabhängig voneinander bewegbar. Weiters ist es möglich, die beiden Werkzeugaufnahmen miteinander zu koppeln, um eine einzige Kalibrierwerkzeuggruppe darauf aufnehmen zu können. Die nebeneinander angeordneten Werkzeugaufnahmen sind durchlaufend ausgebildet und bilden eine ebene Aufnahmefläche für die darauf zu halternden Kalibrierwerkzeuggruppen aus. Eine winkelige Verlagerung von hintereinander angeordneten Kalibrierwerkzeugen einer Kalibrierwerkzeuggruppe ist dabei nicht vorgesehen.

Die WO 2005/000557 A1 beschreibt ein Verfahren sowie eine Vorrichtung zur Herstellung von Kunststoffprofilen, bei dem zunächst ein erstes Profil hergestellt wird, in dem ein Profilstrang durch einen Extruder extrudiert und in einer an den Extruder angeschlossenen ersten Extrusionswerkzeugdüse geformt sowie danach in einem auf einem Kalibriertisch angeordneten ersten Kalibrierwerkzeug kalibriert und gekühlt wird. Um unterschiedliche Profile herstellen zu können, müssen Extrusionswerkzeug und Kalibrierwerkzeug gewechselt werden. Um Stillstandszeiten beim Werkzeugwechsel so gering wie möglich zu halten, werden für den Wechsel der Extrusionswerkzeugdüse und des Kalibrierwerkzeuges frei verfahrbare Manipulationsgeräte eingesetzt. Zum raschen Wechsel von einem herzustellenden Profilstrang auf einen anderen Profilstrang werden neben den im Betrieb befindlichen Anlagenteilen, wie Extrusionswerkzeugdüse, Kalibrier- und Kühlwerkzeuge, im Bereich des Kalibriertisches, die weiteren Anlagenteile bereit gestellt und zum Wechsel entsprechend vorbereitet. Der Wechsel der Anlagenteile zum Herstellen des weiteren Profilstranges erfolgt dadurch, dass die ersten Anlagenteile abgebaut und durch die neben dem Kalibriertisch bereit gestellten weiteren Anlagenteile rasch ersetzt werden. Dies wird durch die frei verfahrbaren Manipulationsgeräte einfach ermöglicht. Eine winkelige Verschwenkung von unmittelbar in Extrusionsrichtung hintereinander angeordneten Kalibrierwerkzeugen ist hier ebenfalls nicht zu entnehmen.

Die EP 1249 332 A1 beschreibt eine weitere Vorrichtung zum Kühlen und Kalibrieren eines extrudierten Kunststoffprofils, mit einem eine Kühlflüssigkeit aufnehmenden Kühltank und mit innerhalb des Kühltanks angeordneten Kalibrierblenden für das der Kühlflüssigkeit ausgesetzte Kunststoffprofil. Dem Kühltank ist in Abzugsrichtung des Kunststoffprofils eine Abzugseinrichtung nachgeordnet. Zur Schwingungsdämpfung bzw. die Unterdrückung von Längsschwingungen des Kunststoffprofils ist zwischen der zulaufseitigen Kalibrierblende des Kühltanks und der Abzugseinrichtung wenigstens eine zumindest abschnittsweise im Bereich des Umfangs am Kunststoffprofil anliegende Dämpfungseinrichtung vorgesehen. Durch das hergestellte Kunststoffprofil wird ein Schwingungssystem bestimmt. Die Eigenschwingungen des Schwingungssystems sollen aus diesem Schwingungssystem verlagert werden, was zu einer ausreichenden Verringerung der für das Auftreten von Markierungen am Kunststoffprofil maßgebenden Schwingungsamplituden führt. Eine Dämpfungseinrichtung benützt ein Kalibrierblendenpaar, wobei die zusammengehörigen Kalibrierblenden gegeneinander um die Längsachse des Kunststoffprofils verdreht bzw. verschwenkt werden. Das Kunststoffprofil wird während dem Durchtritt durch die Kalibrierblenden zwischen diesen formschlüssig verspannt, was die angestrebte Unterdrückung von Längsschwingungen des Kunststoffprofils zur Folge hat, ohne dass die Maßhaltigkeit des Kunststoffprofils gefährdende Verformungen des Kunststoffprofils befürchtet werden müssen. Eine winkelige Verlagerung der Kalibrierachsen von hintereinander angeordneten Kalibrierwerkzeugen ist auch aus diesem Dokument nicht entnehmbar.

Die EP 0 999 036 A1 beschreibt eine Vorrichtung zum Kalibrieren eines extrudierten Kunststoffprofils, wobei diese mindestens einen flüssigkeitsgekühlten Kalibrator aufweist. Der Kalibrator ist aus mindestens zwei zusammenwirkenden Teilen, vorzugsweise einem Oberteil, zwei Seitenteile und einem Unterteil gebildet, die einen Raum mit Seitenflächen definieren, in dem das zu kalibrierende Kunststoffprofil mittels eines Vakuums an die Seitenflächen des Raums angesaugt wird. Zur leichteren Handhabung sowie der Durchführung von Umbaumaßnahmen am Kalibrator soll auf separate Montage- oder Untergestelle verzichtet werden können. Der Kalibrator hat eine kompakte Blockbauform mit integrierten Kühl- und Vakuumkanälen, wobei die Versorgung mit Medien zentral über einen Hauptanschluss erfolgt. Die Weiterverteilung erfolgt von einem eigenen Versorgungsblock aus. Die Seitenteile des Kalibrators können durch die entsprechenden Halter lediglich durch seitliches Versetzen bzw. durch Verschwenken leicht gelagert werden. Weiters kann dem Oberteil eine scharnierartige Lagerstelle zugeordnet sein, um welche der Oberteil aufgeklappt werden kann. Die einzelnen Kalibratoren sind auf einem gemeinsamen, ebenflächig ausgebildeten Versorgungsblock aufgespannt.

Die DE 24 12 818 A1 beschreibt eine Vorrichtung zum Kalibrieren eines aus einer Strangpresse austretenden Rohres aus thermoplastischem Kunststoff, bei der innerhalb eines Flüssigkeitsbades ein Kalibrierwerkzeug mit das zu kalibrierende Kunststoffrohr nur teilweise umgreifenden, in abwechselnder Folge gegeneinander stehend angeordneten Kalibrierlamellen und einen das Flüssigkeitsbad abschließenden Stirnflansch vorgesehen ist. Der Stirnflansch weist eine der Querschnittsform des zu kalibrierenden Rohres angepaßte Öffnung mit sich dichtend gegen die Außenfläche des Rohres gelegenen Umfangsrand auf. Die einzelnen hintereinander in wechselnder Folge gegeneinander versetzt angeordneten Kalibrierlamellen sind derart ausgebildet, dass jeweils eine Gruppe feststehend und eine weitere Gruppe um eine parallel zur Extrusionsrichtung erstreckende Verbindungsschraube verschwenkbar zwischen den feststehenden Lamellen ein- und ausschwenkbar ausgebildet ist. Die verschwenkbaren Lamellen können dabei soweit eingeschwenkt werden, bis dass der vollständige Umfang des zu kalibrierenden Rohres durch die zueinander versetzten Kalibrierlamellen umschlossen wird. Die Schwenkanordnung ist achsparallel zur Extrusionsrichtung ausgerichtet, um eine zueinander fluchtende Ausrichtung der hintereinander angeordneten Kalibrierflächen in der Kalibrierstellung zu erzielen.

Die DE 200 15 569 U1 beschreibt eine Positionier- und/oder Kupplungsvorrichtung zwischen einem Extrusionswerkzeug und einem diesen unmittelbar nachgeordneten Kalibrierwerkzeug einer Kalibriervorrichtung für kontinuierlich oder diskontinuierlich hergestellte Gegenstände. Die Positionier- und/oder Kupplungsvorrichtung umfasst eine zwischen dem Extrusionswerkzeug und der Kalibriervorrichtung angeordnete Kupplungsplatte sowie über einen Stellantrieb auf der Kupplungsplatte verstellbar gelagerte Kupplungselemente, die mit Kupplungsaufnahmen von am Extrusionswerkzeug und/oder der Kalibriervorrichtung angeordneten Kupplungsblöcken in bzw. außer Eingriff bringbar sind. Mit dieser Kupplungsvorrichtung ist es möglich, das unmittelbar an die Extrusionsdüse nachfolgende Kalibrierwerkzeug unter Zwischenschaltung der Kupplungsplatte an die Extrusionsdüse anzukuppeln und so eine exakt fluchtende Ausrichtung des Kalibrierwerkzeuges bezüglich der Extrusionsrichtung zu erzielen.

Bei bisher bekannten Extrusionsanlagen wurde das Problem des ungleichen Abkühlens von Hohlprofilen mit daran angeordneten Vollprofilsektionen dadurch gelöst, dass der rascher abgekühlten Vollprofilsektion nach der Kalibrierung bzw. den Kühlkammer zur Nachbehandlung eine zusätzliche Heizeinrichtung zugeordnet worden ist, wie dies in der DE 198 15 276 A1 beschrieben ist. Dadurch wurde die Geradheit des herzustellenden Profils verbessert, wobei der maschinentechnische Aufwand sowie die dabei eingesetzte Energie sehr hoch waren. Auch konnte nicht in allen Anwendungsfällen eine ausreichende Geradheit erzielt werden.

Bei weiteren bekannten Bauformen von Extrusionswerkzeugen, so genannten Dornhaltewerkzeugen wurde der in einem kreisförmigen Fließkanal vom Extruder angelieferte Schmelzestrom vom Dorn in eine sich erweiternde Ringspaltströmung umgeformt. Dabei wird die Schmelze lediglich im Dornhaltebereich in mehrere Teilströme aufgeteilt und umfließt die dort angeordneten Dornhaltestege, über die der Verdrängungskörper im Fließkanal fixiert wird. Im anschließenden sich verjüngenden Fließkanal werden bereits die Teilströme wieder zu einem gemeinsamen Schmelzestrom zusammengeführt. Anschließend daran folgt ein Mundstück mit parallelen Kanalwänden.

Der vorliegenden Erfindung liegt die Aufgabe zugrunde, eine Traganordnung zur Halterung von Kalibrierwerkzeugen und ein Verfahren zur Herstellung von extrudierten Gegenständen, umfassend einen ersten Teilabschnitt mit einer Hohlkammer sowie einen weiteren Teilabschnitt aus einem Vollprofil, zu schaffen, mit welcher ohne hohen maschinentechnischen Aufwand die Geradheit von Hohlprofilen verbessert werden kann.

Diese Aufgabe der Erfindung wird dadurch gelöst, dass die Traganordnung eine Tragplatte sowie eine von dieser getrennte Aufnahmeplatte umfasst, wobei die Tragplatte der Aufnahmeplatte in Extrusionsrichtung gesehen unmittelbar vorgeordnet ist und zwischen der Tragplatte und der Aufnahmeplatte eine Gelenkanordnung vorgesehen ist, mit welcher die Tragplatte bezüglich der Aufnahmeplatte relativ dazu räumlich verschwenkbar um die Gelenkanordnung ausgebildet ist, wodurch die Kalibrierachsen von in Extrusionsrichtung gesehen hintereinander angeordneten Kalibrierwerkzeugen winkelig zueinander verschwenkbar sind.

Durch die relative winkelige Verstellmöglichkeit der Tragplatte gegenüber der Aufnahmeplatte wird in vorteilhafter Weise eine gegenseitige, räumliche schwenkbare Verlagerung der in Extrusionsrichtung unmittelbar hintereinander, in den Kalibrierwerkzeugen angeordneten Aufnahmeöffnungen zur Kalibrierung des Gegenstandes geschaffen. Dadurch wird nach kurzer erfolgter Abkühlung und Verfestigung von Profilsektionen bzw. Profilpartien des Gegenstandes eine gezielte Vordehnung bzw. Streckung von nicht vollständig erkalteten Profilsektionen bzw. Profilpartien gegenüber bereits stärker abgekühlten Profilsektionen bzw. Profilpartien ermöglicht. Vorteilhaft dabei ist, dass dadurch zuerst im ersten oder in den ersten Kalibrierwerkzeugen bereits eine gewisse Abkühlung erfolgen kann und so im Übertrittsbereich zwischen dem weiteren unmittelbar benachbarten Kalibrierwerkzeug, die vorbestimmbare Dehnung bzw. Streckung des Gegenstandes zur Erzielung der Geradheit erfolgt. Weiters wird dadurch auch noch eine einfache Verstellmöglichkeit der ersten, an der Tragplatte angeordneten Kalibrierwerkzeuge relativ gegenüber den nachfolgenden Kalibrierwerkzeugen erzielt. So kann bereits nach kurzer Anfahrzeit und vor allem mit geringem Aufwand eine gegenseitige relative schwenkbare Verlagerung der hintereinander angeordneten Kalibrierwerkzeuge durch die Traganordnung mittels der Gelenkanordnung durchgeführt werden. Im gleichen Zuge kann damit auch die relative Verlagerung des Kalibriertisches bzw. der gesamten Aufspannvorrichtungen relativ bezüglichen dem feststehenden Extrusionswerkzeug, nämlich der Extrusionsdüse am Extruder, erfolgen. So kann die Verlagerung des oder der ersten Kalibrierwerkzeuge relativ gegenüber dem unmittelbar nachfolgenden Kalibrierwerkzeug sowie bezüglich des in Extrusionsrichtung vorgeordneten Extrusionswerkzeuges durchgeführt werden. Damit kann ein hoher Energieaufwand eingespart werden, da die Anpassung der relativen Lage der gesamten Traganordnung zueinander nur mit einfachen mechanischen Mitteln erfolgt.

Vorteilhaft ist weiters auch eine Ausbildung nach Anspruch 2, da dadurch eine Lastabtragung der Zugkräfte, welche im Kalibrierwerkzeug durch das Ansaugen der Profilwände an die Formflächen der Kalibrierwerkzeuge und der parallelen Abzugsbewegung des Gegenstandes entstehen, ohne zusätzlich hohen Aufwand in den Kalibriertisch erfolgen kann. Dadurch wird nicht nur eine einfache Verstellmöglichkeit geschaffen, sondern auch ohne zusätzlichen maschinentechnischen Aufwand eine ausreichende stabile Lagerung erzielt.

Durch die Ausbildung nach Anspruch 3 ist es möglich, unter Verwendung einfacher Mittel, wie beispielsweise Verstellschrauben, die horizontale sowie vertikale Verstellung der Tragplatte relativ gegenüber der Aufnahmeplatte durchrühren zu können. Weiters wird dadurch auch noch die Zugänglichkeit und der Bedienerfreundlichkeit wesentlich erhöht.

Nach einer anderen Ausführungsform gemäß Anspruch 4 wird zumindest eine gesicherte und feste Abstützung der Aufnahmeplatte der Traganordnung am Kalibriertisch erzielt. Dadurch kann weiters auch noch die Einfachheit der Montage verbessert werden.

Vorteilhaft ist auch eine Weiterbildung nach Anspruch 5, da dadurch zusammenwirkende Bauteile an der Tragplatte sowie der Aufnahmeplatte geschaffen werden, welche eine eindeutig vorbestimmbare und vor allem lagestabile Abstützung der miteinander in Eingriff stehenden Bauteile ermöglicht.

Bei der Ausgestaltung nach Anspruch 6 ist von Vorteil, dass dadurch mit geringem Platzbedarf eine Gelenkanordnung zur Verstellung in allen Raumrichtungen geschaffen worden ist.

Durch die Weiterbildung nach Anspruch 7 wird erreicht, dass an der dem Kalibrierwerkzeug zuwendbaren Auflagefläche ein ebenflächiger Übergang geschaffen werden kann.

Durch die Ausbildung nach Anspruch 8 wird die relative Verlagerungsmöglichkeit der Tragplatte gegenüber der Aufnahmeplatte festgelegt und dadurch die gegenseitigen Berührungsflächen minimiert.

Vorteilhaft ist auch eine Ausbildung nach Anspruch 9, da dadurch die Kerbwirkung und damit einhergehende Beschädigungen der zusammenwirkenden Stützflächen vermindert werden.

Durch die Weiterbildung nach Anspruch 10 wird eine Verbindungsmöglichkeit mit der nachfolgenden Aufnahmeplatte geschaffen. Weiters kann dadurch auf engstem Raume die Halterung der Tragplatte an der Aufnahmeplatte erzielt werden.

Gemäß einer Ausbildung, wie im Anspruch 11 beschrieben, wird ein gegenseitiges Verkippen der Tragplatte relativ gegenüber der feststehenden Aufnahmeplatte verhindert, ohne dass dabei die räumliche Verstellmöglichkeit beeinträchtigt wird.

Dabei erweist sich eine Ausgestaltung nach Anspruch 12 vorteilhaft, weil dadurch ausreichend Platz zur Aufnahme der Tragleiste zwischen der unmittelbar hintereinander angeordneten Tragplatte und Aufnahmeplatte geschaffen wird.

Nach einer vorteilhaften Weiterbildung gemäß Anspruch 13 wird bei paralleler Ausrichtung der Auflageflächen eine gegenseitige ebenflächige Ausrichtung der zur Aufnahme der Kalibrierwerkzeuge vorgesehenen Auflageflächen geschaffen. Dadurch wird ein Aufnahmeniveau geschaffen, welches eine einfache Fertigung der Kalibrierwerkzeuge ermöglicht und so, ausgehend von diesem zentralen Aufnahmeniveau, die gegenseitige räumliche Verstellung der hintereinander angeordneten Kalibrierwerkzeuge über die Tragplatte erfolgen kann.

Durch die Weiterbildung nach Anspruch 14 wird eine Verschwenkmöglichkeit des Verbindungselements gemeinsam mit der Tragplatte relativ gegenüber der Aufnahmeplatte ermöglicht. Im Zusammenwirken mit dem Verbindungselement wird eine einfach wirkende Gelenkanordnung geschaffen, welche bei hoher gegenseitiger Lagestabilität trotzdem eine räumliche Relatiwerstellung ermöglicht.

Von Vorteil ist aber auch eine Ausbildung nach Anspruch 15, da dadurch bei ausreichender Stabilität eine geringe Bauhöhe der Gelenkanordnung erzielbar ist.

Gemäß Anspruch 16 wird eine einfache Abstützmöglichkeit der in Extrusionsrichtung auftretenden und vom durch die Kalibrierwerkzeuge hindurch zuführenden Gegenstand eingebrachten Zugkräfte erzielt. Durch diese Abstützung kann auf zusätzliche Halte- bzw. Befestigungsmittel der Tragplatte relativ gegenüber dem Kalibriertisch verzichtet werden. Darüber hinaus kann auch der Verstellmechanismus der Tragplatte sehr einfach gehalten werden.

Von Vorteil ist aber auch eine Ausbildung nach Anspruch 17, da dadurch trotz der gegenseitigen Abstützung eine ausreichende Verstellmöglichkeit Tragplatte relativ bezüglich der Aufnahmeplatte geschaffen wird.

Bei der Ausbildung gemäß Anspruch 18 wird mit Vorteil eine auf kleinstem Raum wirkende Gelenkanordnung geschaffen, die bei einfachstem Aufbau trotzdem eine räumliche Verstellung ermöglicht.

Möglich ist dabei auch eine Ausbildung nach Anspruch 19, da dadurch mit einfachsten Mitteln eine Gelenkanordnung geschaffen worden ist, die bei ausreichender Verstellmöglichkeit eine hohe Betriebssicherheit und dies auf geringstem Raume ermöglicht.

Dabei erweist sich eine Ausbildung nach Anspruch 20 als vorteilhaft, weil dadurch eine eindeutige Anlage der Tragplatte an der Stützleiste der Aufnahmeplatte erzielbar ist und trotzdem die räumliche Verschwenkung der Tragplatte gegenüber der Aufnahmeplatte in einem vorbestimmbaren Winkelbereich gegeben ist.

Die Aufgabe der Erfindung wird aber auch durch ein Verfahren zur Herstellung eines extrudierten Gegenstandes dadurch gelöst, dass die Traganordnung durch eine Tragplatte sowie eine von dieser getrennten Aufnahmeplatte gebildet wird, und dabei die Tragplatte der Aufnahmeplatte in Extrusionsrichtung gesehen unmittelbar vorgeordnet wird, und weiters die Kalibrierachsen von in Extrusionsrichtung gesehen hintereinander angeordneten Kalibrierwerkzeugen um eine zwischen der Tragplatte und der Aufnahmeplatte angeordnete Gelenkanordnung relativ zueinander räumlich verschwenkt werden und dabei der erste Teilabschnitt mit der Hohlkammer bezüglich des weiteren Teilabschnittes mit dem Vollprofil im übertrittsbereich zwischen der Tragplatte und der Aufnahmeplatte gestreckt wird.

Durch die relative winkelige Verstellmöglichkeit der Tragplatte gegenüber der Aufnahmeplatte wird in vorteilhafter Weise eine gegenseitige, räumliche schwenkbare Verlagerung der in Extrusionsrichtung unmittelbar hintereinander, in den Kalibrierwerkzeugen angeordneten Aufnahmeöffnungen zur Kalibrierung des Gegenstandes geschaffen. Dadurch wird nach kurzer erfolgter Abkühlung und Verfestigung von Profilsektionen bzw. Profilpartien des Gegenstandes eine gezielte Vordehnung bzw. Streckung von nicht vollständig erkalteten Profilsektionen bzw. Profilpartien gegenüber bereits stärker abgekühlten Profilsektionen bzw. Profilpartien ermöglicht. Vorteilhaft dabei ist, dass dadurch zuerst im ersten oder in den ersten Kalibrierwerkzeugen bereits eine gewisse Abkühlung erfolgen kann und so im Übertrittsbereich zwischen dem weiteren unmittelbar benachbarten Kalibrierwerkzeug, die vorbestimmbare Dehnung bzw. Streckung des Gegenstandes zur Erzielung der Geradheit erfolgt. Weiters wird dadurch auch noch eine einfache Verstellmöglichkeit der ersten, an der Tragplatte angeordneten Kalibrierwerkzeuge relativ gegenüber den nachfolgenden Kalibrierwerkzeugen erzielt. So kann bereits nach kurzer Anfahrzeit und vor allem mit geringem Aufwand eine gegenseitige relative schwenkbare Verlagerung der hintereinander angeordneten Kalibrierwerkzeuge durch die Traganordnung mittels der Gelenkanordnung durchgerührt werden. Im gleichen Zuge kann damit auch die relative Verlagerung des Kalibriertisches bzw. der gesamten Aufspannvorrichtungen relativ bezüglichen dem feststehenden Extrusionswerkzeug, nämlich der Extrusionsdüse am Extruder, erfolgen. So kann die Verlagerung des oder der ersten Kalibrierwerkzeuge relativ gegenüber dem unmittelbar nachfolgenden Kalibrierwerkzeug sowie bezüglich des in Extrusionsrichtung vorgeordneten Extrusionswerkzeuges durchgerührt werden. Damit kann ein hoher Energieaufwand eingespart werden, da die Anpassung der relativen Lage der gesamten Traganordnung zueinander nur mit einfachen mechanischen Mitteln erfolgt.

Die Erfindung wird im nachfolgenden anhand der in den Zeichnungen dargestellten Ausführungsbeispiele näher erläutert.

Es zeigen:
- Fig. 1: eine Extrusionsanlage mit einer erfindungsgemäßen Formgebungseinrichtung, in Seitenansicht und stark vereinfachter, schematischer Darstellung;
- Fig. 2: eine mögliche Ausbildung eines Extrusionswerkzeuges der Formgebungseinrich- tung in Seitenansicht geschnitten und vereinfachter schematischer Darstellung;
- Fig. 3: einen Teilbereich des Extrusionswerkzeuges nach Fig. 2 in Ansicht geschnitten, gemäß den Linien III-III in Fig. 2;
- Fig. 4: einen weiteren Teilbereich des Extrusionswerkzeuges nach Fig. 2 in Ansicht ge- schnitten, gemäß den Linien IV - IV in Fig. 2;
- Fig. 5: einen andere Ausbildung der Formgebungseinrichtung im Bereich der Kalibrier- werkzeuge, in Seitenansicht und vereinfachter schematischer Darstellung;
- Fig. 6: die Formgebungseinrichtung nach Fig. 5, in Draufsicht und vereinfachter sche- matischer Darstellung;
- Fig. 7: ein möglicher Querschnitt eines Gegenstandes mit einer Vollprofil- und zumin- dest einer Hohlprofilsektion zur Ausrichtung in der Formgebungseinrichtung nach den Fig. 5 und 6;
- Fig. 8: eine Behandlungsvorrichtung für den aus dem Extrusionswerkzeug austretenden Gegenstand, in Seitenansicht geschnitten und schematisch vereinfachter Darstel- lung;
- Fig. 9: das Extrusionswerkzeug nach Fig. 8 in Ansicht, mit schematisch angedeuteter Behandlungsvorrichtung;
- Fig. 10: eine weitere mögliche Ausbildung des Extrusionswerkzeuges, in Draufsicht und bei entfernter Deckplatte;
- Fig. 11: das Extrusionswerkzeug nach Fig. 10 in Ansicht geschnitten, gemäß den Linien XI-XI in Fig. 10;
- Fig. 12: eine Kaliberplatte des Extrusionswerkzeuges nach den Fig. 10 und 11, in Drauf- sicht geschnitten gemäß den Linien XII - XII in Fig. 11;
- Fig. 13: eine andere Ausführungsform eines Extrusionswerkzeuges in Seitenansicht ge- schnitten und schematisch vereinfachter Darstellung;
- Fig. 14: eine mögliche Kanalausbildung im Eintrittsbereich des Extrusionswerkzeuges nach Fig. 13, in Ansicht geschnitten gemäß den Linien XIV - XIV in Fig. 13;
- Fig. 15: die Kanalausbildung des Extrusionswerkzeuges nach den Fig. 13 und 14, in An- sicht geschnitten gemäß den Linien XV - XV in Fig. 13;
- Fig. 16: die Kanalausbildung des Extrusionswerkzeuges nach den Fig. 13 bis 15, in An- sicht geschnitten gemäß den Linien XVI - XVI in Fig. 13;
- Fig. 17: das Extrusionswerkzeug nach den Fig. 13 bis 16, in Ansicht gemäß Pfeil XVII in Fig. 13;
- Fig. 18: eine andere Ausbildung eines Extrusionswerkzeuges mit zwei in dieses einmün- denden Extrudern, in vereinfachter schaubildlicher Darstellung;
- Fig. 19: einen möglichen Querschnitt eines mit dem Extrusionswerkzeug nach Fig. 18 herzustellenden Gegenstandes;
- Fig. 20: eine weitere mögliche Ausführungsform eines Extrusionswerkzeuges in Seitenan- sicht geschnitten und schematisch vereinfachter Darstellung;
- Fig. 21: eine Extrusionsanlage mit einer zusätzlichen Vorrichtung zum Aufbringen eines bandförmigen Elements auf den herzustellenden Gegenstand, in Seitenansicht und stark vereinfachter, schematischer Darstellung;
- Fig. 22: eine weitere mögliche Ausbildung einer Traganordnung für Kalibrierwerkzeuge gemäß der Fig. 5 bis 7, in schaubildlicher und vereinfachter Darstellung;
- Fig. 23: einen Teilbereich der Traganordnung nach Fig. 22 in voneinander distanzierter Stellung der Gelenkanordnung, in Ansicht und vereinfachter schematischer Dar- stellung;
- Fig. 24: einen Teilbereich der Traganordnung nach den Fig. 22 und 23 in voneinander distanzierter Stellung der Gelenkanordnung, in Draufsicht sowie vergrößerter schematischer Darstellung;
- Fig. 25: einen Teilbereich der Traganordnung nach den Fig. 22 bis 24 im Bereich der Ge- lenkanordnung in voneinander distanzierter Stellung der Gelenkanordnung, in Ansicht, teilweise geschnitten sowie vergrößerter Darstellung;
- Fig. 26: die Gelenkanordnung der Traganordnung nach Fig. 25 im zusammengebauten Zustand, in Ansicht sowie vergrößerter Darstellung;
- Fig. 27: eine mögliche Ausbildung eines Passungs- und Zentrierelements zwischen un- mittelbar benachbarten Bauteilen eines Extrusionswerkzeuges in voneinander ge- trennter Position der einzelnen Bauteile, in Ansicht geschnitten;
- Fig. 28: eine andere mögliche Ausbildung eines Passungs- und Zentrierelements zwischen unmittelbar benachbarten Bauteilen eines Extrusionswerkzeuges in voneinander getrennter Position der einzelnen Bauteile, in Ansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

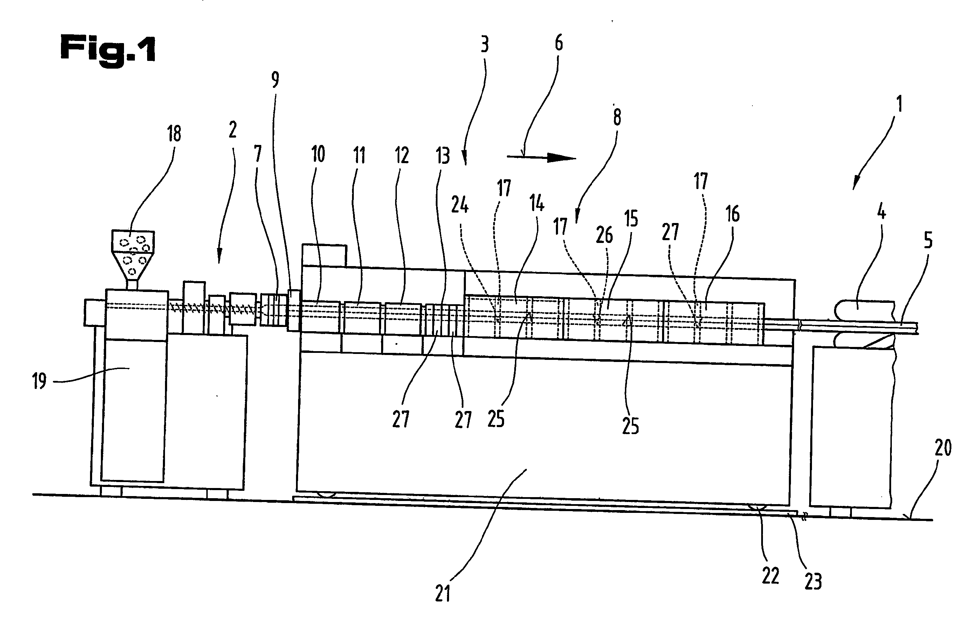

In der Fig. 1 ist eine Extrusionsanlage 1 gezeigt, die aus einem Extruder 2, einer diesem nachgeordneten Formgebungseinrichtung 3 sowie einem dieser nachgeordneten Raupenabzug 4 für einen extrudierten Gegenstand 5 besteht. Der Raupenabzug 4 dient dazu, um den Gegenstand 5, beispielsweise ein Profil, insbesondere ein Hohlprofil aus Kunststoff, für den Fenster- und/oder Türenbau in Extrusionsrichtung 6, ausgehend vom Extruder 2, durch die gesamte Formgebungseinrichtung 3 abzuziehen. Die Formgebungseinrichtung 3 umfasst bei diesem Ausführungsbeispiel ein dem Extruder 2 zugeordnetes Extrusionswerkzeug 7, eine Kalibriervorrichtung 8 aus mindestens einem, bevorzugt jedoch mehreren Kalibrierwerkzeugen 9 bis 13 und zumindest eine, bevorzugt jedoch mehrere Kühlkammern 14 bis 16, in welchen mehrere Kalibrierblenden 17 angeordnet sind. Einzelne der Kalibrierblenden 17 können aber auch nur zur Stützfunktion als Stützblenden für den Gegenstand 5 ausgebildet sein.

Im Bereich des Extruders 2 befindet sich ein Aufnahmebehälter 18, in welchem ein Material, wie beispielsweise ein Gemisch bzw. ein Granulat zur Bildung eines Kunststoffes, bevorratet ist, welches mit zumindest einer Förderschnecke im Extruder 2 dem Extrusionswerkzeug 7 zugeführt wird. Weiters umfasst der Extruder 2 noch eine Plastifiziereinheit, durch welche während des Durchtretens des Materials durch diese mittels der Förderschnecke sowie gegebenenfalls zusätzlicher Heizeinrichtungen das Material gemäß den diesem innewohnenden Eigenschaften unter Druck und gegebenenfalls Zufuhr von Wärme erwärmt und plastifiziert und in Richtung des Extrusionswerkzeuges 7 gefördert wird. Vor dem Eintritt in das Extrusionswerkzeug 7 kann der Massestrom aus dem plastifizierte Material in Übergangszonen hin zum gewünschten Profilquerschnitt geführt werden, wobei jedoch zumeist ein stangenförmiger Schmelzestrang aus dem plastifizierten Kunststoff in Form einer plastischen Masse aus dem Extruder 2 austritt und dem Extrusionswerkzeug 7 zugeleitet wird. Dieser Schmelzestrang weist bevorzugt einen kreisrunden Querschnitt auf, wobei die Umformung desselben innerhalb des Extrusionswerkzeuges 7 hin zur gewünschten Profilgeometrie des herzustellenden Gegenstandes 5 erfolgt, wie dies im Detail nachfolgend noch beschrieben werden wird.

Das Extrusionswerkzeug 7, die Plastifiziereinheit und der Aufnahmebehälter 18 sind auf einem Maschinenbett 19 abgestützt bzw. gehaltert, wobei das Maschinenbett 19 auf einer ebenen Aufstandsfläche 20, wie beispielsweise einem ebenen Hallenboden, aufgestellt ist.

Die gesamte Kalibriervorrichtung 8 ist bei diesem Ausführungsbeispiel auf einem Kalibriertisch 21 angeordnet bzw. gehaltert, wobei sich der Kalibriertisch 21 über Laufrollen 22 auf einer oder mehreren auf der Aufstandsfläche 20 befestigten Fahrschienen 23 abstützt. Diese Lagerung des Kalibriertisches 21 über die Laufrollen 22 auf den Fahrschienen 23 dient dazu, um den gesamten Kalibriertisch 21 mit den darauf angeordneten Ein- bzw. Vorrichtungen in Extrusionsrichtung 6- gemäß eingetragenem Pfeil - vom bzw. hin zum Extrusionswerkzeug 7 verfahren zu können. Um diese Verstellbewegung leichter und genauer durchführen zu können, ist dem Kalibriertisch 21 beispielsweise ein nicht näher dargestellter Verfahrantrieb zugeordnet, der eine gezielte und gesteuerte Längsbewegung des Kalibriertisches 21 hin zum Extruder 2 oder vom Extruder 2 weg ermöglicht. Für den Antrieb und die Steuerung dieses Verfahrantriebes können jegliche aus dem Stand der Technik bekannte Lösungen und Aggregate verwendet werden.

Die Kalibrierwerkzeuge 9 bis 13 der Kalibriervorrichtung 8 sind hier auf einer Aufnahmeplatte abgestützt und beispielsweise als Vakuumkalibrierung ausgebildet, wobei die Kalibrierung des extrudierten Gegenstandes 5 innerhalb der einzelnen Formgebungs- bzw. Kalibrierwerkzeuge 9 bis 13 erfolgt. Zusätzlich kann die Anordnung der Vakuumschlitze, der Kühlabschnitte und der Strömungskanäle bzw. Kühlbohrungen sowie deren Anschlüsse und Versorgung gemäß dem bekannten Stand der Technik erfolgen. Gleichfalls kann eines, aber auch mehrere der Kalibrierwerkzeuge 9 bis 13 aus einzelnen hintereinander und unmittelbar benachbarten Kalibrierblenden gebildet sein, wie dies in dem AT 003 321 U1 bereits detailliert beschrieben worden ist.

Diese Kalibrierung kann beispielsweise eine Kombination aus Trocken- und Nasskalibrierung bzw. nur eine vollständige Trockenkalibrierung umfassen. Weiters kann auch ein Zutritt von Umgebungsluft zumindest zwischen dem Extrusionswerkzeug 7 und dem ersten Kalibrierwerkzeug 9 und/oder zumindest zwischen dem ersten Kalibrierwerkzeug 9 und weiteren Kalibrierwerkzeugen 10 bis 13 vollständig verhindert werden. Selbstverständlich ist es aber auch möglich, zumindest bereichsweise zwischen den einzelnen Kalibrierwerkzeugen 9 bis 13 einen Zutritt von Umgebungsluft hin zum Gegenstand 5 zu ermöglichen bzw. auch Wasserbäder anzuordnen.

Die Kühlkammer 14 bis 16 ist hier durch ein vereinfacht dargestelltes Gehäuse gebildet, wobei in deren Innenraum durch darin angeordnete und vereinfacht dargestellte Kalibrierblenden 17 in unmittelbar aufeinander folgende Bereiche unterteilt ist. Zur raschen Wärmeabfuhr aus dem Gegenstand 5 ist der Innenraum der Kühlkammer 14 bis 16 mit einem Kühlmedium zumindest teilweise gefüllt, wobei das Kühlmedium sowohl flüssig als auch gasförmig sein kann. Selbstverständlich kann das gleiche Kühlmedium aber auch in unterschiedlichen Aggregatzuständen in der Kühlkammer 14 bis 16 vorhanden sein. Es ist aber auch zusätzlich noch möglich, den Innenraum der Kühlkammer 14 bis 16 auf einen gegenüber dem atmosphärischen Luftdruck geringeren Druck abzusenken, wobei man dann auch von einem Unterdrucktank sprechen kann.

Der Gegenstand 5 weist nach dem Austritt aus dem Extrusionswerkzeug 7 eine durch dieses vorgegebene Querschnittsform auf, welche in den daran anschließenden Kalibrierwerkzeugen 9 bis 13 ausreichend kalibriert und/oder gekühlt wird, bis der zähplastische Gegenstand 5 oberflächlich bzw. im Rand- bzw. Mantelbereich desselben soweit abgekühlt ist, dass seine Außenform stabil sowie in ihren Abmessungen entsprechend ausgebildet ist. Anschließend an die Kalibrierwerkzeuge 9 bis 13 durchläuft der Gegenstand 5 die Kühlkammern 14 bis 16, um eine weitere Wärmeabfuhr und damit verbundene Abkühlung und gegebenenfalls Kalibrierung sowie Abstützung zu erreichen und so die im Gegenstand 5 noch enthaltene Restwärme abzuführen.

Für den Betrieb der Extrusionsanlage 1, insbesondere den am Kalibriertisch 21 angeordneten bzw. gehalterten Ein- bzw. Vorrichtungen sind diese mit einer nicht näher dargestellten Versorgungseinrichtung verbindbar, mit welcher die unterschiedlichsten Aggregate, beispielsweise mit einem flüssigen Kühlmedium, mit elektrischer Energie, mit Druckluft sowie mit einem Vakuum, beaufschlagt werden können. Die unterschiedlichsten Energieträger können je nach Bedarf frei gewählt und eingesetzt werden.

Zum Hindurchführen des Gegenstandes 5 durch die einzelnen Kalibrierblenden 17 weisen diese zumindest eine Kalibrieröffnung 24 bzw. einen Durchbruch auf, wobei einzelne Formflächen 25, 26 der Kalibrieröffnung 24 zumindest bereichsweise einen äußeren Profilquerschnitt 27 des hindurchführbaren Gegenstandes 5 begrenzen bzw. umgrenzen. Wie bereits zuvor beschrieben, wird der Gegenstand 5 während des Hindurchtretens durch die einzelnen Kalibrierwerkzeuge 9 bis 13 im Bereich seiner äußeren Wandungen bzw. seines Mantels soweit abgekühlt und dabei das erweichte Kunststoffmaterial ausreichend verfestigt, dass die äußeren Profilsektionen des Hohlprofils bereits eine gewisse Eigensteifigkeit bzw. Festigkeit aufweisen. Um die noch im Profilinnenraum vorhandene Restwärme insbesondere im Bereich der Hohlkammern und der darin angeordneten Stege vollständig aus dem Gegenstand 5 abführen zu können, sind bei diesem Ausführungsbeispiel die Unterdrucktanks 14 bis 16 mit den darin angeordneten Kalibrierblenden 17 vorgesehen.

Während dieses weiteren Abkühlungs- und Verfestigungsprozesses kommt es aufgrund der über den Querschnitt gesehen unterschiedlichen Wärmeabfuhr zum Aufbau von inneren Spannungen im Bereich des Profilquerschnittes, wodurch der Gegenstand 5 an vorbestimmbaren Stellen seines Querschnittes derart zu führen ist, dass die geforderte Maßhaltigkeit, insbesondere im Bereich von Anschlussmaßen, Dichtungsnuten usw. in ausreichender Genauigkeit erzielbar ist. Dabei treten im Bereich derartiger Führungs- bzw. Anlagestellen, ausgehend vom Gegenstand 5 hin auf die Kalibrierblenden 17, hohe Druck- und damit verbunden Reibungskräfte auf, wodurch an diesen vorbestimmbaren Stellen ein erhöhter Verschleiß und in weiterer Folge damit verbunden eine immer stärker werdende Maßabweichung auf tritt. Bedingt durch diese über den Querschnitt zeitlich versetzte Abkühlung und die damit verbundene Verfestigung der Kunststoffmasse kommt es auch zu Verlagerungen der gesamten Profilgeometrie, wodurch Nachbearbeitungen einzelner Formflächen 25 bzw. 26 der Kalibrieröffnung 24 notwendig werden, um die geforderte Maßhaltigkeit des herzustellenden Gegenstandes 5 gewährleisten zu können.

Weiters ist bei dem der ersten Kühlkammer 14 unmittelbar vorgeordneten Kalibrierwerkzeug 13 noch vereinfacht dargestellt, dass dieses aus mehreren unmittelbar hintereinander angeordneten und zumindest bereichsweise aneinander anliegenden Kalibrierblenden bzw. Kalibrierplatten 27 gebildet ist, wobei die Kalibrierplatten 27 mit ihrer Stärke bzw. Dicke in Richtung der Extrusionsrichtung 6 ausgerichtet sind.

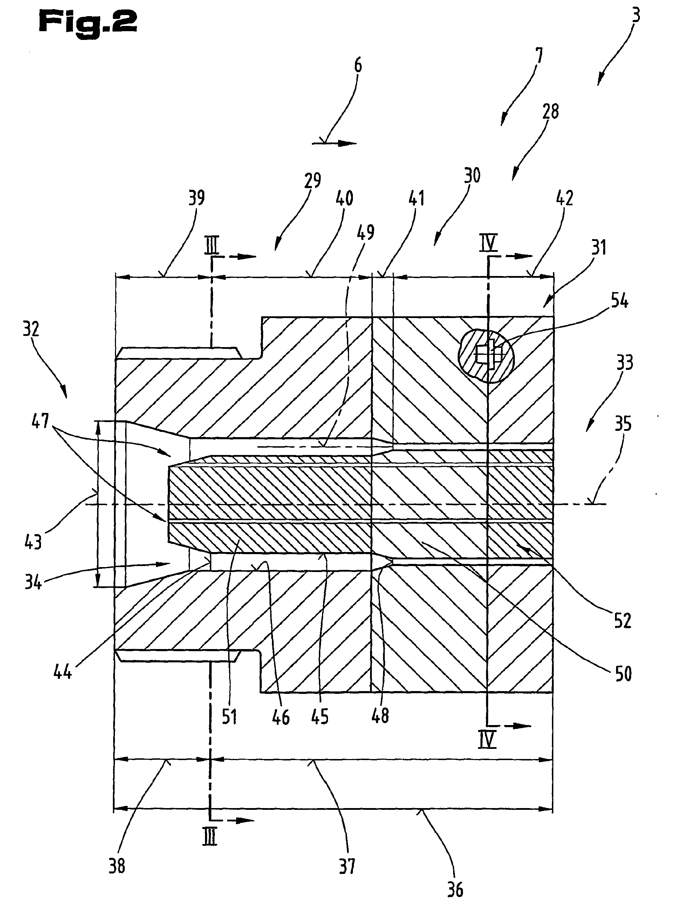

In den Fig. 2 bis 4 ist das Extrusionswerkzeug 7 der Formgebungseinrichtung 3 vereinfacht und schematisch dargestellt, wobei das Extrusionswerkzeug 7 auch als so genannte Extrusionsdüse 28 bezeichnet werden kann. Dabei weist das Extrusionswerkzeug 7 hier mehrere, in Extrusionsrichtung 6 unmittelbar hintereinander angeordnete Elemente 29 bis 31 auf, welche für die plastische Masse, insbesondere die Schmelze aus einem plastifizierten Kunststoff, in Extrusionsrichtung 6 zwischen einem Eintrittsbereich 32 und einem Austrittsbereich 33 mindestens einen Kanal-34 begrenzen.

Zwischen dem Eintrittsbereich 32 und dem Austrittsbereich 33 erstreckt sich eine Längsachse 35, welche parallel zur Extrusionsrichtung 6 ausgerichtet ist. Die einzelnen, hintereinander angeordneten Elemente 29 bis 31 zur Bildung des Extrusionswerkzeuges 7 weisen in Extrusionsrichtung 6 eine Gesamtlänge 36 auf. Der hier dargestellte Kanal 34 erstreckt sich, wie bereits zuvor beschrieben, zwischen dem Eintrittsbereich 32 und dem Austrittsbereich 33 und ist dabei über einen überwiegenden Längsabschnitt 37 zwischen dem Eintrittsbereich 32 und dem Austrittsbereich 33 ebenfalls parallel zur Extrusionsrichtung verlaufend ausgerichtet. Dieser Längsabschnitt 37 der parallelen Ausrichtung erstreckt sich, ausgehend vom Austrittsbereich 33 hin auf den Eintrittsbereich 32 und endet in einer kurzen Distanz 38 davor.

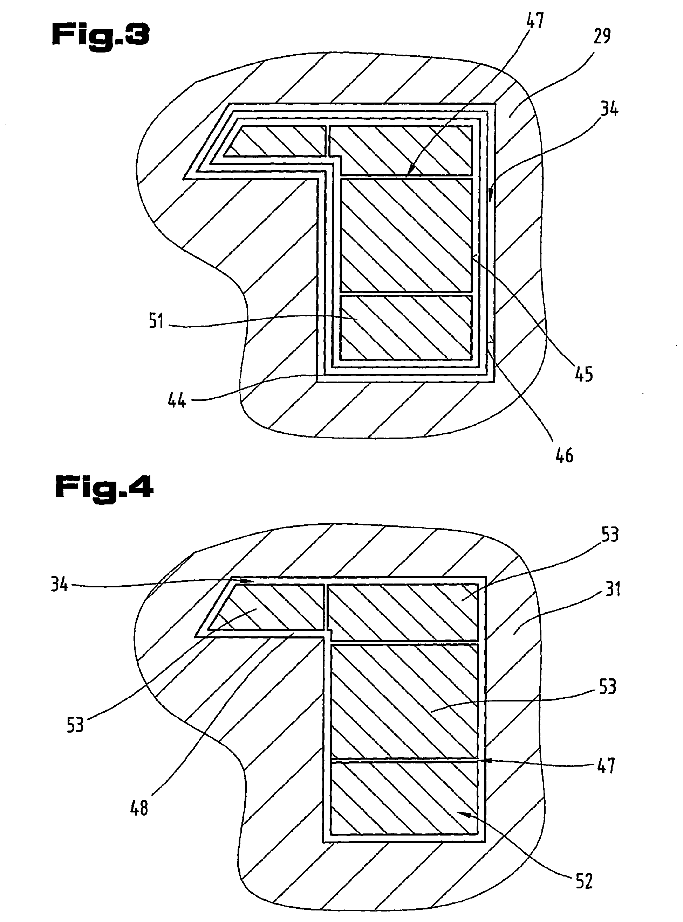

Dabei ist der gesamte Kanal 34 zwischen dem Eintrittsbereich 32 und dem Austrittsbereich 33 in seinem Längsverlauf in mehrere, im Querschnitt zueinander, unterschiedliche Kanalabschnitte 39 bis 42 unterteilt, wie dies vereinfacht durch eingetragene Maßlinien angedeutet ist. Der hier erste Kanalabschnitt 39 bildet einen Übergang von einem vollen Kanalquerschnitt 43 hin zu einem mantelförmig ausgebildeten, weiteren Kanalquerschnitt 44 aus, wobei im Bereich des Kanalquerschnitts 44 der zweite Kanalabschnitt 40 beginnt. Dieser mantelförmig ausgebildete Kanalquerschnitt 44 ist auch vereinfacht in der Fig. 3 dargestellt.

Dabei sei erwähnt, dass diese hier gezeigte Querschnittsform nur beispielhaft für eine Vielzahl von möglichen Profilquerschnitten gewählt worden ist. Der Kanal 44 ist innerhalb des Extrusionswerkzeuges 7 im Abschnitt seiner äußeren mantelförmigen Ausbildung über einen überwiegenden Teil seiner Längserstreckung zwischen dem Eintrittsbereich 32 und Austrittsbereich 33 durch innere bzw. äußere Kanalwände 45, 46 begrenzt, welche zueinander parallel verlaufend ausgerichtet sind. Dabei entspricht der Kanalquerschnitt im Austrittsbereich 33 einer Profilgeometrie des herzustellenden Gegenstandes 5. Weiters ist aus der Darstellung der Fig. 2 noch zu ersehen, dass der Kanal 34 einen Kanalquerschnitt aufweist, der über seinen Längsverlauf bzw. seine Längserstreckung in Extrusionsrichtung 6 abnehmend ausgebildet ist.

Wie bereits zuvor beschrieben, erfolgt der Anschluss des Extrusionswerkzeuges 7 direkt an den Extruder 2, wobei dieser eine Austrittsöffnung aufweist, welche einen vollen, bevorzugt kreisrunden Querschnitt aufweist. Durch diese Öffnung wird das im Extruder aufbereitete Extrudat an das Extrusionswerkzeug 7 weitergeleitet bzw. übergeben und wird in diesem vom vollen Schmelzestrang hin auf die herzustellende Profilgeometrie des Gegenstandes 5 umgeformt. Der Einfachheit und der besseren Übersichtlichkeit halber, wurde auf die Darstellung des Schmelzestranges innerhalb des Extrusionswerkzeuges 7 in den Fig. 2 bis 4 verzichtet.

Der an den ersten Kanalabschnitt 39 anschließende, zweite Kanalabschnitt 40 ist ebenfalls im ersten Element 29 des Extrusionswerkzeuges 7 angeordnet und weist den mantelförmig ausgebildeten Kanalquerschnitt 44 auf. Dieser ist über seine Längserstreckung parallel zur Extrusionsrichtung 6 verlaufend ausgerichtet. Gleichfalls ist der Kanalquerschnitt 44 im zweiten Kanalabschnitt 40 über dessen Längsverlauf bzw. Längserstreckung in seiner Größe gleich bleibend ausgebildet.

Wie weiters aus einer Zusammenschau der Fig. 2 bis 4 zu ersehen ist, ist mindestens im zweiten Kanalabschnitt 40 innerhalb des mantelförmige Kanalquerschnitts 44 des ersten Kanals 34 mindestens ein zusätzlicher, weiterer Kanal 47 angeordnet, wobei sich der zusätzliche weitere Kanal 47 bis hin zum Austrittsbereich 33 erstreckt und zur Ausbildung innerhalb des Mantels des Gegenstandes 5 angeordneter Stege dient. Dabei mündet der zusätzliche, weitere Kanal 47 in den mantelförmig ausgebildeten Kanalquerschnitt 44 des ersten Kanals 34, bevorzugt an beiden, quer zur Extrusionsrichtung angeordnete Endbereiche, wodurch somit in bekannter Weise eine Verbindung der Stege mit dem Mantel erfolgt.

Am Ende des hier ersten Elements 29 des Extrusionswerkzeuges 7 erfolgt der Übergang der Kanäle 34, 47 in das hier darstellte, zweite Element 30 des Extrusionswerkzeuges 7.

Der an den zweiten Kanalabschnitt 40 daran anschließende dritte Kanalabschnitt 41 ist am Ende des zweiten Elements im Übergangsbereich hin zum dritten Element 30 in diesem angeordnet und weist den vom Kanalquerschnitt 44 in Extrusionsrichtung 6 abnehmend ausgebildeten Kanalquerschnitt 48 auf. Die Abnahme des Kanalquerschnitts 44 hin zum geringen Kanalquerschnitt 48 erfolgt bevorzugt stetig sowie symmetrisch zur Extrusionsrichtung 6.

Wie vereinfacht in diesem Übergangsbereich zwischen den beiden Kanalabschnitten 40, 41 in der Fig. 2 dargestellt ist, nimmt der Kanalquerschnitt 44 hin zum kleiner Kanalquerschnitt 48 im dritten Kanalabschnitt 41 zentrisch zu einer Kanalmittel 49 ab. Der Kanal 34 weist mit seinem verringerten Kanalquerschnitt 48 am Ende des dritten Kanalabschnitts 41 bzw. am Beginn des vierten Kanalabschnitts 42 bereits die Profilgeometrie des herzustellenden Gegenstandes 5 auf. Der an den dritten Kanalabschnitt 41 daran anschließende, vierte Kanalabschnitt 42 ist ebenfalls wiederum parallel zur Extrusionsrichtung 6 verlaufend ausgerichtet, wobei in diesem vierten Kanalabschnitt 42 der mantelförmig ausgebildete Kanalquerschnitt 48 über dessen Längsverlauf in seiner Größe gleich bleibend ausgebildet ist und bereits der Profilgeometrie des herzustellenden Gegenstandes 5 entspricht. Dies gilt auch in analoger Weise für die innerhalb der Kanalquerschnitte 44, 48 angeordneten, weiteren Kanäle 47 zur Ausbildung der Stege, wie dies ebenfalls vereinfacht im Übergangsbereich zwischen dem ersten Element 29 und zweiten Element 30 angedeutet ist.

Das Extrusionswerkzeug 7 ist hier vereinfacht durch die drei hintereinander angeordneten Elemente 29 bis 31 gebildet, wobei diese den Kanal 34 zumindest an seinem äußeren Umfang begrenzen. So sind bei diesem Ausführungsbeispiel der erste Kanalabschnitt 39 sowie der zweite Kanalabschnitt 40 im ersten Element 29 angeordnet. Weiters ist der dritte und teilweise der vierte Kanalabschnitt 41, 42 im zweiten Element 30 angeordnet. Schließlich ist der restliche, vierte Kanalabschnitt 42 im dritten Element 31 angeordnet, wobei dies den Vorteil hat, dass Korrekturen der Profilgeometrie nur im relativ dünn ausgebildeten, dritten Element 31 durchzuführen sind. Durch diese spezielle Anordnung der einzelnen Kanalabschnitte 39 bis 42 in den hintereinander angeordneten und aneinander anliegenden Elementen 29 bis 31 kann eine einfache Bearbeitung der Kanäle erzielt werden, wodurch in wesentlich kürzerer Zeit ein Extrusionswerkzeug 7 für Hohlprofile mit Innenstegen geschaffen werden kann.

Bevorzugt werden die einzelnen Elemente 29 bis 31 aus einem Rundmaterial gebildet, wobei hier in Abhängigkeit von der Größe der herzustellenden Profilgeometrie beispielsweise ein Außendurchmesser von 180 mm Anwendung finden kann. Dieser Außendurchmesser ist in Abhängigkeit von den hier nicht näher dargestellten Heizelementen zur Temperierung des Extrusionswerkzeuges 7 abhängig und kann frei nach dem bekannten Stand der Technik gewählt werden. Die Gesamtlänge 36 der einzelnen Elemente 29 bis 31 kann beispielsweise 205 mm betragen, wobei das erste Element 29 in Extrusionsrichtung 6 eine Stärke von 120 mm, das zweite Element 30 eine Stärke von 55 mm und schließlich das dritte Element 31 eine Stärke von 30 mm aufweisen kann.

Wie bereits zuvor kurz beschrieben, weist der Kanal 34 die beiden diesen begrenzenden, inneren bzw. äußeren Kanalwandungen 45, 46 auf, wobei die inneren Kanalwandungen 45 zur inneren Begrenzung des mantelförmigen Kanalquerschnitts 44, 48 dienen und an zumindest einem Dorn 50 angeordnet sind. Dieser Dorn 50 ist bei diesem Ausführungsbeispiel als feststehender Dorn im zweiten Element 30 angeordnet, welcher über mehrere, hier nicht näher dargestellte, parallel zur Extrusionsrichtung 6 verlaufende Stege bzw. Rippen mit dem zweiten Element 30 verbunden ist. Diese Rippen bzw. Stege durchtrennen den durch den Kanal 34 hindurchtretenden Schmelzestrang, welcher anschließend im dritten Element 31 des Extrusionswerkzeuges 7 wieder zu einem über den Umfang bzw. Querschnitt durchlaufenden Schmelzestrang vereinigt wird. Das so ausgebildete Element 30 kann dann auch als so genannte Dornhalteplatte bezeichnet werden, wie dies in der Extrusionstechnik üblich ist.

Zur Begrenzung des Kanalquerschnitts 44 im ersten Element 29 ist in diesem innerhalb des mantelförmigen Kanalquerschnitts 44 in Extrusionsrichtung 6 zumindest bereichsweise ein Dornteil 51 angeordnet, welcher auch als so genannte Spitze bezeichnet werden kann, und vom Ende des zweiten Kanalabschnitts 40 entgegen der Extrusionsrichtung 6 in Richtung auf den Eintrittsbereich 32 ragt. Dabei ist der Dornteil 51 entgegen der Extrusionsrichtung 6 gesehen, an dem dem Eintrittsbereich 32 zugewendeten Ende zusammenlaufend ausgebildet. Dadurch kann eine einfachere Aufteilung des vollen Schmelzestranges hin zum mantelförmige ausgebildeten Kanalquerschnitt 44 erfolgen. Dieser Dornteil 51 kann am Dorn 50 des zweiten Elements 30 abgestützt bzw. mit diesem verbunden sein. Dadurch ist eine exakte Lagepositionierung sowie Halterung desselben zur Begrenzung des Kanals 34 einwandfrei möglich.

Wie weiters aus einer Zusammenschau der Fig. 2 und 4 zu ersehen ist, werden die Kanäle 34 sowie 47 im Bereich des dritten Elements 31 durch einen Domaufsatz 52 begrenzt, welcher ausgehend vom Dorn 50 des zweiten Elements 30 in Extrusionsrichtung 6 vorragt und in das dritte Element 31 hineinragt. Dabei kann dieser Domaufsatz 52 aus mehreren Dornaufsatzteilen 53 gebildet sein, wobei dies von der Anzahl der Stege innerhalb des Profilmantels abhängt.

Weiters ist es möglich, dass zwischen den einzelnen Elementen 29 bis 31 mehrere Passelemente 54 angeordnet sind, wie dies zwischen dem zweiten Element 30 und dritten Element 31 in der rechten, oberen Ecke der Fig. 2 dargestellt ist. Diese Passelemente 54 dienen dazu, die einzelnen Elemente 29 bis 31 zueinander exakt auszurichten und zu positionieren, wobei anschließend an die Positionierung die gegenseitige Halterung aneinander zur Bildung des Extrusionswerkzeuges 7, beispielsweise durch Verschraubungen, usw. erfolgen kann.

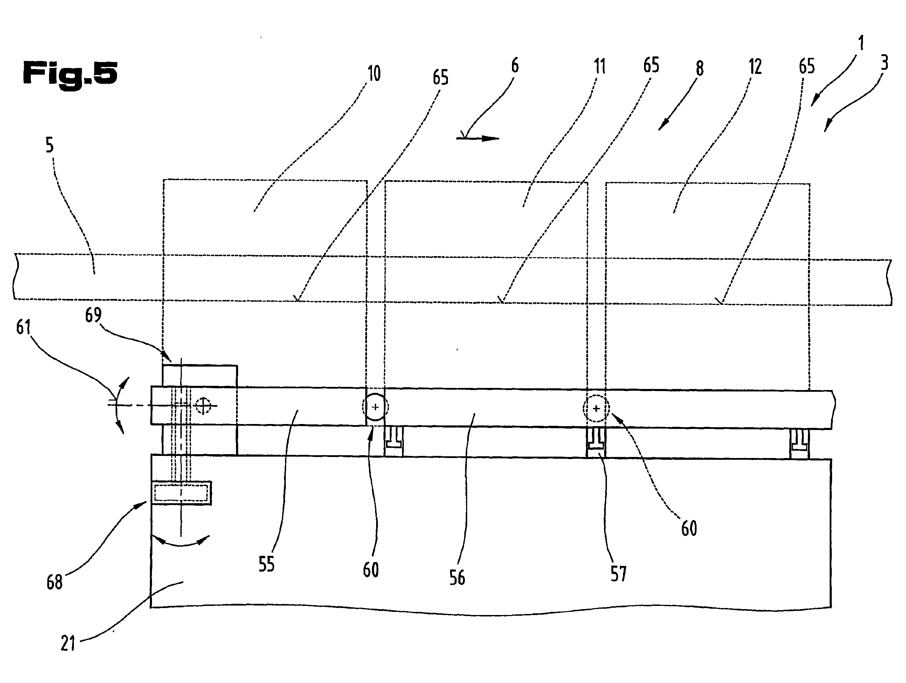

In den Fig. 5 bis 7 ist eine weitere, mögliche und gegebenenfalls für sich eigenständige Ausbildung der Formgebungseinrichtung 3 im Bereich der hintereinander angeordneten Kalibrierwerkzeuge 10 bis 12 schematisch vereinfacht dargestellt, wobei wiederum für gleiche Teile gleiche Bezugszeichen sowie Bauteilbezeichnungen, wie in den vorangegangenen Fig. 1 bis 4 verwendet werden. Gleichfalls wird, um unnötige Wiederholungen zu vermeiden, auf die detaillierte Beschreibung in den vorangegangenen Fig. 1 bis 4 hingewiesen bzw. Bezug genommen.

Am hier schematisch vereinfacht dargestellten Kalibriertisch 21 sind die in Extrusionsrichtung 6 dem Extrusionswerkzeug 7 nachgeordneten Kalibrierwerkzeuge 10 bis 12 in strichlierten Linien vereinfacht dargestellt, wobei der durch diese hindurchtretende Gegenstand 5 ebenfalls vereinfacht dargestellt wurde. Das erste in Extrusionsrichtung 6 angeordnete Kalibrierwerkzeug 10 ist auf einer vereinfacht dargestellten Tragplatte 55 angeordnet bzw. auf dieser gehaltert. Die weiteren hier dargestellten Kalibrierwerkzeuge 11 und 12 sind auf einer eigenen, von der Tragplatte 55 getrennten Aufnahmeplatte 56 angeordnet bzw. abgestützt, wobei die Tragplatte 55 in Extrusionsrichtung 6 gesehen, der Aufnahmeplatte 56 vorgeordnet ist. Die Aufnahmeplatte 56 ist über zusätzliche Distanz- bzw. Stützelemente 57 am Kalibriertisch 21 abgestützt bzw. gehaltert. Diese Stützelement 57 können auch als Halteschiene ausgebildet sein, wodurch es möglich ist, die Aufnahmeplatte 56 gemäß eingetragenem Doppelpfeil 58 parallel zu einer Längsachse 59 des Kalibriertisches 21 quer zur Extrusionsrichtung 6 relativ dazu verlagern zu können. Bevorzugt wird die Aufnahmeplatte 56 einstückig ausgebildet, welche dann auch die darauf hintereinander angeordneten Kalibrierwerkzeuge 11, 12 trägt und gegebenenfalls auch über diese Platte die Versorgung der Kalibrierwerkzeuge 11, 12 mit Kühlmedium, Vakuum sowie anderer Energieträger erfolgen kann.

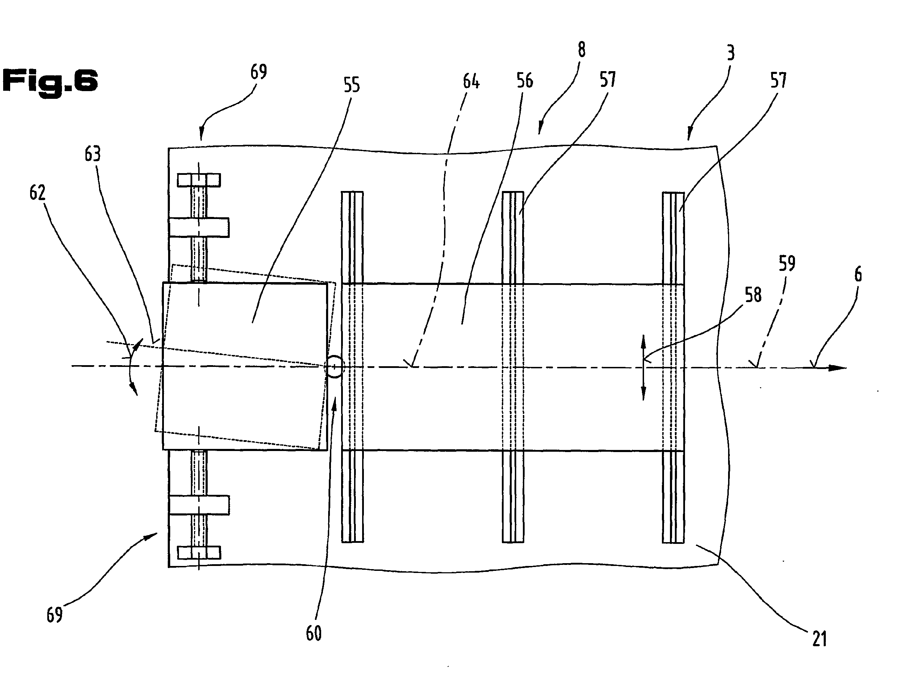

Weiters ist im Bereich zwischen der Tragplatte 55 und der Aufnahmeplatte 56 eine vereinfacht dargestellte Gelenkanordnung 60 gezeigt, mit welcher es möglich ist, die Tragplatte 55 relativ gegenüber der Aufnahmeplatte 56 räumlich zu verlagern, wobei dies aufgrund der Abstützung an der Tragplatte 55 in zwei Raumrichtungen erfolgt. Diese Gelenkanordnung 60 kann derart ausgebildet sein, dass im wesentlichen eine Abstützung der Tragplatte 55 an der Aufnahmeplatte 56 in Extrusionsrichtung 6 gesehen erfolgt, wodurch die durch den Gegenstand 5 während dem Durchtreten des Kalibrierwerkzeuges 10 in Verbindung mit dem Raupenabzug 4 eingebrachten Zugkräfte im Bereich der Gelenkanordnung 60 an die Aufnahmeplatte 56 und in weiterer Folge an den Kalibriertisch 21 abgetragen werden können. Die räumliche Verstellung kann dabei sowohl in einer vertikalen Richtung - gemäß Doppelpfeil 61 in Fig. 5 - als auch in einer horizontalen Ebene - gemäß Doppelpfeil 62 in Fig. 6 - erfolgen und dabei auch überlagert werden. Damit ist es möglich, wie dies vereinfacht in der Fig. 6 dargestellt ist eine Kalibrierachse 63 des Kalibrierwerkzeuges 10 in Folge der Schwenk- bzw. Drehmöglichkeit um die Gelenkanordnung 60 relativ zur Längsachse 59 des Kalibriertisches 21 bzw. einer weiteren Kalibrierachse 64 der weiteren Kalibrierwerkzeuge 11 und 12 dazu zu verlagern. Diese Kalibrierachsen 63, 64 werden durch die durch die einzelnen Kalibrierwerkzeuge 10 bis 12 hindurchführenden Kalibrieröffnungen 65 definiert. Diese relative Verlagerung der hintereinander angeordneten Kalibrieröffnungen 65 mit deren Kalibrierachsen 63, 64 dient dazu, um eine ausreichende Geradheit des Gegenstandes 5 in dessen abgekühlten bzw. verfestigten Zustand - also nach der Abkühlung - zu erzielen.

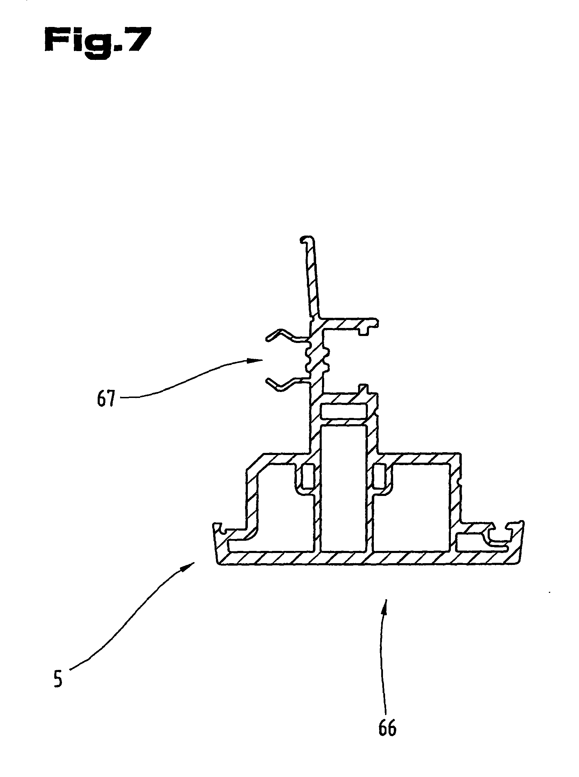

Bei dem in der Fig. 7 vereinfacht dargestellten Gegenstand 5 weist dieser einen ersten Teilabschnitt 66 mit einer Hohlkammer sowie einen weiteren Teilabschnitt 67 aus einem Vollprofil auf. Damit setzt sich der gesamte Querschnitt des Gegenstandes 5 bei diesem Ausführungsbeispiel aus zumindest dem ersten Teilabschnitt 66 sowie zumindest dem damit verbundenen, weiteren bzw. zweiten Teilabschnitt 67 zusammen. Aufgrund des Extrusionsvorganges weist der Gegenstand 5 während seines Austritts aus dem hier nicht näher dargestellten Extrusionswerkzeug 7, insbesondere der Extrusionsdüse 28, über seinen Querschnitt gesehen in etwa die gleiche Temperatur auf. Dies ändert sich jedoch unmittelbar nach dem Eintritt in die Kalibriervorrichtung 8 mit deren Kalibrierwerkzeugen 10 bis 12, in welcher dem weiteren Teilabschnitt 67 aufgrund der allseitigen Kühlmöglichkeit eine höhere Wärmemenge gegenüber dem ersten Teilabschnitt 66 mit der oder den Hohlkammern entzogen wird. Dieser erste Teilabschnitt 66 kann in den Kalibrierwerkzeugen 10 bis 12 nur im Bereich seiner Außenseite gut gekühlt werden und so nur im Mantelbereich eine ausreichende Wärmemenge entzogen werden.

Aufgrund der räumlichen Verlagerung der Tragplatte 55 und in weiterer Folge dem darauf angeordneten ersten Kalibrierwerkzeug 10 mit seiner Kalibrierachse 63 in Bezug zu den nachfolgenden Kalibrierwerkzeugen 11 und 12, mit deren weiterer Kalibrierachse 64 kann je nach relativer Lage des als Hohlprofil ausgebildeten Teilabschnitts 66 und dem als Vollprofil ausgebildeten, weiteren Teilabschnitts 67 bereits im Einlauf des Gegenstandes 5 in die Kalibriervorrichtung 8 eine Ausrichtung in Bezug auf die Geradheit des Gegenstandes 5 erzielt werden.

Bei dem hier in der Fig. 7 dargestellten Gegenstand 5, bei welchem der Teilabschnitt 67 aus dem Vollmaterial oberhalb des Teilabschnitts 66 mit der Hohlkammer angeordnet ist, ist die Tragplatte 55 gemäß dem in der Fig. 5 eingezeichneten Doppelpfeil 61 aus der horizontalen Ebene im Einlaufbereich in abgewandeter Richtung zur Aufstandsfläche 20, also nach oben zu verschwenken. Dadurch erfolgt eine Längsdehnung bzw. minimale Streckung des hohl ausgebildeten ersten Teilabschnitts 66, wodurch bereits nach weiterer Abkühlung in den nachfolgenden Kalibrierwerkzeugen 11, 12 der Gegenstand 5 geradlinig ausgerichtet die Kalbriervorrichtung 8 verlässt und in weiterer Folge in den in der Fig. 1 daran anschließend dargestellten Kühlkammern 14 bis 16 weiter abgekühlt wird. Durch die winkelige Verstellung wird der hohl ausgebildete Teilabschnitt 66 vor dem endgültigen Abkühlen gegenüber dem voll ausgebildeten Teilabschnitt 67 gestreckt bzw. verlängert, um später während der Abkühlung noch schrumpfen zu können.

Zur Verstellung aus der Horizontalebene - gemäß dem Doppelpfeil 61- ist der Tragplatte 55 an der von der Gelenkanordnung 60 abgewendeten Seite eine schematisch vereinfacht dargestellte Verstellvorrichtung 68 zugeordnet, welche beispielsweise durch eine Schrauben- oder Spindelanordnung gebildet sein kann. Mit dieser Verstellvorrichtung 68 ist die Tragplatte 55 somit in vertikaler Richtung im Bezug zur Extrusionsrichtung 6 verlagerbar und in der eingestellten Position auch festgelegt.

In der Fig. 6 ist der Tragplatte 55 für deren Verlagerung in einer Horizontalebene eine weitere Verstellvorrichtung 69 an der von der Gelenkanordnung 60 abgewendeten Seite zugeordnet, wobei diese quer zur Extrusionsrichtung 6 wirkend beispielsweise am Kalibriertisch 21 angeordnet sein kann. Auch diese Verstellvorrichtung 69 kann wiederum durch eine Schrauben- oder Spindelanordnung oder ähnliches gebildet sein, mit welcher eine Fixierung bzw. Halterung relativ gegenüber den nachfolgenden Kalibrierwerkzeugen 11, 12 bzw. dem Kalibriertisch 21 erfolgt.

Es sei dabei nur erwähnt, dass die hier dargestellten Verstellvorrichtungen 68, 69 nur beispielhaft für eine Vielzahl von möglichen Ausführungsbeispielen gezeigt worden sind, wobei stets eine nach der Verstellung bzw. Verlagerung der Tragplatte 55 um die Gelenkanordnung 60 die Halterung bzw. Fixierung wesentlich ist. Eine Verlagerung der Tragplatte 55 in Extrusionsrichtung 6 gesehen, ist hier nicht vorgesehen.

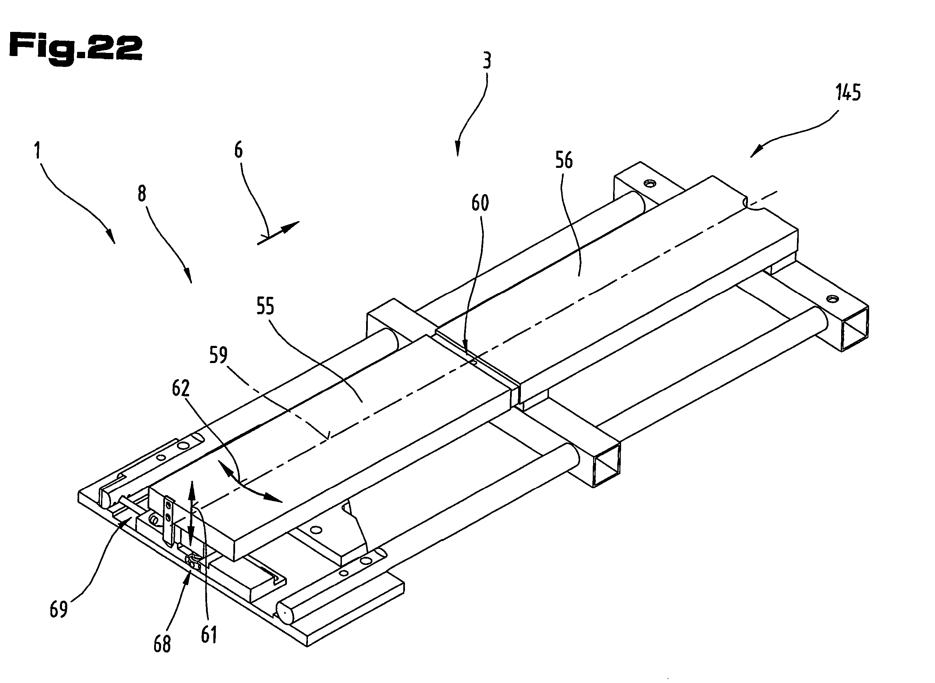

Gleichfalls sei auch erwähnt, dass die hier dargestellte Gelenkanordnung 60 ebenfalls nur beispielhaft für eine Vielzahl von möglichen Ausführungsformen gewählt worden ist und bei diesem Ausführungsbeispiel durch ein kegelförmig ausgebildetes Zwischenelement und entsprechend gegengleich ausgebildete Ausnehmungen in der Tragplatte 55 bzw. Aufnahmeplatte 56 gebildet ist, Es wären aber auch andere Gelenkanordnungen 60, wie z.B. Kardangelenke, elastische Stützelemente oder dgl., möglich. Eine weitere mögliche Ausführungsform der Gelenkanordnung 60 ist in den Fig. 22 bis 26 gezeigt.

Winkelbereiche der jeweiligen Verschwenkwinkel für die Verstellungen gemäß der Doppelpfeile 61 bzw. 62 sind ausgehend von der geradlinigen bzw. fluchtenden Ausrichtung der Kalibrierachsen 63, 64 zueinander bis hin zu 10° in den beiden Raumrichtungen vorzusehen. Dies ist abhängig vom Ausmaß der Abweichung des Gegenstandes 5 von der zu erzielenden Geradheit, wobei hier bevorzugt auch kleinere Winkelbereiche zwischen 1° und 5° auch ausreichend sein können. Weiters sei erwähnt, dass die Anordnung der Gelenkanordnung 60 zwischen der Tragplatte 55 und der Aufnahmeplatte 56 nicht ausschließlich zwischen dem hier in Extrusionsrichtung 6 ersten Kalibrierwerkzeug 10 und dem unmittelbar nachgeordneten weiteren Kalibrierwerkzeug 11 beschränkt ist, sondern auch zwischen weiteren unmittelbar benachbarten Kalibrierwerkzeugen 11, 12 usw. angeordnet sein kann, wie dies in strichlierten Linien in der Fig. 5 angedeutet ist. Wesentlich dabei ist nur, dass die Tragplatte 55 bezüglich der nachfolgenden Aufnahmeplatte 56 räumlich zu dieser verlagerbar ausgebildet ist. Die Anordnung der Stützelemente ist dahingehend entsprechend anzupassen.

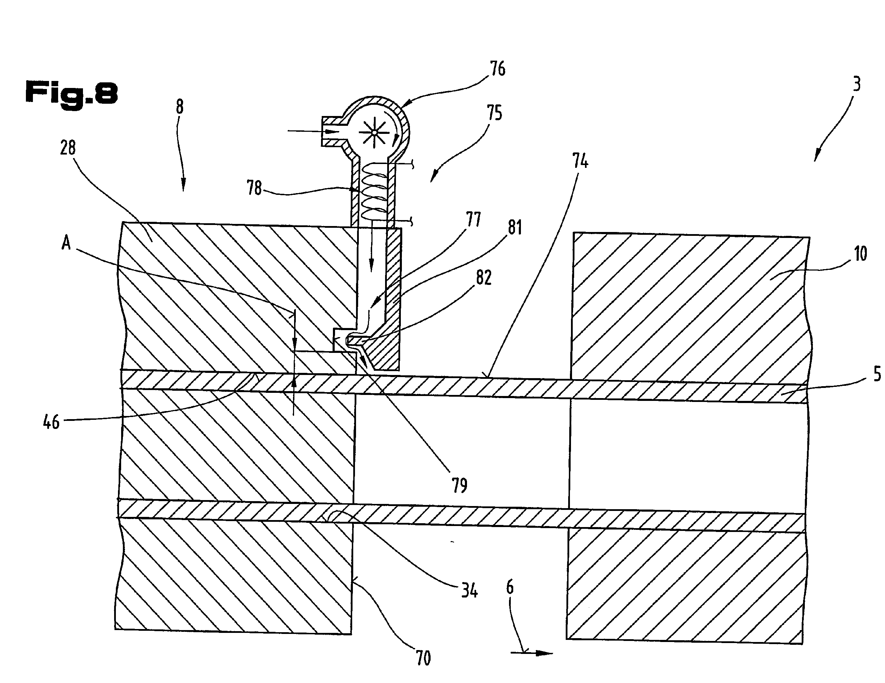

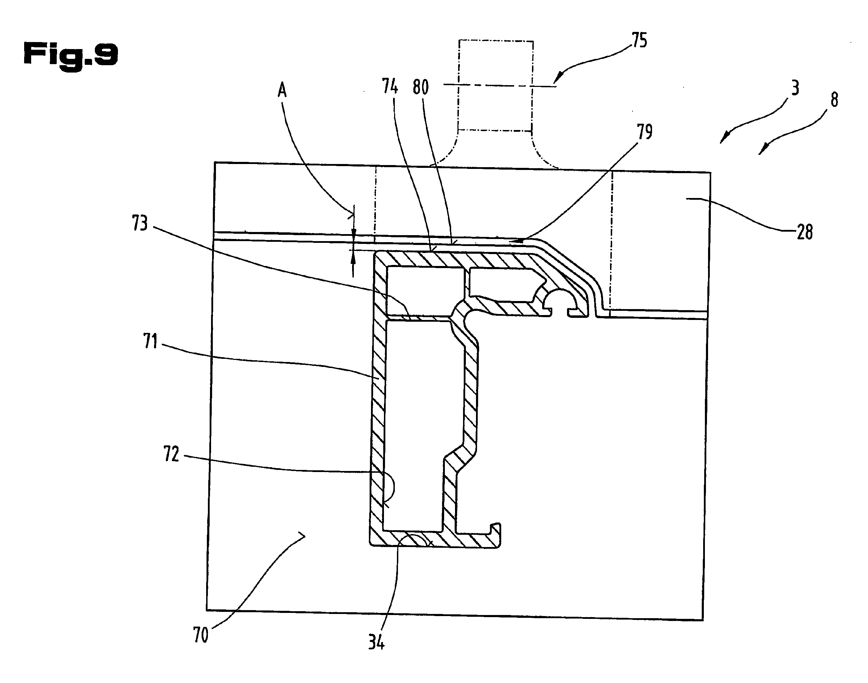

In den Fig. 8 und 9 ist eine weitere mögliche und gegebenenfalls für sich eigenständige Ausbildung der Formgebungseinrichtung 3 gezeigt, wobei wiederum für gleiche Teile gleiche Bezugszeichen bzw. Bauteilbezeichnungen, wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

Bei diesem hier gezeigten Teilbereich der Formgebungseinrichtung 3 handelt es sich um das Extrusionswerkzeug 8, insbesondere die Extrusionsdüse 28, sowie das in Extrusionsrichtung 6 nachfolgende erste Kalibrierwerkzeug 10. Der herzustellende Gegenstand 5 ist ebenfalls vereinfacht dargestellt und tritt aus der Extrusionsdüse 28 im Bereich einer Stirnseite 70 aus dem Extrusionswerkzeug 8 aus. Der Kanal 34 innerhalb der Extrusionsdüse 28 ist ebenfalls vereinfacht dargestellt und dient zur Ausformung des Gegenstandes 5, welcher wiederum ein Hohlprofil mit einem umlaufenden Mantel 71 sowie gegebenenfalls in einer Profilkammer 72 angeordnete Stege 73 umfasst. Dabei sei erwähnt, dass der Profilquerschnitt des Gegenstandes 5 nur beispielhaft für eine Vielzahl von möglichen Querschnittsformen gewählt und gezeigt worden ist.

Dem aus der Extrusionsdüse 28 austretenden Gegenstand 5 ist im Bereich der Stirnseite 70 zumindest bereichsweise im Abschnitt seiner äußeren Oberfläche 74 eine Behandlungsvorrichtung 75 für diese zugeordnet.

Diese Behandlungsvorrichtung 75 dient dazu, einem vorbestimmbaren Abschnitt der äußeren Oberfläche 74 des Gegenstandes 5 eine vorbestimmbare Wärmemenge zuzuführen und dabei die Oberfläche 74 zu behandeln. Dies kann, je nach Wahl der Temperatur, zu einer Erhöhung des Glangrades, und damit verbunden einer Verringerung der Oberflächenrauhigkeit führen. Als Behandlungsmedium dient bevorzugt ein gasförmiges Medium, insbesondere Luft, welche mittels eines Gebläses, beispielsweise aus der Umgebungsluft entnommen und über einen Strömungskanal 77 der Oberfläche 74 zugeleitet wird. Dabei ist innerhalb des Strömungskanals 77 ein schematisch vereinfacht dargestelltes Temperierelement 78 angeordnet, welches das durch den Strömungskanal 77 hindurchströmende Medium im Anschluss an das Gebläse 76 auf einen voreinstellbaren Wert temperiert. Es wäre aber auch möglich, bereits vorgewärmtes Medium dem Strömungskanal 77 zuzuleiten und die exakte Temperierung durch das Temperierelement 78 durchzuführen.

Unabhängig davon wäre es aber auch möglich, das gasförmige Medium nicht, wie hier dargestellt, der Umgebungsluft zu entnehmen, sondern aus einem eigenen nicht näher dargestellten Vorratsbehälter zu entnehmen, und so über den Strömungskanal 77 der Oberfläche 74 für die Behandlung des Gegenstandes 5 zuzuleiten. Steht dabei das gasförmige Medium unter Druck, kann das Gebläse 76 entfallen und es ist eine entsprechende Druck- und/oder Mengenregelung für das gasförmige Medium vorzusehen.

Der Strömungskanal 77 mündet in einem vertieft in der Stirnseite 70 angeordneten Umlenkkanal 79, welcher zumindest im Bereich der zu behandelnden Oberfläche 74 in der Extrusionsdüse 28 vorgesehen ist. Bevorzugt erstreckt sich dieser Umlenkkanal 79 jedoch beidseitig - abhängig von der Profilgeometrie - bis hin an den seitlichen Randbereich der Extrusionsdüse 28. Dieser Umlenkkanal 79 ist in dem zu behandelnden Abschnitt der Oberfläche 74 unmittelbar benachbart zur Kanalwand 46 des Kanals 34 verlaufend angeordnet, wobei ein Abstand A zwischen der den Kanal 34 begrenzenden Kanalwand 46 und einer dazu bevorzugt parallel verlaufenden Kanalseitenwand 80 relativ gering gewählt, um so eine gerichtete gleichmäßige Strömung des Temperiermediums nach dem Durchtritt durch den Umlenkkanal 79 auf die zu behandelnde Oberfläche 74 des Gegenstandes 5 zu erzielen. Dabei beträgt der Abstand A zwischen 0,5 mm und 3,0 mm. Der Querschnitt des Umlenkkanals 79 in senkrechter Richtung zur Extrusionsrichtung 6 gesehen, kann unterschiedlichst ausgebildet sein und hängt von der durchströmenden Menge des Behandlungsmediums, der Umlenkung des Behandlungsmediums sowie der für die Behandlung vorgesehen Temperatur ab. Dabei soll das Behandlungsmedium im Ausströmbereich aus dem Umlenkkanal 79 eine Temperatur zwischen 180 °C und 300 °C, bevorzugt zwischen 190 °C und 250 °C aufweisen.

Bei diesem hier gezeigten Ausführungsbeispiel ist der Strömungskanal 77 im Bereich der Stirnseite 70 durch ein dazu bevorzugt parallel ausgerichtetes Leitelement 81 begrenzt, welches distanziert zur Stirnseite 70 angeordnet ist und in jenem Bereich, in welchem keine Behandlung vorgesehen ist bzw. ein Austritt des Behandlungsmediums verhindert werden soll, anliegend an der Stirnseite 70 ausgebildet. Dadurch bildet sich zwischen der Stirnseite 70 und dem Leitelement 81 ein Teil des Strömungskanals 77 aus. Dieser mündet, wie bereits zuvor beschrieben, in den Umlenkkanal 79, wobei hier das Leitelement 81 einen, in Richtung auf den Umlenkkanal 79 vorragend ausgebildeten Ansatz 82 aufweist. Dieser Ansatz 82 ragt ausgehend vom Leitelement 81 hin in Richtung auf die Stirnseite 70 der Extrusionsdüse 28 vor und kann bei Bedarf auch in den Umlenkkanal 79 zumindest bereichsweise hineinragen. Im Übergangsbereich zwischen dem Leitelement 81 und dem Ansatz 82 können zur Verbesserung der Strömung winkelig zur Strömungsrichtung ausgerichtete Leitflächen angeordnet bzw. vorgesehen sein, um so die Umlenkung des Behandlungsmediums hin in den Umlenkkanal 79 und wiederum aus diesem zu begünstigen.

Der Umlenkkanal 79 im Zusammenwirken mit dem Ansatz 82 des Leitelements 81 bildet eine Umlenkvorrichtung für den Volumenstrom des Behandlungsmediums. Das Behandlungsmedium wird im Bereich des Strömungskanals 77 parallel zur Stirnseite 70 bis hin zum Ansatz 82 bzw. Umlenkkanal 79 geführt, wobei hier zuerst eine Umlenkung der Strömungsbewegung entgegen der Extrusionsrichtung 6 und anschließend wiederum hin in Extrusionsrichtung 6 erfolgt Durch diese Umlenkung wird eine Strömungsbewegung des Behandlungsmediums im Austrittsbereich aus dem Umlenkanal 79 unter einem vorbestimmbaren Winkel zur Extrusionsrichtung 6 erzielt. Wesentlich dabei ist, dass das Behandlungsmedium nach dem Durchtritt durch den Umlenkkanal 79 vom Extrusionswerkzeug 8 weg in Extrusionsrichtung 6 hin zum nachgeordneten Kalibrierwerkzeug 10 geleitet wird, wodurch eine nachteilige Temperaturbeeinflussung der Extrusionsdüse 28 vermieden wird. Bei ausreichender Temperierung des Behandlungsmediums durch das Temperierelement 78 ist eine ungewollte Abkühlung der Extrusionsdüse 28 in dem Bereich der Behandlungsvorrichtung 75 vermieden, wodurch hier keine zusätzlichen Heizelemente vorzusehen sind.

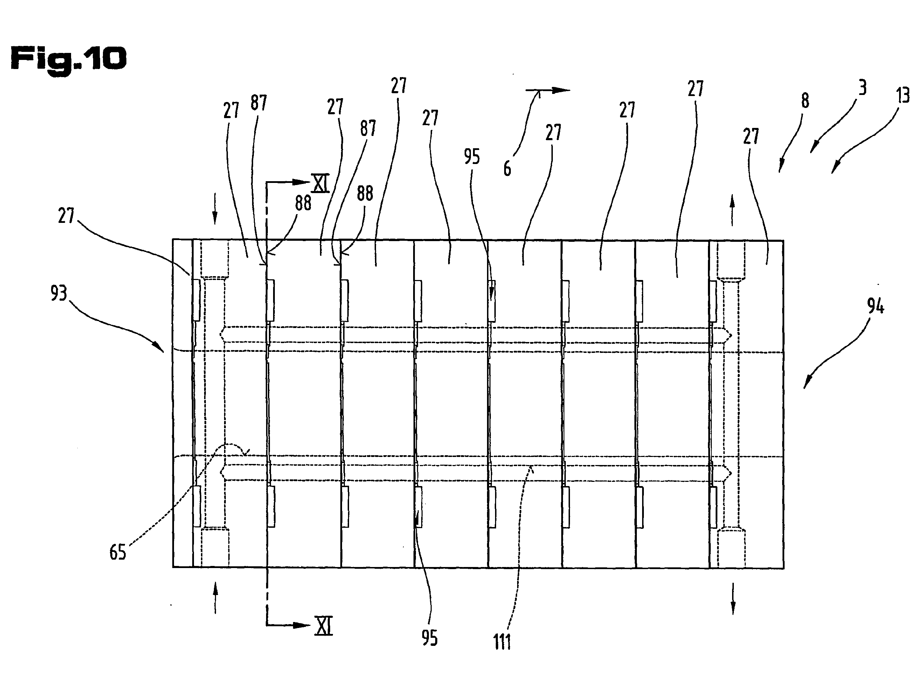

In den Fig. 10 bis 12 ist eine mögliche und gegebenenfalls für sich eigenständige Ausbildung eines der Kalibrierwerkzeuge - im vorliegenden Fall des Kalibrierwerkzeuges 13 - vereinfacht dargestellt, wobei wiederum für gleiche Teile gleiche Bezugszeichen bzw. Bauteilbezeichnungen, wie in den vorangegangenen Fig. 1 bis 9 verwendet werden. Um unnötige Wiederholungen zu vermeiden, wird auf die detaillierte Beschreibung in den vorangegangenen Fig. 1 bis 9 hingewiesen bzw. Bezug genommen.

Das Kalibrierwerkzeug 13 ist nur beispielhaft für die Anordnung gemäß der Darstellung in der Fig. 1 gewählt, wobei aber auch die dort weiters gezeigten Kalibrierwerkzeuge 10 bis 12 gleichartig ausgebildet sein können, wie das hier gezeigte und beschriebene Kalibrierwerk zeug 13. Die einzelnen, hintereinander angeordneten Kaliberplatten 27 bilden als zusammengesetzte Einheit eines der Kalibrierwerkzeuge aus und begrenzen für den hindurchzuführenden Gegenstand 5 zumindest eine Kalibrieröffnung 65. Diese Kalibrieröffnung 65 weist mehrere, schematisch vereinfacht dargestellte Formflächen 83 bis 86 zum Anlegen zumindest eines hindurchzuführenden Gegenstandes 5 auf.

Weiters weisen die einzelnen Kalibierplatten 27 normal zu den Formflächen 83 bis 86 sowie in Extrusionsrichtung 6 voneinander distanzierte, parallel zueinander verlaufend ausgerichtete Stirnflächen 87, 88 sowie zwischen diesen sich erstreckende Seitenflächen 89 bis 92 auf. Bei diesem hier gezeigten Ausführungsbeispiel sind die beiden aneinander gegenüberliegenden Seitenflächen 89, 90 beidseits der Kalibrieröffnung 65 und die weiteren Seitenflächen 91, 92 an der Ober- bzw. Unterseite der Kalibierplatten 27 angeordnet. Infolge der gewählten Darstellung für die Extrusionsrichtung 6 ist bei diesem Ausführungsbeispiel die erste Stirnfläche 87 einem Eintrittsbereich 93 und die zweite bzw. weitere Stirnfläche 88 einem Austrittsbereich 94 für den hindurchzuführenden Gegenstandes 5 zugewandt.

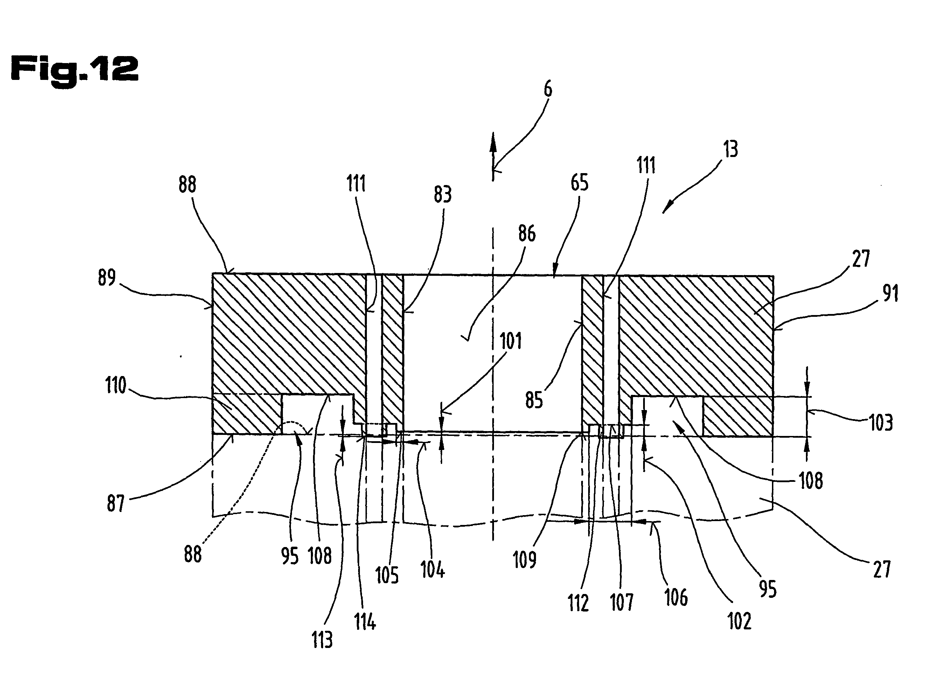

Wie insbesondere aus den Darstellungen der Fig. 10 und 12 zu ersehen ist, ist zwischen zumindest zwei unmittelbar benachbarten Kalibierplatten 27 bzw. den einander zugewandten Stirnflächen 87, 88 zumindest ein Hohlraum 95 ausgebildet, welcher ausgehend von der Kalibrieröffnung 65 bzw. der diese umgrenzenden Formflächen 83 bis 86 hin zu einem Kanal 96, 97 erstreckt und in diese mündet. Dabei wäre es aber auch möglich nur einen der Kanäle 96, 97 dem Hohlraum 95 zuzuordnen, wobei die Anzahl der Kanäle je nach aufzubauendem Unterdruck im Hohlraum 95 frei gewählt werden kann. Die beiden Kanäle 96, 97 sind bevorzugt vertieft in einer Deck- bzw. Grundplatte 98, 99 angeordnet, wobei schematisch angedeutet ist, dass zumindest einer der Kanäle 96, 97 über einen Anschluss mit einer Ansaugleitung 100 mit einer hier nicht näher dargestellten Absaugvorrichtung, insbesondere einem Vakuumerzeuger, verbunden ist.

Die einzelnen hintereinander, unmittelbar nacheinander angeordneten Kaliberplatten 27 des hier vereinfacht dargestellten Kalibrierwerkzeuges 13 sind im Bereich ihrer Stirnflächen 87, 88 so ausgebildet, dass diese an den einander zugewendeten Stirnflächen 87, 88 aneinander anliegen und so eine nahezu vollständige Abdichtung durch die plane Anlage der Flächen erzielbar ist. Gleiches gilt auch für die Anlageflächen der Deck- bzw. Grundplatte 98, 99 im Anlagebereich an den Seitenflächen 91, 92, wodurch auch hier eine ausreichende Dichtwirkung erzielbar ist und aufgrund der mit dem Kanal 96, 97 in Verbindung stehenden Absaugvorrichtung ein gegenüber dem äußeren Umgebungsdruck reduzierter Druck über den gesamten Hohlraum 95 aufbaubar ist.

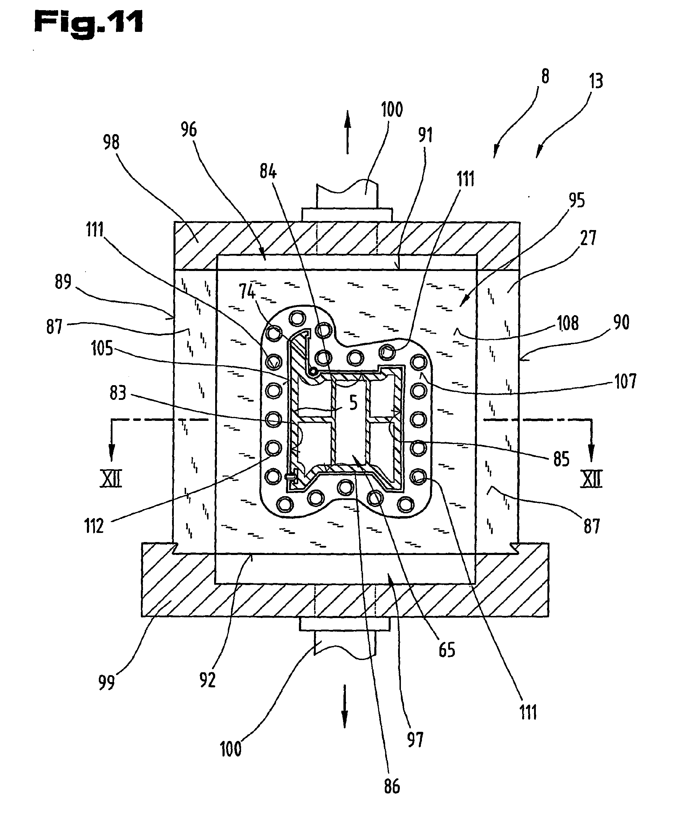

Wie nun aus einer Zusammenschau der Fig. 11 und 12 zu ersehen ist, ist der Hohlraum 95 bzw. sind die Hohlräume über einen überwiegenden Teil des Umfangs der Kalibrieröffnung 65 in Richtung der von den Formflächen 83 bis 86 umgrenzten Kalibrieröffnung 65 geöffnet. Damit ist es nunmehr möglich, den hindurchzuführenden Gegenstand 5 im Bereich seiner äußeren Oberflächen, also jenen, welche den Formflächen 83 bis 86 zugewandt sind, nahezu vollständig mit einem gegenüber dem äußeren Luftdruck abgesenkten Luftdruck zu beaufschlagen, wodurch in den Hohlkammern des Gegenstandes 5 der Umgebungsdruck verstärkt zur Wirkung kommt und eine Druckdifferenz zwischen den Hohlkammern des Gegenstandes 5 und der äußern Oberfläche des Gegenstandes 5 aufbaubar ist. Durch diese zumindest bereichsweise über den Umfang der Kalibrieröffnung 65 aufgebaute Druckdifferenz erfolgt ein Ansaugen des noch zähplastischen Gegenstandes 5 an die Formflächen 83 bis 86, wodurch es einerseits zu einer Anlage der äußeren Oberfläche des Gegenstandes 5 an den Formflächen 83 bis 86 kommt und andererseits, bedingt durch die zusätzliche - später noch detaillierter beschriebene - Abkühlung dem Gegenstand 6 die während dem Extrusionsprozess zugeführe Wärmemenge wiederum entzogen und so die gewünschte Querschnittsform des Gegenstandes 5 festgelegt wird.

Dabei weist bei diesem Ausführungsbeispiel der Hohlraum 95, ausgehend von den Formflächen 83 bis 86, in paralleler Richtung zu den Formflächen 83 bis 86 gemessen, eine unterschiedliche Weite 101 bis 103 auf, wobei diese mit zunehmendem Abstand von der Formfläche 83 bis 86 in Extrusionsrichtung 6 zunimmt.

Wie nun am besten aus der Fig. 12 zu ersehen ist, weist der Hohlraum 95, zwischen den hier dargestellten Kaliberplatten 27 im Bereich der einander zugewandten Stirnflächen 87, 88 über eine erste Distanz 104 von 0,3 mm bis 5,0 mm, bevorzugt von 0,5 mm bis 2,0 mm, ausgehend von einer der Formflächen 83 bis 86 in senkrechter Richtung zu dieser die Weite 101, zwischen 0,2 mm und 3,0 mm, bevorzugt zwischen 0,4 mm und 1,0 mm, auf, wobei in diesem Bereich an der Kalibierplatte 27 erste Teilstirnflächen 105 ausgebildet sind. Dabei ist der Hohlraum 95 über die Länge der ersten Teilstirnfläche 105, also in Richtung der ersten Distanz 104, spaltförmig ausgebildet, wobei die erste Weite 101 je nach Profilform des zu kalibrierenden Gegenstandes 5 bzw. aufgrund der aufzubauenden Druckdifferenz zwischen dem Hohlraum 95 und den Hohlkammern des Gegenstandes 5 in den angegebenen Dimensionen gewählt werden kann.

Im Anschluss an die erste Distanz 104 weist der Hohlraum 95, ausgehend von dieser ersten Distanz 104, über eine weitere Distanz 106 von 6,0 mm bis 20 mm ebenfalls in senkrechter Richtung zu den Formflächen 83 bis 86 die Weite 102 zwischen 1,0 mm und 2,5 mm auf, wobei wiederum an der Kaliberplatte 27 zweite Teilstirnflächen 107 ausgebildet sind. Anschließend an die zweite Distanz 106 weist der Hohlraum 95 die Weite 103, zwischen 2,5 mm und 10,0 mm auf, wobei an der Kalibierplatte 27 dritte Teilstirnflächen 108 ausgebildet sind. Die angegebenen Weiten 101 bis 103 erstrecken sich jeweils ausgehend von der Stirnfläche 88 der vorgeordneten Kalibierplatte 27 bis hin zu den einzelnen Teilstirnflächen 105, 107 sowie 108.

Bei diesem hier gezeigten Ausführungsbeispiel sind die Teilstirnflächen 105, 107 sowie 108 parallel zu den Stirnflächen 87, 88 ausgerichtet, jedoch von diesen um die Weiten 101 bis 103 beabstandet angeordnet. Durch die unterschiedlichen Weiten 101 bis 103 wird das Volumen des Hohlraums 95 mit zunehmenden Abstand bzw. Distanz von der Kalibrieröffnung 65 vergrößert, wodurch Strömungsverluste beim Aufbau des Unterdrucks im Hohlraum 95 auch über längere Strömungswege bis hin in den Bereich der ersten Teilstirnflächen 105 ausgeglichen werden können und so über den Umfang der Kalibrieröffnung 65 nahezu ein gleichmä-Biger Unterdruck aufbaubar ist. Dadurch ist es möglich, über nahezu den gesamten Umfang des abzukühlenden Gegenstandes 5 eine gleichmäßige Druckdifferenz zwischen der Außenseite und der Hohlkammer des Gegenstandes 5 aufzubauen.

Um beispielsweise unterschiedliche Wandstärken des Gegenstandes 5 einem Unterdruck auszusetzen und dabei beabsichtigte Druckunterschiede über den Umfang aufbauen zu können, ist es aber auch möglich, die Weite 101 zwischen der ersten Teilstirnfläche 105 und der dieser zugeordneten Stirnfläche 88 der unmittelbar vorgeordneten Kaliberplatte 27 über den Umfang der Kalibrieröffnung 65 unterschiedlich auszubilden. Dabei ist zu beachten, dass der Unterdruck im Bereich des Hohlraums 95 derart gewählt wird, dass die aufgebaute Druckdifferenz zwischen den Hohlkammern des Gegenstandes 5 und dem Hohlraum 95 an den Abkühlungsgrad des Gegenstandes 5 angepasst ist. Weist der abzukühlenden Gegenstand 5 noch eine relative Weichheit auf, d.h. er ist noch zählplastisch, ist die Druckdifferenz geringer zu wählen, als in jenem Bereich, in dem der Gegenstand 5 bereits weiter abgekühlt ist und der den Gegenstand 5 bildende Außenmantel bereits eine gewisse Eigensteifigkeit aufweist. Würde die Druckdifferenz zu hoch gewählt werden, kann es zu einem Formschluss im Bereich zwischen der ersten Teilstirnfläche 105 und der dieser zugewandten weiteren Stirnfläche 88 der unmittelbar vorgeordneten Kalibierplatte 27 kommen, und es würde dies zu einer Beschädigung des abzukühlenden Gegenstandes 5 führen. Dabei würde die äußere Oberfläche des Gegenstandes 5 zumindest bereichsweise in den Spalt zwischen der ersten Teilstirnfläche 105 hineingesaugt, wodurch zumindest bereichsweise ein Formschluss über den Umfang des Gegenstandes 5 auftritt. Um den Einlauf des abzukühlenden Gegenstandes 5 in die einzelnen Kaliberplatten 27 zu verbessern ist es vorteilhaft, wenn im Übergangsbereich zwischen den Formflächen 83 bis 86 und den unmittelbar benachbarten, ersten Teilstirnflächen 105 ein Radius 109 angeordnet ist, welche eine Größe zwischen 0,1 mm und 1,0 mm aufweisen kann. Es wäre aber auch möglich, jedes andere größere Ausmaße für den Radius 109 zu wählen.

Der Hohlraum 95 ist im Bereich der beiden gegenüberliegenden Seitenfläche 89, 90, welche bei diesem Ausführungsbeispiel vertikal ausgerichtet sind, auf der von der Kalibrieröffnung 65 abgewandten Seite durch zumindest zwei leistenförmig ausgebildete Bauteile 110 begrenzt, wie dies im linken Bereich der Fig. 12 schematisch durch eine strichpunktierte Linie angedeutet ist. Es wäre aber auch möglich, die leistenförmigen Bauteil 110 einstückig mit den Kaliberplatten 27 zu verbinden, wodurch die einzelnen Kaliberplatten 27 einstückig ausgebildet sind. Dies ist dann der Fall, wenn der Hohlraum 95 durch eine eingebrachte Vertiefung in einer der Stirnflächen 87, 88 der Kaliberplatten 27 gebildet ist. Diese Vertiefung kann beispielsweise durch Ausfräsen hergestellt werden, wobei die Tiefe der Ausfräsung der entsprechenden Weite 101 bis 103 zur Bildung des Hohlraums 95 entspricht. Bei diesem hier gezeigten Ausführungsbeispiel, insbesondere der Darstellung in der Fig. 11, ist gezeigt, dass der Hohlraum 95 im Bereich der weiteren, einander gegenüberliegenden Seitenflächen 91, 92 in zumindest einen der Kanäle 96, 97 mündet.

Bei diesem hier gezeigten Ausführungsbeispiel sind die einzelnen Teilstirnflächen 105, 107 sowie 108 dem Eintrittsbereich 93 des hindurchzuführenden Gegenstandes 5 durch die Kalibriervorrichtung 8 zugewandt. Es wäre aber auch möglich, die einzelnen Teilstirnflächen 105, 107 sowie 108 im Bereich der davon abgewandten, weiteren Stirnfläche 88 anzuordnen- also dem Austrittsbereich 94 - zuzuwenden.

Durch die Anordnung des Hohlraums 95 über nahezu den gesamten Umfang des Gegenstandes 5 ist es möglich, der Kalibrieröffnung 65 in den einzelnen Kaliberplatten 27 unmittelbar benachbart zu dieser, mehrer Durchströmöffnungen 111 für ein hier nicht näher dargestelltes Temperiermedium zuzuordnen, wobei diese Durchströmöffnungen 111 über den Umfang der Kalibrieröffnung 65 nahezu gleichmäßig verteilt angeordnet sind, wodurch ein gleichmäßiger Wärmeentzug über die gesamte äußere Oberfläche des an den Formflächen 83 bis 86 anliegenden und entlanggleitenden Gegenstandes 5 erzielbar ist.

Die einzelnen Durchströmöffnungen 111 durchsetzen die Kaliberplatten 27 in paralleler Ausrichtung zu den Formflächen 83 bis 86 und sind weiters normal zu den Stirnflächen 87, 88 ausgerichtet. Zur Erzielung gleichartig ausgebildeter Kaliberplatten 27 ist es vorteilhaft, wenn in den unmittelbar benachbarten Kaliberplatten 27 die Durchströmöffnungen 111 jeweils fluchtend zueinander ausgerichtet sind und diese die Kaliberplatten 27 im Bereich der zweiten Teilstirnfläche 107 durchsetzen. Durch diese Anordnung ist es möglich, dass das durch die Durchströmöffnung 111 hindurchgeführte Temperiermedium, insbesondere ein Kühlmedium, nahe den Formflächen 83 bis 86 hindurchgeführt werden kann, um so einen effizienten Wärmeentzug zu erzielen.

Durch die Distanzierung der zweiten Teilstirnflächen 107 von der dieser zugewandten, weiteren Stirnfläche 88 ist ein abgedichteter Übergang der Durchströmöffnungen 111 zwischen den unmittelbar hintereinander angeordneten Kalibierplatten 27 auszubilden. Bei zueinander fluchtenden bzw. hintereinander angeordneten Durchströmöffnungen 111 in den einzelnen Kaliberplatten 27 ist im Bereich der zweiten Teilstirnfläche 107 ein in Richtung auf die hier vorgeordnete Stirnfläche 88 vorragender Ansatz 112 an der Kaliberplatte 27 ausgebildet, welcher bevorzugt einstückig aus der Kaliberplatte 27 gebildet ist. Dies kann beispielsweise durch entsprechenden Abtrag des Werkstoffs an der Stirnfläche 87 erfolgen, wobei jeweils im Zentrum des Ansatzes 112 die Durchströmöffnung 111 ausgebildet ist. Die Ansätze 112 sind zentrisch zu den Durchströmöffnung 111 angeordnet und überragen die Stirnfläche 87 um ein minimales Ausmaß 113, wodurch der Ansatz 112 einen metallischen Dichtring mit der vorgeordneten Stirnfläche 88 im einander anliegenden Zustand ausbildet. Dieses Ausmaß 113 kann zwischen 0,005 mm und 0,1 mm, bevorzugt zwischen 0,01 mm und 0,03 mm betragen. Der vorragende Ansatz 112 bildet somit an seiner Stirnseite eine Dichtfläche 114 aus, welche bei der hintereinander Anordnung der Kaliberplatten 27 zu einer durchgehenden Abdichtung der Durchströmöffnung 11 führt. Damit kann, ausgehend vom Eintrittsbereich 93 hin zum Austrittsbereich 94, das Kühlmedium durch die Durchströmöffnung 111 hindurchgeführt werden. Es wäre aber auch eine dazu entgegengesetzte Strömungsrichtung möglich. Wesentlich dabei ist, dass die unmittelbar hintereinander angeordneten Durchströmöffnungen 111 im jeweiligen Übertrittsbereich zwischen den einzelnen Kaliberplatten 27 im Bereich der Dichtflächen 114 sowie gegebenenfalls der Stirnflächen 87 eine flüssigkeitsdichte Abdichtung und somit ein Austritt des Kühlmediums gesichert verhindert ist. Damit ist gewährleistet, dass keine zusätzlichen Dichtmittel bzw. Vorrichtungen vorgesehen werden müssen, um die hintereinander angeordneten Durchströmöffnungen 111 dichtend miteinander für die Hindurchführung des Kühlmediums zu verbinden.

Aufgrund des zuvor beschriebenen geringen Überstandes des Ansatzes 112 über die Stirnfläche 87 - welche hier zur besseren Veranschaulichung übertrieben dargestellt worden ist - kann durch elastische bzw. plastische Verformung der aneinander anliegenden Kalibierplatten 27 auch zusätzlich noch im Bereich des Hohlraums 95 eine, wenn auch nicht ganz vollständige Abdichtung zwischen den einander zugewandten Stirnflächen 87, 88 erzielt werden. Verbleibt hier ein minimaler Spalt zwischen den Stirnflächen 87, 88, wird lediglich ein geringer Anteil an Fremdluft von der äußeren Umgebung hin in den Hohlraum 95 hineingesaugt, wobei dies für den durch die Kalibrieröffnung 65 hindurchzuführenden Gegenstand 5 wesentlich weniger bzw. gar keine negativen Auswirkungen zur Folge hat, als wenn im Bereich der Durchströmöffnungen 111 ein Kühlmedium austreten würde.

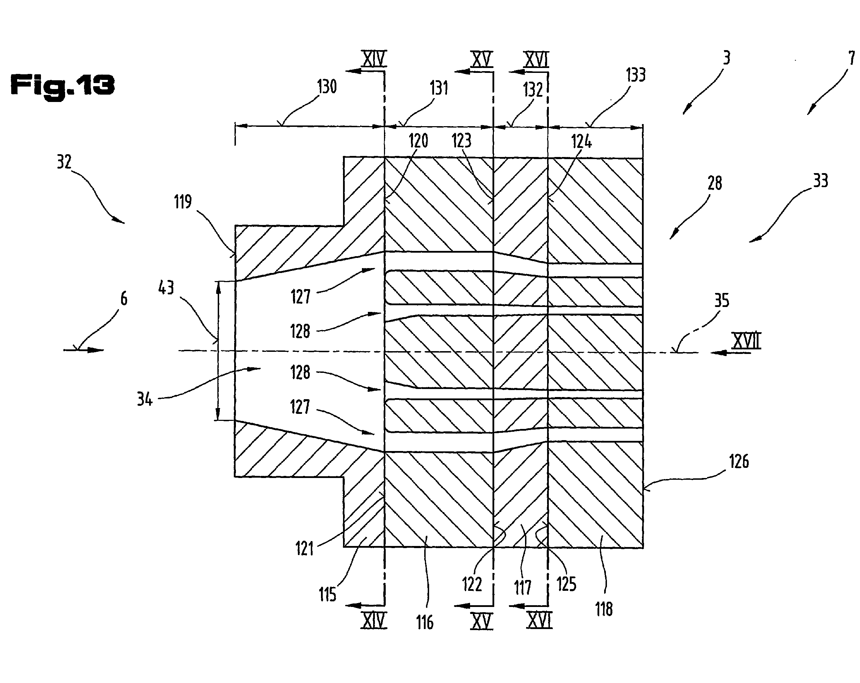

In den Fig. 13 bis 17 ist eine weitere mögliche und gegebenenfalls für sich eigenständige Ausbildung des Extrusionswerkzeuges 7 der Formgebungseinrichtung 3 gezeigt, wobei wiederum für gleiche Teile gleiche Bezugszeichen bzw. Bauteilbezeichnungen, wie in den vorangegangenen Fig. 1 bis 12, verwendet werden. Um unnötige Wiederholungen zu vermeiden, wird auf die detaillierte Beschreibung in den vorangegangenen Fig. 1 bis 12 hingewiesen bzw. Bezug genommen.

Das Extrusionswerkzeug 7, welches auch als Extrusionsdüse 28 bezeichnet werden kann, weist bei diesem hier gezeigten Ausführungsbeispiel - insbesondere die Fig. 13 - in Extrusionsrichtung 6 mehrere hintereinander angeordnete und aneinander anliegende Düsenplatten 115 bis 118 auf. Dabei sei erwähnt, dass die hier gezeigte Anzahl der Düsenplatten 115 bis 118 nur beispielhaft gewählt worden ist, wobei die Anzahl beispielsweise zwischen drei und sieben Düsenplatten liegen kann.

Die in Extrusionsrichtung 6 erste Düsenplatte 115 bildet für den aus dem hier nicht näher dargestellten Extruder 2 austretenden Schmelzestrang den Eintrittsbereich 32 aus und umgrenzt den Kanal 34. Im Eintrittsbereich 32 weist der Kanal 34 den Kanalquerschnitt 43 auf, welcher in Extrusionsrichtung 6 gesehen vom Zentrum aus erweiternd ausgebildet ist.

Die Düsenplatte 115 weist jeweils senkrechten bzw. normal zur Längsachse 35 ausgerichtete und in Extrusionsrichtung 6 distanzierte Stirnflächen 119, 120 auf, welche die Düsenplatte 115 und somit auch den Kanal 34 in Extrusionsrichtung 6 gesehen begrenzen. Die unmittelbar daran nachfolgende bzw. anliegende Düsenplatte 116 weist ebenfalls senkrecht zur Längsachse 35 ausgerichtete weitere Stirnflächen 121, 122 auf, welche somit die Düsenplatte 116 in Richtung der Längsachse 35 gesehen begrenzen. Auch die weiteren Düsenplatten 117, 118 weisen wiederum senkrecht zur Längsachse 35 ausgerichtete Stirnflächen 123 bis 126 auf. Dabei ist die Stirnfläche 126 dem Austrittsbereich 33 für die durch die Extrusionsdüse 28 hindurchtretende Kunststoffschmelze zugewandt und bildet für diese eine so genannte Düsenlippe aus. Dabei sei erwähnt, dass im Bereich der Stirnfläche 126 der Düsenplatte 118 der herzustellende Gegenstand 5 in seiner groben Querschnittsform bereits soweit ausgeformt ist, dass in den daran nachfolgenden Anlagenteilen, wie beispielsweise der hier nicht näher dargestellten Kalibriervorrichtung 8 mit den Kalibrierwerkzeugen 9 bis 13 sowie gegebenenfalls der Kühlkammern 14 bis 16, die endgültige Festlegung und Ausformung bzw. Verfestigung des Gegenstandes 5 erfolgt.

Im Bereich der unmittelbar an die erste Düsenplatte 115 anschließenden, weiteren Düsenplatte 116 ist vereinfacht dargestellt, dass der in der Düsenplatte 115 angeordnete, gemeinsame Kanal 34 in mehrere Teilkanäle 127, 128 unterteilt bzw. aufgeteilt ist. In den daran nachfolgenden, weiteren Düsenplatten 117, 118 erfolgt eine Reduzierung der äußeren Abmessungen der Teilkanäle 127, 128, wobei hier ein Zusammenführen der einzelnen, voneinander getrennten Teilkanäle 127, 128 hin zur Profilgeometrie des herzustellenden Gegenstandes 5 erfolgt.

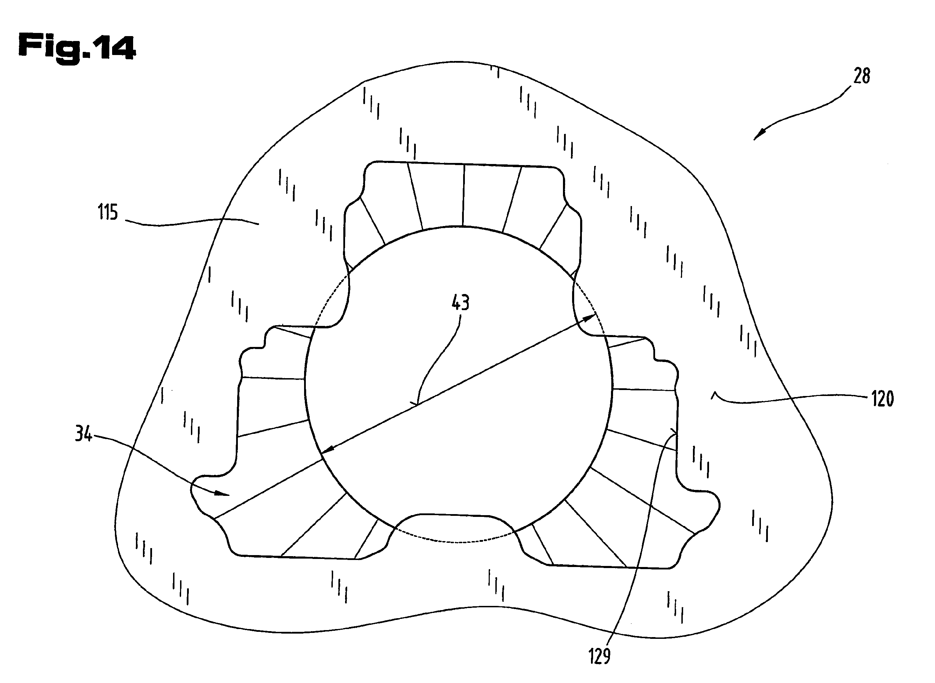

In den Fig. 14 bis 17 ist anhand eines möglichen Ausführungsbeispiels die so genannte erweiterte Kanalführung innerhalb der Extrusionsdüse 28 dargestellt, welche ausgehend vom ersten Kanalquerschnitt 43, welcher bevorzugt kreisförmig ausgebildet und vom Mundstück bzw. Anschlussstück des Extruders abhängig ist, in seinem Querschnitt vergrößert bzw. auf geweitet wird. Daran anschließend wird der gemeinsame in seinem Querschnitt erweiterte Kanal 34 und somit auch die durch diesen hindurchtretende Kunststoffschmelze auf mehrere, einzelne Teilkanäle 127, 28 aufgeteilt und in Richtung des Austrittsbereichs 33 anschließend die einzelnen Teilkanäle 127, 28 in ihrem Querschnitt verringert, sowie in ihrer relativen Lage zueinander wieder zusammengeführt werden. Die in Extrusionsrichtung erste Düsenplatte 115 weist, wie bereits zuvor kurz beschrieben, im Eintrittsbereich 32 den bevorzugt kreisrunden Kanalquerschnitt 43 auf, welcher im Bereich der weiteren Stirnfläche 120 einen erweiterten und zusammenhängenden Kanalquerschnitt 129 ausbildet. Die gewählte Form des Kanalquerschnitts 129 ist von der Profilgeometrie des herzustellenden Gegenstandes 5 abhängig, wobei hier auf eine gleichmäßige Aufteilung des Schmelzestroms von dem gemeinsamen Kanal 34 hin zu den Teilkanälen 127, 28 bedacht zu nehmen ist.

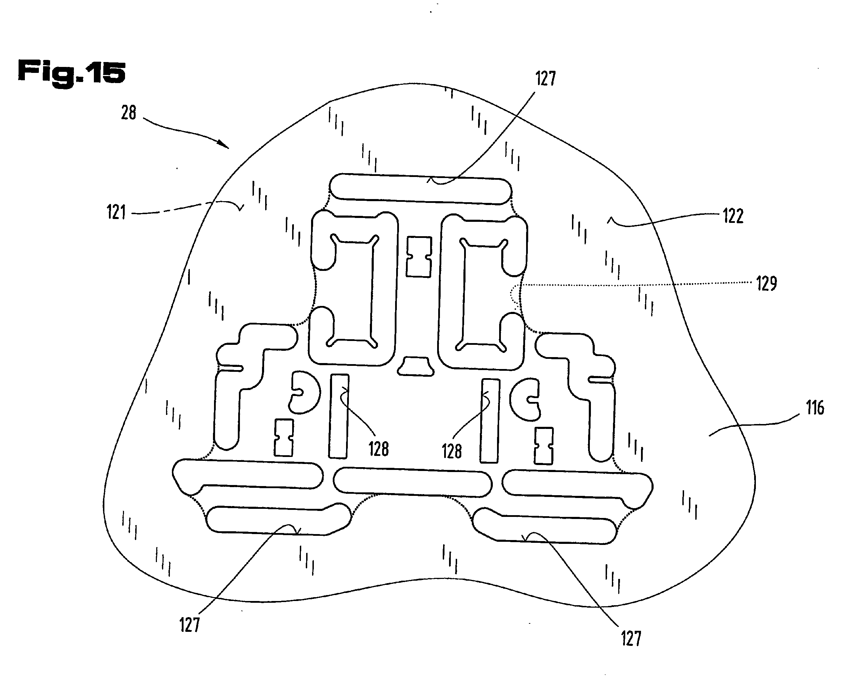

In der Fig. 15 ist vereinfacht die weitere Düsenplatte 116 mit ihrer Stirnfläche 122 und den darin angeordneten Teilkanälen 127, 28 gezeigt, wobei erwähnt sei, dass die hier vereinfacht dargestellten Teilkanäle 127, 128 nur beispielhaft für eine Vielzahl von Möglichkeiten gewählt wurde und von der herzustellenden Profilgeometrie abhängig ist. Dabei durchsetzen die einzelnen Teilkanäle 127, 28 die Düsenplatte 116 parallel zur Längsachse 35 bzw. senkrecht zu den Stirnflächen 121, 122. Weiters ist im Bereich der am Umfang bzw. der Peripherie des herzustellenden Gegenstandes 5 angeordneten Teilkanäle der Kanalquerschnitt 129, welcher im Bereich der Stirnfläche 120 der Düsenplatte 115 angeordnet ist, in strichpunktierten Linien angedeutet. Daraus ist zu ersehen, dass in etwa im Mittelbereich der Extrusionsdüse 28 - hier im Bereich der Düsenplatte 116 - die einzelnen Teilkanäle 127, 128 in ihrer äußeren Umriss- bzw. Querschnittsform Teilbereichen bzw. Teilabschnitten des herzustellenden Gegenstandes 5 nachgebildet ist, wobei jedoch die einzelnen Teilkanäle 127, 128 voneinander getrennt bzw. in senkrechter Richtung zur Extrusionsrichtung 6 voneinander distanziert die Düsenplatte 116 durchsetzen. Weiters weist der Teilkanal 127, 128 in der zweiten Düsenplatte 116 zwischen den beiden voneinander distanzierten Stirnflächen 121, 122 einen gleich bleibenden Kanalquerschnitt auf, wobei der Kanalquerschnitt des Teilkanals 127, 128 in seiner Querschnittsfläche bezüglich der Querschnittsfläche des herzustellenden Teilabschnitts des Gegenstandes 5 größer ausgebildet ist.

Durch die voneinander distanzierte bzw. getrennte Hindurchführung der Teilkanäle 127, 128 ist es möglich, zwischen den einzelnen Teilkanäle 127, 128 verschiedenste, jedoch hier der besseren Übersichtlichkeit halber nicht näher dargestellte Behandlungsvorrichtungen für die durch die Teilkanäle 127, 128 hindurchtretende Kunststoffschmelze anzuordnen. Dabei können diese Behandlungsvorrichtungen zum nachfolgend aufgezählten und miteinander beliebig kombinierbaren Einwirken, wie z.B. der Kühlung, Heizung, Bestrahlung, Schwingungserzeugung, dienen. Dafür können hier ebenfalls nicht näher dargestellte Zu- sowie Ableitungen bzw. weitere Kanäle vorgesehen sein, um die Behandlungsvorrichtungen mit den unterschiedlichsten Betriebsmedien, wie beispielsweise Kühlwasser, elektrischer Energie, Temperiermedium, usw. beaufschlagen zu können.

Einen weiteren Vorteil bietet die voneinander getrennte und erweiterte Kanalführung innerhalb der Düsenplatte 116 noch darin, dass für Korrekturen der Profilgeometrie des Gegenstandes 5 nur einzelne Abschnitte der Teilkanäle 127, 128 nachgearbeitet werden können und nicht ganze Düsenplatten ausgetauscht werden müssen. Die äußere Umhüllende der Teilkanäle 127, 128 in der zweiten Düsenplatte 116 entspricht dabei dem Kanalquerschnitt 129 des gemeinsamen vorgelagerten Kanals 34 in der ersten Düsenplatte 115. Dadurch ist gewährleistet, dass alle Teilkanäle 127, 128 innerhalb der Düsenplatte 116 ausreichend mit fertig aufbereiteter Kunststoffschmelze während des Extrusionsvorganges beschickt werden können.

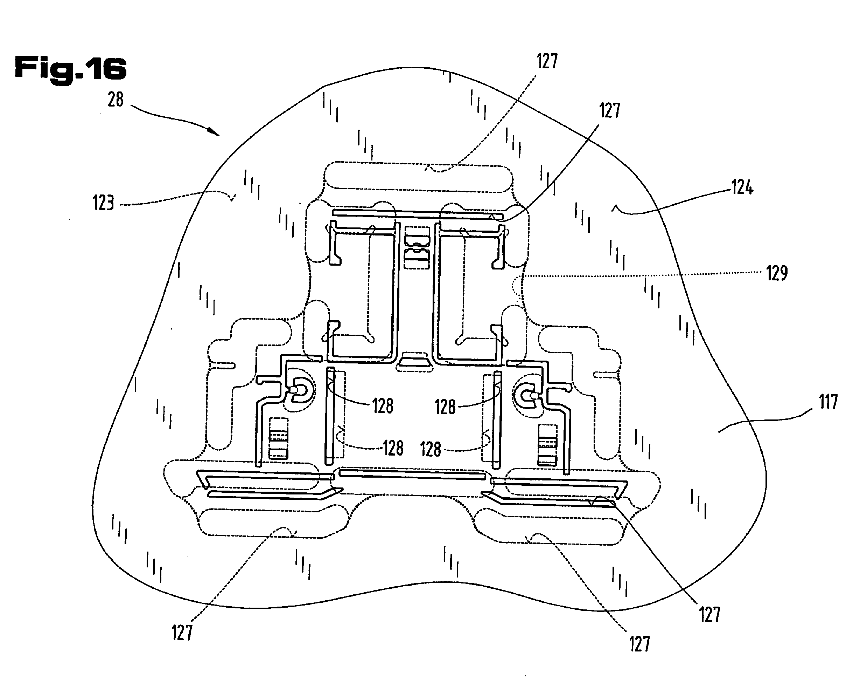

In der Fig. 16 sind die einzelnen Teilkanäle 127, 128 jeweils im Bereich der beiden, in Exhusionsrichtung 6 voneinander distanzierten Stirnflächen 123, 124 der Düsenplatte 117 dargestellt. Dabei wurden die Umrisse der Teilkanäle 127, 128 im Bereich der ersten Stirnfläche 123, welche der unmittelbar vorgeordneten Düsenplatte 116 mit ihrer Stirnfläche 122 zugewendet ist, in strichlierten Linien und die Umrisse der Teilkanäle 127, 128 im Bereich der weiteren Stirnfläche 124 in dünnen Volllinien dargestellt. Auf die Darstellung der Teilkanallinien zwischen den beiden voneinander distanzierten Stirnflächen 123, 124 wurde der besseren Übersichtlichkeit halber verzichtet. So entspricht die Anordnung der Teilkanäle 127, 128 im Bereich der hier ersten Stirnfläche 123 der Düsenplatte 117 jener Anordnung der Teilkanäle 127, 28, wie im Bereich der Stirnfläche 122 der unmittelbar vorgeordneten Düsenplatte 116. So ist in der Fig. 16 die ungefähre Umrissform des herzustellenden Gegenstands 5 aus den in dünnen Volllinien gezeichneten Teilkanälen 127, 128 bereits annähernd zu ersehen, wobei hier deutlich zu entnehmen ist, dass sowohl die einzelnen Teilkanäle 127 zwischen den beiden voneinander distanzierten Stirnflächen 123, 124 in ihrem Kanalquerschnitt abnehmend ausgebildet sind, als auch in ihrer relativen Lage zueinander, näher neben einander verlaufend ausgerichtet sind.

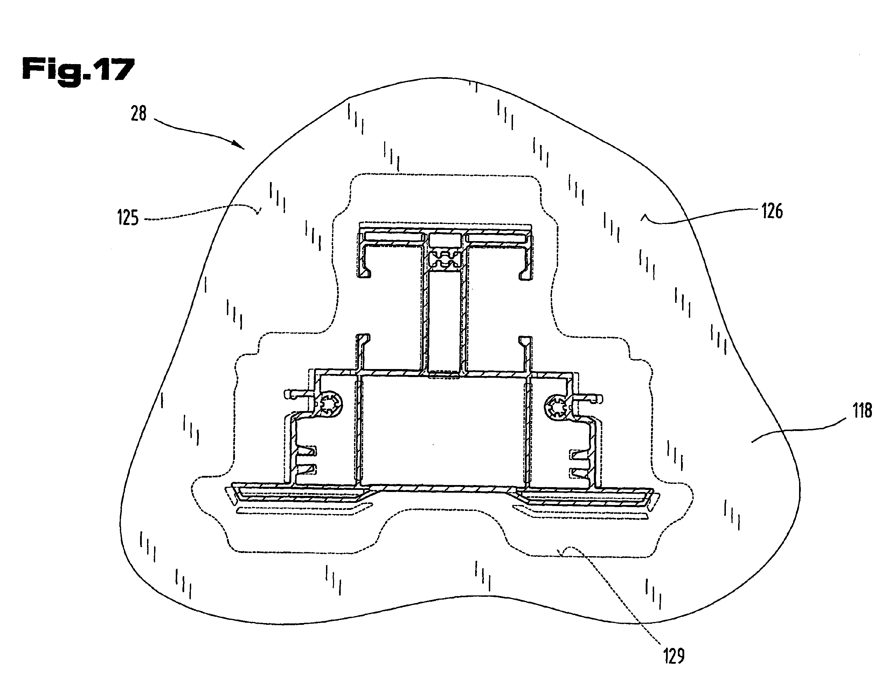

Schließlich ist in der Fig. 17 die endgültige Zusammenführung und das ineinander Münden der einzelnen Teilkanäle 127, 128 zu einem gemeinsamen Profilquerschnitt für den herzustellenden Gegenstand 5 gezeigt.

Durch diese spezielle erweiterte und voneinander getrennte Kanalführung der einzelnen Teilkanäle 127,128 im Anschluss an den gemeinsamen Kanal 34 im Bereich der ersten Düsenplatte 115, wird der zuerst zusammenhängende Schmelzestrom auf mehrere Schmelzeteilströme aufgeteilt, in den einzelnen Teilkanälen 127, 128 voneinander getrennt über eine vorbestimmbare Distanz durch die Extrusionsdüse 28 in Teilabschnitten vorgeformt und durch diese dabei hindurchgeführt, sowie anschließend zu einem gemeinsamen und wiederum zusammenhängen Profilquerschnitt vereint. Dabei bilden die einzelnen Düsenplatten 115 bis 118 bzw. der in diesen angeordnete Kanal 34 bzw. die Teilkanäle 127,128 in Extrusionsrichtung 6, also in Richtung der Längsachse 35 Kanalabschnitte 130 bis 133 aus. Aufgrund der Aufteilung der Extrusionsdüse 28 in mehrere hintereinander angeordnete Düsenplatten 115 bis 118 kann die Bearbeitung der einzelnen Düsenplatten 115 bis 118 mit dem darin angeordneten Kanal 34 bzw. den Teilkanälen 127, 128 relativ einfach erfolgen, wobei dies beispielsweise durch Draht- und/oder Senkerodieren möglich ist.

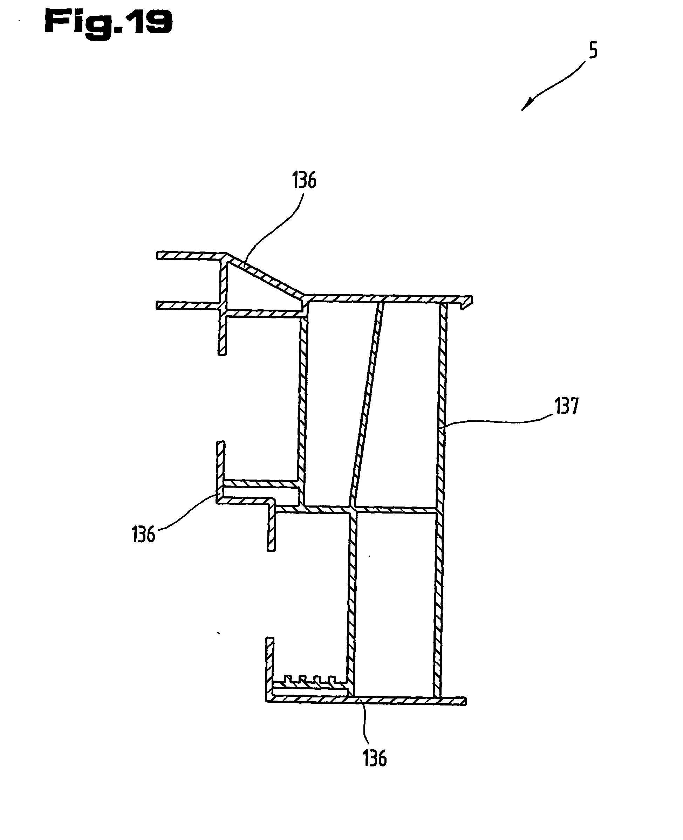

In den Fig. 8 und 19 ist eine weitere mögliche und gegebenenfalls für sich eigenständige Ausbildung des Extrusionswerkzeuges 7 der Formgebungseinrichtung 3 gezeigt, wobei wiederum für gleiche Teile gleiche Bezugszeichen bzw. Bauteilbezeichnungen, wie in den vorangegangenen Fig. 1 bis 17, verwendet werden. Um unnötige Wiederholungen zu vermeiden, wird auf die detaillierte Beschreibung in den vorangegangenen Fig. 1 bis 17, insbesondere auf die in den Fig. 13 bis 17 erweiterte Kanalfübrung der Teilkanäle 127, 128 innerhalb der Extrusionsdüse 28, hingewiesen bzw. Bezug genommen.

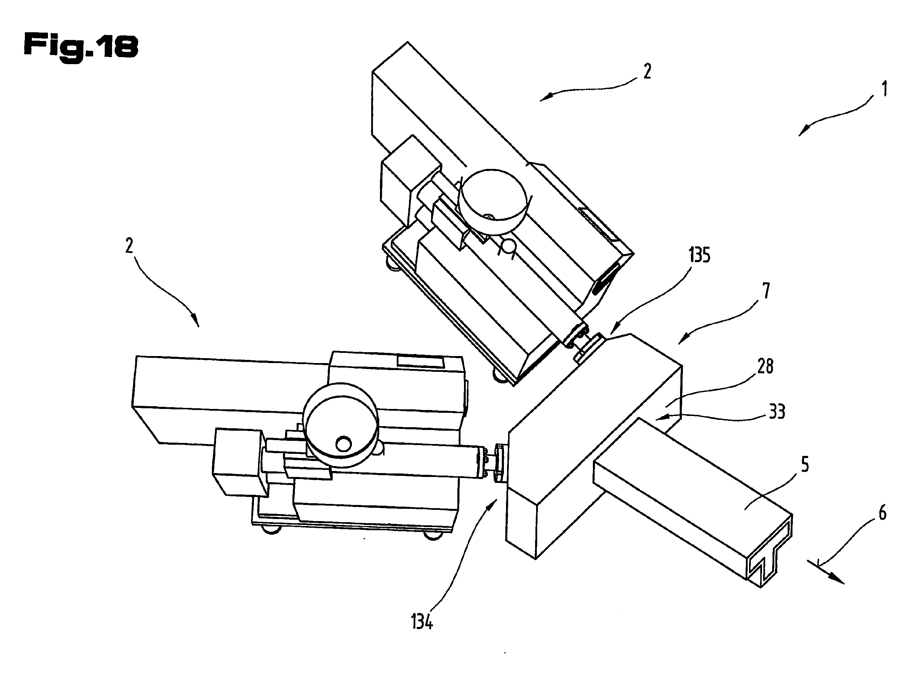

Wie aus der Fig. 18 schematisch vereinfacht dargestellt ist, weist das Extrusionswerkzeug 7, insbesondere die Extrusionsdüse 8, zwei voneinander getrennte Anschlüsse bzw. Eintrittsbereiche 134, 135 auf, welchen jeweils eigene Extruder 2 zugeordnet sind. Die einzelnen aus den beiden Extrudern 2 austretenden Schmelzestränge werden im jeweiligen Eintrittsbereich 134, 135 der Extrusionsdüse 28 zugeleitet und innerhalb dieser vorbestimmbaren Teilkanälen 127, 128 zugeleitet, wie dies bereits zuvor detailliert in den Fig. 13 bis 17 beschrieben worden ist. Dadurch ist es möglich, eine Aufteilung bzw. Zuteilung der einzelnen Schmelzestränge - hier im vorliegenden Ausführungsbeispiel zwei - auf einzelne Profilpartien bzw. Abschnitte des herzustellenden Gegenstandes 5 vorzunehmen, wie dies beispielsweise in der Fig. 19 durch unterschiedlich gewählte Schraffurrichtungen vereinfacht dargestellt worden ist. Dabei kann die Aufteilung der einzelnen Schmelzestränge in die hier nicht näher dargestellten Teilkanäle 127, 128 analog jener Ausführungsform erfolgen, wie dies zuvor bereits detailliert in den Fig. 13 bis 17 gezeigt und beschrieben worden ist. Der einzige Unterschied besteht darin, dass bei der hier in der Fig. 18 vereinfacht dargestellten Extrusionsdüse 28 mehrere, bevorzugt zwei, voneinander räumlich getrennte Eintrittsbereiche 134, 135 gegenüber dem einzigen Eintrittsbereich 32 gemäß der Fig. 13 vorgesehen sind.

Durch die Verwendung von mehreren getrennt voneinander angeordneten Extrudern 2 besteht die Möglichkeit, in diesen sowohl Primärmaterial als auch Regenerationsmaterial getrennt voneinander aufzubereiten und vorerst getrennt voneinander der gemeinsamen Extrusionsdüse 28 zuzuführen. So ist in der Fig. 19 mit dem Bezugszeichen 136 ein erstes Kunststoffmaterial und mit 137 ein weiteres Kunststoffmaterial bezeichnet, wobei das zweite Kunststoffmaterial 137 beispielsweise jenes Kunststoffmaterial ist, das in der Profil- und Fensterproduktion anfällt und so das daraus gewonnene Material wieder in den Extrusionsprozess rückgeführt und damit wiederverwertet werden kann. Das erste Kunststoffmaterial 136 kann dabei auch aus einem hochwertigeren Material gebildet sein und beispielsweise die Sichtseite des Gegenstandes 5 bilden.

Während dem Durchtritt der zueinander unterschiedlichen Schmelzestränge durch die Extrusionsdüse 28 werden diese wiederum getrennt voneinander in den einzelnen Teilkanälen 127, 128 bis nahe dem gemeinsamen Austrittsbereich 33 hindurchgeführt und vor dem Austritt zu einem gemeinsamen verbundenen Schmelzestrang - also dem herzustellenden Gegenstand 5 - zusammengeführt und die Schmelzestränge an den zueinander zugewandten Oberflächenbereichen miteinander verbunden. Dadurch können auf einfache Art und Weise Gegenstände 5 aus miteinander verbindbaren, jedoch in ihrer Qualität unterschiedlichen Ausgangsmaterialien hergestellt werden. Weiters lassen sich dadurch aber auch Rohmaterialkosten einsparen, da so bereits einmal extrudiertes Kunststoffmaterial wieder verwendet werden kann.

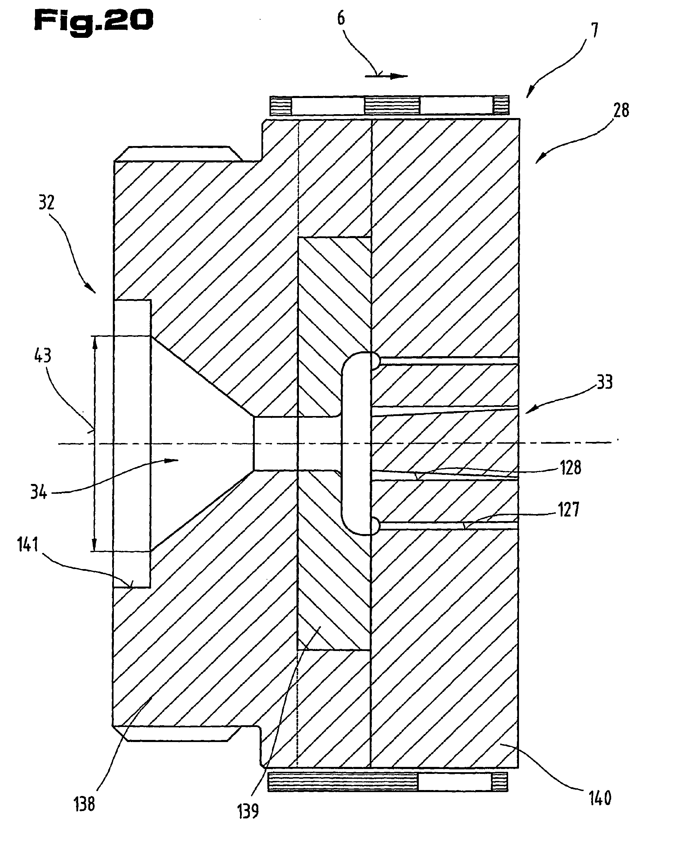

In der Fig. 20 ist eine weitere mögliche und gegebenenfalls für sich eigenständige Ausbildung des Extrusionswerkzeuges 7, insbesondere der Extrusionsdüse 28, gezeigt, wobei wiederum für gleiche Teile gleiche Bauteilbezeichnungen bzw. Bezugszeichen, wie in den vorangegangenen Fig. 1 bis 19, verwendet werden. Um unnötige Wiederholungen zu vermeiden, wird auf die detaillierte Beschreibung in den vorangegangenen Fig. 1 bis 19 hingewiesen bzw. Bezug genommen.

So weist die Extrusionsdüse 28 in Extrusionsrichtung 6 den Eintrittsbereich 32 sowie den Austrittsbereich 33 für die hindurchzuführende Schmelze bzw. den hindurchzuführenden Schmelzestrang auf, welcher von einem hier nicht näher dargestellten Extruder 2 dem Eintrittsbereich 32 zugeleitet wird.

Das Extrusionswerkzeug 7 dient hier vorwiegend zur Herstellung von Profilmustern mit geringerem Aufwand gemäß Kundenwunsch, wobei für die Profilgenauigkeit erweiterte Toleranzangaben gelten. Grundsätzlich soll dabei auf vieles verzichtet werden, was die Herstellungskosten unnötig belastet.

Der Einfachheit halber weist so die Extrusionsdüse 28 mehrere hintereinander angeordnete Düsenplatten 138 bis 140 auf, wobei die in Extrusionsrichtung 6 erste Düsenplatte 138 einen vordefinierten Zulauf mit dem Kanalquerschnitt 43 aufweist, welcher bevorzugt kreisrund, in Abhängigkeit von der benötigten Kunststoffschmelze zur Herstellung des Gegenstandes 5 bzw. der von der Anschlussgeometrie des Extruders 2 abhängig ist. Der Kanalquerschnitt 43 stellt den Beginn des gemeinsamen Kanals 34 dar, welcher bei diesem Ausführungsbeispiel kegelförmig verjüngend ausgebildet ist. An dem vom Kanal 34 bzw. an den Kanalquerschnitt 43 entgegen der Extrusionsrichtung 6 anschließenden Abschnitt kann ein Zentrieransatz 141 vorgesehen sein, welcher zur Abstützung am hier nicht näher dargestellten Extruder 2 dient.

Die hier erste Düsenplatte 138 kann beispielsweise eine Stärke in Extrusionsrichtung 6 von 70 mm aufweisen, wobei der Kanalquerschnitt 43 eine Größe von 60mm im Durchmesser aufweisen kann, welcher über die Längserstreckung des Kanals 34 in seinem Querschnitt hin auf einen Durchmesser von beispielsweise 15mm abnimmt.

In diese erste Düsenplatte 139 ist hier die weitere Düsenplatte 139 eingesetzt, wobei diese Düsenplatte 139 eine so genannter Verteilerplatte darstellt. Diese Düsenplatte 139 kann in Extrusionsrichtung 6 eine Stärke von beispielsweise 20mm aufweisen, wobei die beiden der weiteren Düsenplatte 140 zugewandten Stirnflächen zueinander ebenflächig ausgebildet sind. Dadurch ist eine satte Anlage der weiteren Düsenplatte 140 möglich, welche auch als Austrittsplatte bezeichnet werden kann. In dieser Düsenplatte 140, welche in Extrusionsrichtung 6 die letzte Düsenplatte darstellt, erfolgt die Ausformung der Profilkontur. Dies erfolgt wiederum in unterschiedlich zueinander angeordneten Teilkanälen 127, 128, welche im Austrittsbereich 33 den hindurchtretenden Schmelzestrang zur fertigen Profilgeometrie umgeformt haben. Die entsprechende Aufteilung des Schmelzestroms erfolgt in der zwischen den beiden Düsenplatten 138, 140 angeordneten Düsenplatte 139, welche ausgehend von dem verjüngten Kanal 34 abhängig von der Profilgeometrie den Schmelzestrom hin zu den einzelnen Teilkanälen 127, 128 aufteilt.

Der verringerte Durchtrittsquerschnitt des Kanals 34 zwischen der ersten Düsenplatte 138 und der in dieser integrierten weiteren Düsenplatte 139 wird im Bereich der hier mittleren Düsenplatte 139 entsprechend der gewünschten Profilgeometrie entsprechend erweitert, um so ausreichend Kunststoffmaterial den Teilkanälen 127, 128 zuführen zu können. Dies erfolgt profilabhängig soweit, dass der erweiterte Verteilkanal in seiner äußeren Umrissform bereits nahezu der herzustellenden Profilgeometrie des Gegenstandes 5 entspricht.

Es wäre aber auch möglich, die hier mittlere Düsenplatte 139 zwischen den Stirnflächen der ersten und letzten Düsenplatte 138, 140 anzuordnen, wie dies vereinfacht durch strichlierte Linien angedeutet ist.

Aufgrund dieser einfachen Anordnung der einzelnen Düsenplatten 138 bis 140 kann die erste Düsenplatte 138 wieder verwendet werden und es sind nur die beiden Düsenplatten 139 sowie 140 profilabhängig neu zu fertigen. Die Extrusionsdüse 28 sowie die Kalibriervorrichtung 8 mit den Kalibrierwerkzeugen 9 bis 13 kann dabei geschlossen betrieben werden, was bedeutet, dass zwischen diesen einzelnen Anlagenteilen zwar ein Spalt vorgesehen ist, welcher jedoch im Betrieb gegenüber der äußeren Umgebung, also dem Umgebungsdruck - abgedichtet ist und dieser den hindurchzaführenden Gegenstand 5 umgebende Hohlraum zusätzlich noch auf einen gegenüber dem Atmosphärendruck geringeren Druck abgesenkt werden kann. Dadurch ist ein Zutritt von Umgebungsluft sowie Umgebungsdruck verhindert und damit ein Aufbau einer Druckdifferenz zwischen der oder den Hohlkammern des Gegenstandes 5 und seiner äußeren Mantelfläche beim Hindurchtreten bzw. beim Übertritt zwischen der Extrusionsdüse 28 und/oder den Kalibrierwerkzeugen 9 bis 13 der Kalibriervorrichtung 8 möglich.

Die Beheizung bzw. Temperierung der Düse kann dabei gemäß dem bekannten Stand der Technik erfolgen und wird deshalb hier nicht näher eingegangen.

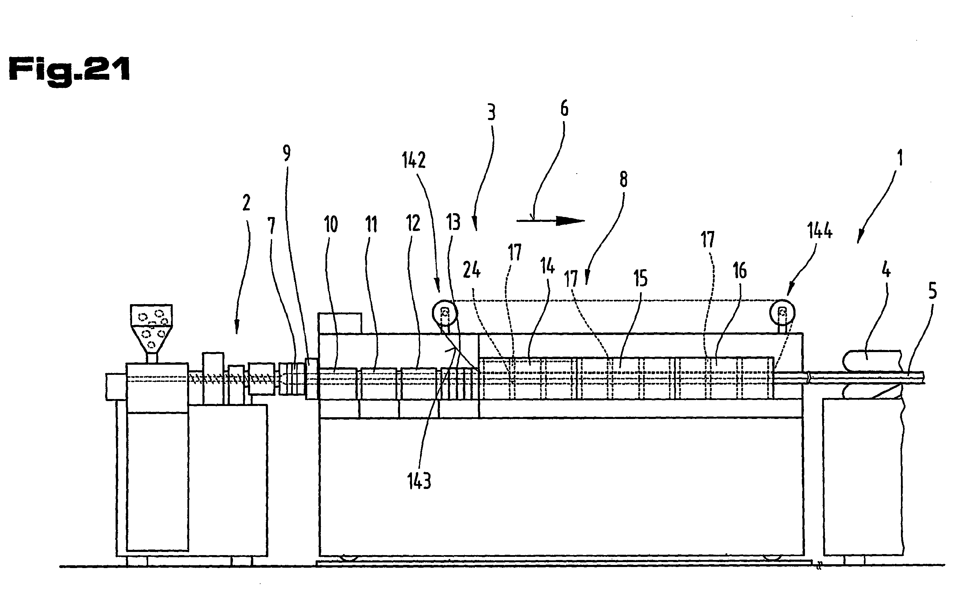

In der Fig. 21 ist eine weitere mögliche Zusatzeinrichtung zur Extrusionsanlage 1 gezeigt, wobei wiederum für gleiche Teile gleiche Bezugszeichen bzw. Bauteilbezeichnungen, wie in den vorangegangen Fig. 1 bis 20, verwendet werden. Um unnötige Wiederholungen zu vermeiden, wird auf die detaillierte Beschreibung in den vorangegangenen Fig. 1 bis 20 hingewiesen bzw. Bezug genommen.

Die in der Fig. 21 dargestellte Extrusionsanlage 1 umfasst wiederum den Extruder 2, die daran nachfolgend angeordnete Formgebungseinrichtung 3 sowie den Raupenabzug 4, mit welchem der Gegenstand 5 ausgehend vom Extruder 2 durch die Formgebungseinrichtung 3 in Extrusionsrichtung 6 abgezogen bzw. hindurchgezogen werden kann. Im Bereich des Extruders 2 ist wiederum das Extrusionswerkzeug 7 zur Formgebung des Gegenstandes 5 angeordnet. Weiters umfasst die Formgebungseinrichtung 3 wiederum die Kalibriervorrichtung 8, welche aus mehreren Kalibrierwerkzeugen 9 bis 13 sowie mehreren Kühlkammern 14 bis 16 gebildet sein kann.

Im Zwischenbereich zwischen den Kalibrierwerkzeugen 9 bis 13 sowie der Kühlkammern 14 bis 16 ist eine vereinfacht dargestellte Haltevorrichtung 142 angeordnet, an welcher bevorzugt ein bandförmiges Element 143, beispielsweise in Form einer Rollenware, bevorratet gehaltert ist. Dieses bandförmige Element 143 kann als Schutzfolie zumindest bereichsweise auf die äußere Oberfläche des herzustellenden Gegenstandes 5 aufgebracht werden, um so beispielsweise die spätere Sichtseite des Gegenstandes 5 vor Oberflächenbeschädigungen während des Durchtritts durch die Kühlkammern 14 bis 16 sowie gegebenenfalls durch den Raupenabzug 4 zu schützen. Durch die stetige Abzugsbewegung des Gegenstandes 5 in Extrusionsrichtung 6 können beispielsweise die in den Kühlkammer 14 bis 16 angeordneten Stütz- bzw. Kalibrierblenden Längsriefen bzw. Kratzspuren in die noch nicht vollständig abgekühlte Oberfläche des Gegenstandes einbringen und so zu einer Qualitätsminderung führen.

Bei bisher bekannten Anlagen wurde das Element 143 als so genannte Schutzfolie nach dem Raupenabzug 4 zumindest bereichsweise auf eine äußere Oberfläche des Gegenstandes 5 aufgebracht und anschließend mit einer hier nicht näher dargestellten Trenneinrichtung der extrudierte Endlosstrang des Gegenstandes 5 zu Stangenmaterial getrennt. Durch das nunmehrige Aufbringen des bandförmigen Elements 143 im unmittelbaren Anschluss nach der kalibrierenden Formgebung im Bereich der Kalibrierwerkzeuge 9 bis 13 - hier im vorliegenden Fall am Ende des letzten Kalibrierwerkzeuges 13 - und noch vor Eintritt in die erste Kühlkammer 14 wird bereits ein hoher Schutz für die Oberfläche des Gegenstandes 5 in diesem Bereich erzielt. Dies ist deshalb von Vorteil, da, wie bekannt, der Gegenstand 5 innerhalb der Kühlkammern 14 bis 16 von einem hier nicht näher dargestellten flüssigen Kühlmedium umspült wird und dadurch die Möglichkeit besteht, dass Verunreinigungen innerhalb des Kühlmittel zwischen der äußeren Oberfläche des Gegenstandes 5 und den Kalibrieröffnungen 24 in den Stütz- bzw. Kalibrierblenden 17 mithineingezogen werden und dies zu einer zusätzlichen Beschädigung der Oberfläche des Gegenstandes 5 führen kann.

Bei diesem hier gezeigten Ausführungsbeispiel ist das bandförmige Element 143 beispielsweise als Rollenware ausgebildet und verbleibt ablösbar haftend am Gegenstand 5. Damit ist auch während der Herstellung von Fenstern oder Türen aus dem Gegenstand 5 der zu schützende Bereich, insbesondere die Sichtseite, desselben vor Beschädigungen geschützt und kann beispielsweise erst nach erfolgter Montage abgezogen werden.

Unabhängig davon wäre es aber auch möglich, das aufgebrachte bandförmige Element 143 über Teilstrecken zwischen dem Aufbringen auf die Oberfläche und der Trennvorrichtung von der Oberfläche des Gegenstandes 5 abzuheben, in diesem Bereich das Element 143 getrennt vom Gegenstand 5 zu führen und anschließend erneut auf die Oberfläche aufzubringen. Gleichfalls wäre es aber auch möglich, das bandförmige Element 143 vor der Trennvorrichtung von der zu schützenden Oberfläche des Gegenstandes 5 abzuziehen und erneut wieder zu verwenden. Dies könnte z.B. dadurch erfolgen, dass das bandförmige Element 143 entweder vor der Durchtrennung des Gegenstandes 5 abgezogen und entsprechend aufgewickelt oder aber in Form eines Endlosbandes wieder in den Bereich der Haltevorrichtung 142 zurückgeführt wird, wobei hier die Haltevorrichtung 142 als Umlenk- bzw. Zufuhrvorrichtung ausgebildet ist.

Weiters in der Fig. 21 noch vereinfacht am Ende der letzten Kühlkammer 16 dargestellt, dass das bandförmige Element 143 beispielsweise als Endlosband ausgebildet ist und lediglich zum Schutz des Gegenstandes 5 während dem Durchtritt durch die Kühlkammern 14 bis 16 dient. Dabei ist im Endbereich der letzten Kühlkammer 16 eine vereinfachte Umlenkvorrichtung 144 für das in strichlierten Linien angedeutete bandförmige Element 143 vorgesehen, mit welcher dieses nach dem Austritt des Gegenstandes 5 aus der hier letzten Kühlkammer 16 abgehoben und in den Bereich der Haltevorrichtung 142 ohne jeglichen Kontakt, also getrennt vom Gegenstand 5, rückgeführt wird, wobei in diesem Fall die Haltevorrichtung 142 ebenfalls als Umlenkvorrichtung 144 ausgebildet ist. Auf die Darstellung von Spannvorrichtungen bzw. Zwischenspeichern für das Element 143 wurde der besseren Übersichtlichkeit halber verzichtet.

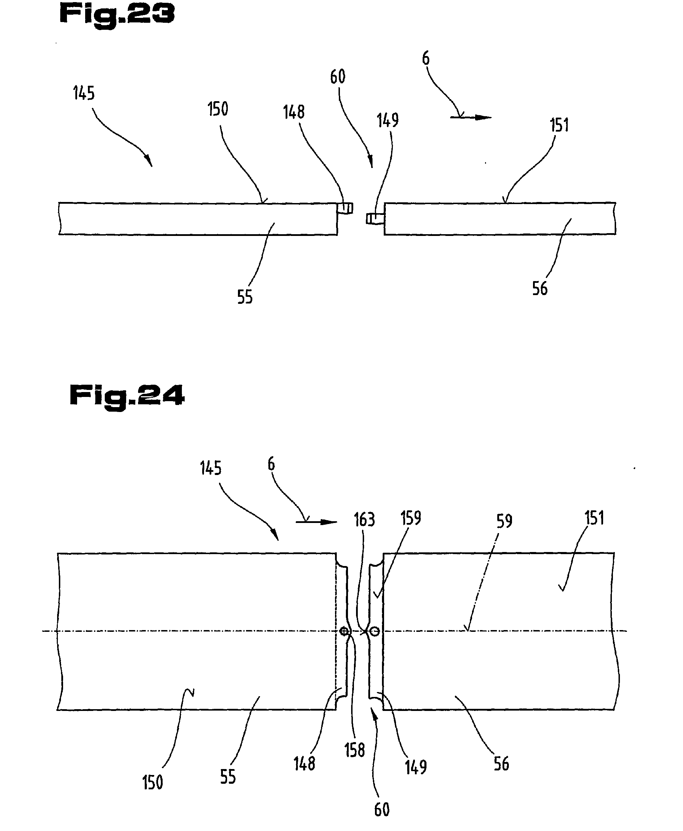

In den Fig. 23 bis 26 ist eine mögliche Ausführungsform der Gelenkanordnung 60 gezeigt, wie diese bereits zuvor beispielhaft in den Fig. 5 bis 7 angedeutet worden ist. Dabei werden wiederum für gleiche Teile gleiche Bezugszeichen bzw. Bauteilbezeichnungen, wie in vorangegangenen Fig. 1 bis 22, verwendet. Um unnötige Wiederholungen zu vermeiden, wird auf die detaillierte Beschreibung in den vorangegangenen Fig. 1 bis 22 hingewiesen bzw. Bezug genommen.

Die Tragplatte 55 sowie die Aufnahmeplatte 56 für die in Extrusionsrichtung hintereinander angeordneten Kalibrierwerkzeuge 10 bis 12 bilden eine Traganordnung 145 aus. Die hier gezeigte Gelenkanordnung 60 umfasst bei diesem hier gezeigten Ausführungsbeispiel an einander zugewendeten Stirnflächen 146, 147 der Tragplatte 55 sowie der Aufnahmeplatte 56 jeweils eine, die Stirnfläche 146 bzw. 147 überragende Tragleiste 148 sowie Stützleiste 149. Die Tragplatte 55 sowie die Aufnahmeplatte 56 weisen ihrerseits jeweils den darauf aufzunehmenden Kalibrierwerkzeugen 10 bis 12 zugewendete Auflageflächen 150, 151 auf. Weiters weist die Tragplatte 55 sowie die Aufnahmeplatte 56 jeweils bevorzugt eine gleiche Dicke 152, 153 auf.

Die an der Tragplatte 55 an der Stirnfläche 46 angeordnete Tragleiste 148 erstreckt sich dabei über einen Teilbereich der Dicke 152 der Tragplatte 55 und weist dabei in gleicher Richtung eine dazu geringere Stärke 154 auf. Bevorzugt ist dabei die Tragleiste 148 an der der Auflagefläche 150 zugewandten Seite ebenflächig zu der die Kalibrierwerkzeuge 10 bis 12 aufnehmenden und diesen zugewendeten Auflagefläche 150 ausgerichtet. Die Tragleiste 148 weist auf der von der Auflagefläche 150 abgewendeten Seite quer zur Längserstreckung der Tragplatte 55 bzw. quer zur Extrusionsrichtung 6 sowie parallel zur Auflagefläche 150 gesehen, zueinander V-förmig in die von der Auflagefläche 150 abgewendete Richtung geneigt zusammenlaufende Begrenzungsflächen 155, 156 auf. Zur Vermeidung einer linienförmigen Auflage der V-förmig aufeinander zulaufenden Begrenzungsflächen 155, 156 kann im Bereich der aufeinander V-förmig zulaufenden Begrenzungsflächen 155, 156 zwischen diesen eine parallel zur Auflagefläche 150 ausgerichtete erste Stützfläche 157 angeordnet sein, welche in ihrer Ausdehnung in Extrusionsrichtung sehr gering gehalten ist. Weiters wäre aber auch die Anordnung von einem Übergangsradius möglich, wodurch bei der relativen Verschwenkung eine einfache Verstellung bei schonender Anlage an der Gegenfläche erzielbar ist.

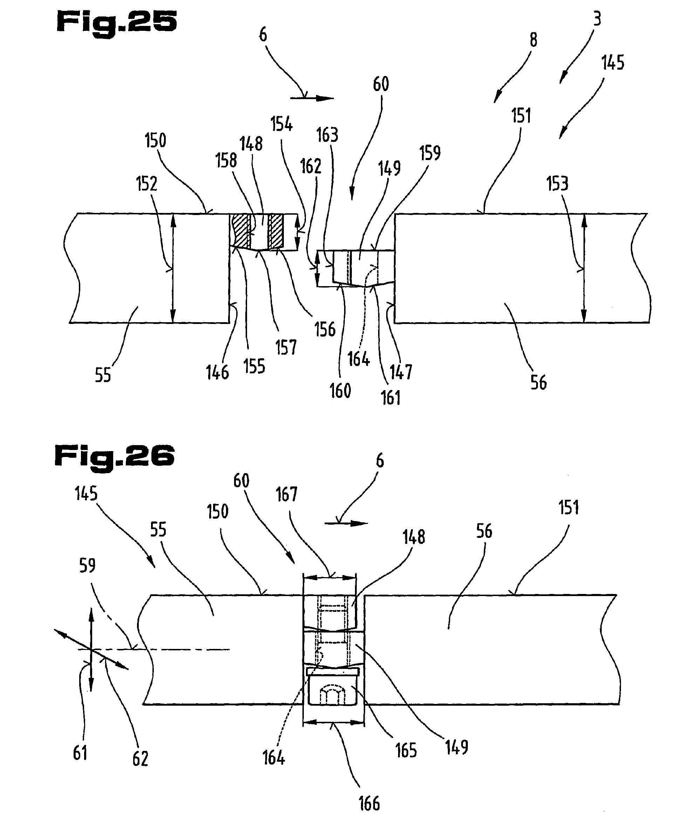

Weiters ist noch aus einer Zusammenschau der Fig. 24 und 25 zu ersehen, dass in der Tragleiste 148 in einem Schnittpunkt zwischen der Längsachse 59 der Tragplatte 55 und den V-förmig aufeinander zulaufenden Begrenzungsflächen 155, 156 ein in senkrechter Richtung bezüglich der Auflagefläche 150 ausgerichtetes Innengewinde 158 darin angeordnet ist, welches bevorzugt die Tragleiste 148 vollständig durchsetzt. Es wäre aber auch möglich, das Innengewinde 158 im Bereich der der Auflagefläche 150 zugewandten Oberseite verschlossen auszubilden.

Die der Tragplatte 55 zugewendete und an der Stirnfläche 147 der Aufnahmeplatte 56 angeordnete Stützleiste 149 weist auf der der Auflagefläche 151 zugewendeten Seite eine ebenflächig ausgebildete weitere Stützfläche 159 auf. Diese weitere Stützfläche 159 an der Stützleiste 149 dient zur Auflage der ersten Stützfläche 157 an der Tragleiste 148. Dabei sei erwähnt, dass die an der Tragleiste 148 angeordnete Stützfläche 157 in Längserstreckung der Tragplatte 55 gesehen nur eine geringe Breite aufweist bzw. durch einen Übergangsradius gebildet ist, um eine schneidenförmige Anlage und damit mögliche Einkerbungen an der dieser zugewendeten Stützfläche 159 der Stützleiste 149 zu vermeiden.

Die weitere Stützfläche 159 an der Stützleiste 149 ist gegenüber der Auflagefläche 151 in senkrechter Richtung zu dieser versetzt angeordnet. Dabei entspricht das Ausmaß der Versetzung der weiteren Stützfläche 159 der Stützleiste 149 gegenüber der Auflagefläche 151 der Stärke 154 der Tragleiste 148 in senkrechter Richtung bezüglich der beiden Auflageflächen 150, 151. Damit ist gewährleistet, dass bei zusammenwirkenden Stützflächen 157, 159 die beiden Auflageflächen 150, 151 bei zueinander paralleler Ausrichtung ebenflächig ausgerichtet sind. Damit können die darauf anzuordnenden Kalibrierwerkzeuge 10 bis 12 zueinander ohne jeglichen Höhenversatz, an der Tragplatte 55 sowie der Aufnahmeplatte 56 angeordnet werden.

Auch die Stützleiste 149 kann auf der von der Auflagefläche 151 abgewendeten Seite quer zur Längserstreckung der Aufnahmeplatte 56 sowie parallel zur Auflagefläche 151 gesehen zueinander V-förmig in die von der Auflagefläche 151 abgewendete Richtung geneigt zusammenlaufende weitere Begrenzungsflächen 160, 161 aufweisen. Ausgehend von der Stützfläche 159, weist die Stützleiste 149 in senkrechter Richtung zur Auflagefläche 151 bis hin zur Schnittlinie der beiden Begrenzungsflächen 160, 161 eine Stärke 162 auf. Dabei ist eine Summe der Stärke 154 der Tragleiste 148 zuzüglich der Stärke 162 der Stützleiste 149 geringer, als die Dicke 152 bzw. 153 der Tragplatte 55 bzw. Aufnahmeplatte 56.

Zur gegenseitigen Abstützung der Tragplatte 55 an der Aufnahmeplatte 56 in Extrusionsrichtung 6 ist nunmehr vorgesehen, dass dies zwischen der Stirnfläche 146 der Tragplatte 55 und einer dieser zugewendeten Stirnfläche 163 an der Stützleiste 149 erfolgt.

Um eine Schwenkbewegung der Tragplatte 55 in der hier horizontal gezeigten Stellung relativ gegenüber der Aufnahmeplatte 56 zu ermöglichen, ist die der Tragplatte 55 zugewendete Stirnfläche 163 der Stützleiste 149 in senkrechter Richtung auf die Auflagefläche 151 gesehen zumindest im Bereich der Längsachse 59 V-förmig hin in Richtung auf die Tragplatte 55 aufeinander zulaufend ausgebildet. Im Bereich der einander schneidenden Stirnflächen 163 kann ein Übergangsradius angeordnet sein, um so eine Beschädigung der mit dieser zusammenwirkenden Stirnfläche 146 an der Tragplatte 55 zu vermeiden.

Weiters ist aus einer Zusammenschau der Fig. 24 und 25 zu ersehen, dass in der Stützleiste 149 in einem Schnittpunkt zwischen der Längsachse 59 der Aufnahmeplatte 56 und den V-förmig aufeinander zulaufenden weiteren Begrenzungsflächen 160, 161 ein in senkrechter Richtung bezüglich der Auflagefläche 151 ausgerichteter Durchbruch 164, insbesondere eine Bohrung, angeordnet ist.

In der Fig. 26 ist die zusammengebaute Stellung der Gelenkanordnung 60 zwischen der Tragplatte 55 und der Aufnahmeplatte 56 gezeigt. Dabei ist der Durchbruch 164 von einem Verbindungselement 165, insbesondere einer Schraube oder dgl., durchsetzt und dieses greift in das Innengewinde 158 in der Tragleiste 148 ein.

Im zusammengebauten Zustand stützt sich die erste Stützfläche 157 der Tragleiste 148 an der weiteren Stützfläche 159 der Stützleiste 149 ab. Durch die V-förmig aufeinander zulaufenden Begrenzungsflächen 155, 156 an der Tragleiste 148 ist es möglich, die Tragplatte 55 auf der von der Gelenkanordnung 60 abgewendeten Seite mit der zuvor beschriebenen Verstellvorrichtung 68 vertikal zu verstellen. Dabei hängt der mögliche Verstellweg von den Neigungswinkeln der Begrenzungsflächen 155,156 bezüglich der Stützfläche 159 ab. In gleicher Weise wird bei entsprechender Verstellung der Tragplatte 55 auch das damit in Verbindung stehende Verbindungselement 165 mitverschwenkt. Die entsprechende Freistellung für die Schwenkbewegung wird durch die ebenfalls geneigt zueinander verlaufenden weiteren Begrenzungsflächen 160, 161 an der Stützleiste 149 gewährleistet. Der dabei notwendige Verschwenkweg des Verbindungselements 165 wird zusätzlich durch den vom Durchbruch 164 geschaffenen Freiraum innerhalb der Stützleiste 149 gewährleistet.

Zum Ermöglichen der Schwenkbewegung in der hier horizontalen Richtung der Tragplatte 55 gegenüber der Aufnahmeplatte 56, ist eine Breite 166 der Stützleiste 149 im Bereich der Längsachse 59 sowie in Richtung derselben größer, als eine Breite 167 der Tragleiste 148 im gleichen Bereich sowie der gleichen Richtung. Damit ist eine eindeutige gegenseitige Abstützung der der Aufnahmeplatte 56 in Extrusionsrichtung 6 vorgeordneten Tragplatte 55 an den einander zugewandten Stirnflächen 146 der Tragplatte 55 bzw. der Stirnfläche 163 an der Stützleiste 149 gewährleistet.

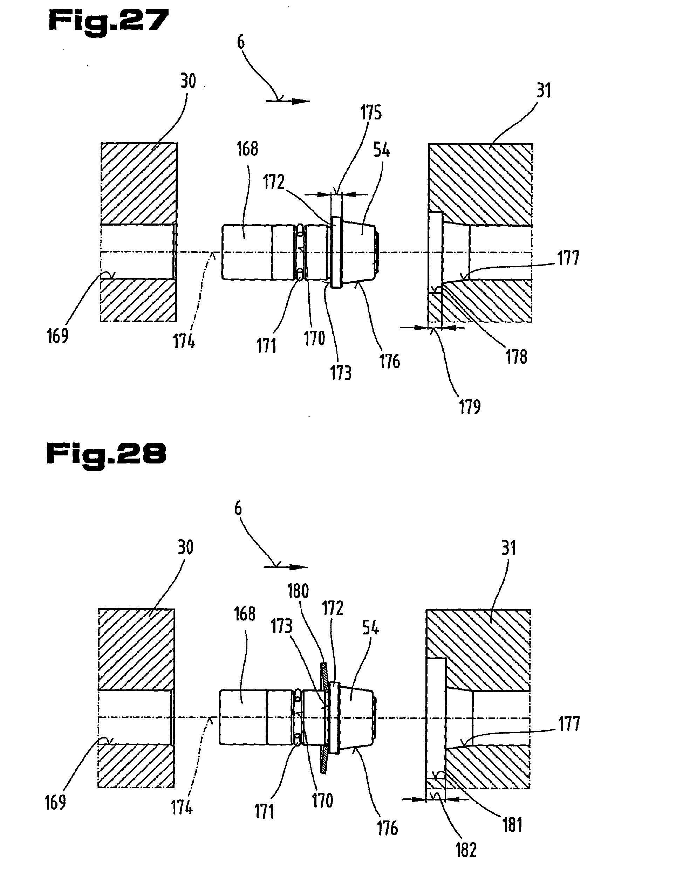

In den Fig. 27 und 28 sind weitere mögliche und gegebenenfalls für sich eigenständige Ausbildungen für das Passelement 54 gezeigt, wie dieses bereits in der Fig. 2 im rechten oberen Teil des Extrusionswerkzeuges 7 in Form einer Extrusionsdüse 28 gezeigt ist. Dabei werden wiederum für gleiche Teile gleiche Bezugszeichen bzw. Bauteilbezeichnungen, wie in den vorangegangenen Fig. 1 bis 26, verwendet. Um unnötige Wiederholungen zu vermeiden, wird auf die detaillierte Beschreibung in den vorangegangen Fig. 1 bis 26 hingewiesen bzw. Bezug genommen.

Das in der Fig. 27 dargestellte Passelement 54 dient zur gegenseitigen exakte Lagezentrierung der in noch voneinander getrennter Stellung gezeigten Elemente 30, 31, wie dies beispielsweise bei Düsenplatten, der Fall ist. Das Passelement 54 weist an der dem Element 30 zugewandten Seite einen Ansatz 168 auf, welcher bevorzugt zylindrisch ausgebildet ist. Dieser Ansatz 168 wird in eine Aufnahmeöffnung 169 mit entsprechender gegenseitiger Passungswahl eingesetzt. Zur Lagefixierung des Ansatzes 168 in der Aufnahmeöffnung 169 ist im Ansatz 168 eine hutförmige Vertiefung 170 vorgesehen, welche über den Umfang rundum durchlaufend ausgebildet und in welcher auch ein Spannring 171 eingesetzt ist. Dieser weist in seinem ungespannten Zustand eine größere Außenabmessung bzw. einen größeren Außendurchmesser als der Ansatz 168 auf und wird beim Einsetzen des Ansatzes 168 in die Aufnahmeöffnung 169 elastisch in seiner Umfangsabmessung deformiert. So liegt dieser an der inneren Oberfläche der Aufnahmeöffnung 169 an. Dadurch wird das Passelement 54, welches auch als Zentrierelement bezeichnet werden kann, in der eingesetzten Stellung des Ansatzes 168 in der Aufnahmeöffnung 169 gehalten, sodass ein Herausfallen des Passelements 54 aus der Aufnahmeöffnung 169 verhindert ist.

Im Anschluss an den Ansatz 168 hin in Richtung auf das weitere Element 31 weist das Passelement 54 einen rundum durchlaufenden und den Ansatz 168 überragenden Bund 172 auf. Im eingesetzten Zustand liegt eine dem Element 30 zugewandte Bundfläche 173 an der dieser zugewandten Stirnfläche des Elements 30 an. Der Bund 172 weist in Richtung seiner Längsmittelachse 174 eine Stärke 175 auf. Im Anschluss an den Bund 172 weist das Passelement 54 eine Kegelstumpffläche 176 auf, die auf die vom Ansatz 168 abgewendete Richtung verjüngend ausgebildet ist. Dabei ist der größte Durchmesser der Kegelstumpffläche 176 kleiner als die äußere Abmessung des Bundes 172.

Im weiteren Element 31, welches gegenüber dem in Extrusionsrichtung 6 vorgeordneten Element 30 zu zentrieren ist, weist dieses eine gegengleich zur Kegelstumpffläche 176 ausgebildete Zentrierfläche 177 auf. Zur Aufnahme des Bundes 172 weist das Element 31 weiters eine Ausnehmung 178 auf, welche in Richtung der Längsmittelachse 74 gesehen eine Tiefe 179 aufweist, die gleich, bevorzugt jedoch größer, ist als die Stärke 175 des Bundes 172. Die äußere Abmessung bzw. der Durchmesser der Ausnehmung 178 ist zum Einsetzen des Bundes 172 bevorzugt größer als dieser gewählt.

Durch die bevorzugt größer gewählte Tiefe 179 der Ausnehmungen 178 gegenüber der Stärke 175 des Bundes 172 ist es möglich, die dem Passelement 54 zugewendete Stirnseite bzw. Stirnfläche des Elements 31 bei Undichtheit der aneinander anliegenden Elementen 30, 31 nachzuschleifen, ohne dass dabei die Zentrierwirkung des Passelements 54 verloren geht.

In der Fig. 28 ist eine ähnliche Ausbildung des Passelements 54 wie in der Fig. 27 gezeigt, wobei hier lediglich die Unterscheide gegenüber der in der Fig. 27 dargestellten und beschriebenen Ausführungsform erläutert werden. Dem Passelement 54 ist hier auf der der Bundfläche 173 zugewendeten Seite des Bundes 172 ein Federelement 180, wie beispielsweise eine Tellerfeder, zugeordnet. Im eingebauten Zustand stützt sich das Federelement 180 mit seinem äußeren, größeren Durchmesser bzw. seiner größeren Abmessung an der Stirnfläche des in Extrusionsrichtung 6 vorgeordneten Elements 30 ab. Die Abstützung des Bundes 172 mit seiner Bundfläche 173 erfolgt im Bereich der kleineren Abmessung des Federelements 180. Im weiteren in Extrusionsrichtung 6 nachgeordneten Element 31 ist eine bevorzugt kreisrunde Ausnehmung 181 vorgesehen, welche in ihrer Tiefe 182 derart gewählt ist, dass bei an den Stirnflächen aneinander liegenden Elementen 30, 31 die Kegelstumpffläche 176 des Passelements 54 durch die Vorspannung des Federelements 180 stets an die Zentrierfläche 177 selbsttätig angedrückt wird.

Bei entsprechender Wahl der Abmessungen sowie der Vorspannung des Federelements 180 kann ebenfalls ein Nachschleifen der einander zugewendeten Stirnflächen des Elements 30 und/oder 31 erfolgen, wobei jedoch stets im zusammengebauten Zustand ein Eingreifen der zusammenwirkenden Kegelstumpffläche 176 des Passelements 54 mit der Zentrierfläche 177 im Element 31 erhalten bleibt.

Die Ausführungsbeispiele zeigen mögliche Ausführungsvarianten einer Extrusionsanlage 1 mit unterschiedlichsten Anlagenteilen, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Extrusionsanlage 1 diese bzw. deren Bestandteile teilweise unmaßstäblich und/oder vergrößert und/oder verkleinert dargestellt wurden.

Vor allem können die einzelnen in den Fig. 1; 2, 3, 4; 5, 6, 7; 8, 9; 10, 11, 12; 13, 14, 15, 16, 17; 18, 19; 20; 21; 22, 23, 24, 25, 26; 27; 28 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Bezugszeichenaufstellung
- 1: Extrusionsanlage
- 2: Extruder
- 3: Formgebungseinrichtung
- 4: Raupenabzug
- 5: Gegenstand

- 6: Extrusionsrichtung
- 7: Extrusionswerkzeug
- 8: Kalibriervorrichtung
- 9: Kalibrierwerkzeug
- 10: Kalibrierwerkzeug

- 11: Kalibrierwerkzeug
- 12: Kalibrierwerkzeug
- 13: Kalibrierwerkzeug
- 14: Kühlkammern
- 15: Kühlkammer

- 16: Kühlkammer
- 17: Kalibrierblende
- 18: Aufnahmebehälter
- 19: Maschinenbett
- 20: *Aufstandsfläche

- 21: Kalibriertisch
- 22: Laufrolle
- 23: Fahrschiene
- 24: Kalibrieröffnung
- 25: Formfläche

- 26: Formfläche
- 27: Kalibrierplatte
- 28: Extrusionsdüse
- 29: Element
- 30: Element

- 31: Element
- 32: Eintrittsbereich
- 33: Austrittsbereich
- 34: Kanal
- 35: Längsachse

- 36: Gesamtlänge
- 37: Längsabschnitt
- 38: Distanz
- 39: Kanalabschnitt
- 40: Kanalabschnitt

- 41: Kanalabschnitt
- 42: Kanalabschnitt
- 43: Kanalquerschnitt
- 44: Kanalquerschnitt
- 45: Kanalwand

- 46: Kanalwand
- 47: Kanal
- 48: Kanalquerschnitt
- 49: Kanalmitte
- 50: Dorn

- 51: Dornteil
- 52: Dornaufsatz
- 53: Dornaufsatzteil
- 54: Passelement
- 55: Tragplatte

- 56: Aufnahmeplatte
- 57: Stützelement
- 58: Doppelpfeil
- 59: Längsachse
- 60: Gelenkanordnung

- 61: Doppelpfeil
- 62: Doppelpfeil
- 63: Kalibrierachse
- 64: Kalibrierachse
- 65: Kalibrieröffnung

- 66: Teilabschnitt
- 67: Teilabschnitt
- 68: Verstellvorrichtung
- 69: Verstellvorrichtung
- 70: Stirnseite

- 71: Mantel
- 72: Profilkammer
- 73: Steg
- 74: Oberfläche
- 75: Behandlungsvorrichtung

- 76: Gehäuse
- 77: Strömungskanal
- 78: Temperierelement
- 79: Umlenkkanal
- 80: Kanalseitenwand

- 81: Leitelement
- 82: Ansatz
- 83: Formfläche
- 84: Formfläche
- 85: Formfläche

- 86: Formfläche
- 87: Stirnfläche
- 88: Stirnfläche
- 89: Seitenfläche
- 90: Seitenfläche

- 91: Seitenfläche
- 92: Seitenfläche
- 93: Eintrittsbereich
- 94: Eintrittsbereich
- 95: Hohlraum

- 96: Kanal
- 97: Kanal
- 98: Deckplatte
- 99: Grundplatte
- 100: Ausgangsleitung

- 101: Weite
- 102: Weite
- 103: Weite
- 104: Distanz
- 105: Teilstirnfläche

- 106: Distanz
- 107: Teilstirnfläche
- 108: Teilstirnfläche
- 109: Radius
- 110: Bauteil

- 111: Durchströmöffnung
- 112: Ansatz
- 113: Ausmaß
- 114: Dichtfläche
- 115: Düsenplatte

- 116: Düsenplatte
- 117: Düsenplatte
- 118: Düsenplatte
- 119: Stirnffäche
- 120: Stirnfläche

- 121: Stirnfläche
- 122: Stirnfläche
- 123: Stirnfläche
- 124: Stirnfläche
- 125: Stirnfläche

- 126: Stirnfläche
- 127: Teilkanal
- 128: Teilkanal
- 129: Kanalquerschnitt
- 130: Kanalabschnitt

- 131: Kanalabschnitt
- 132: Kanalabschnitt
- 133: Kanalabschnitt
- 134: Eintrittsbereich
- 135: Eintrittsbereich

- 136: Kunststoffmaterial
- 137: Kunststoffmaterial
- 138: Düsenplatte
- 139: Düsenplatte
- 140: Düsenplatte

- 141: Zentrieransatz
- 142: Haltevorrichtung
- 143: Element
- 144: Umlenkvorrichtung
- 145: Traganordnung

- 146: Stirnfläche
- 147: Stirnfläche
- 148: Tragleiste
- 149: Stützleiste
- 150: Auflagefläche

- 151: Auflagefläche
- 152: Dicke
- 153: Dicke
- 154: Stärke
- 155: Begrenzungsfläche

- 156: Begrenzungsfläche
- 157: Stützfläche
- 158: Innengewinde
- 159: Stützfläche
- 160: Begrenzungsfläche

- 161: Begrenzungsfläche
- 162: Stärke
- 163: Stirnfläche
- 164: Durchbruch
- 165: Verbindungselement

- 166: Breite
- 167: Breite
- 168: Ansatz
- 169: Aufnahmeöffnung
- 170: Vertiefung

- 171: Spannring
- 172: Bund
- 173: Bundfläche
- 174: Längsmittelachse
- 175: Stärke

- 176: Kegelstumpffläche
- 177: Zentrierfläche
- 178: Ausnehmung
- 179: Tiefe
- 180: Federelement

- 181: Ausnehmung
- 182: Tiefe

## Patentansprüche

1. Traganordnung (145) zur Halterung mehrerer in Extrusionsrichtung (6) hintereinander angeordneter Kalibrierwerkzeuge (10 bis 12) einer Kalibriervorrichtung (8) an einem Kalibriertisch (21) einer Extrusionsanlage (1), wobei die hintereinander angeordneten Kalibrierwerkzeuge (10 bis 12) durch diese hindurchführende Kalibrieröffnungen (65) mit Kalibrierachsen (63, 64) aufweisen, **dadurch gekennzeichnet, dass** die Traganordnung (145) eine Tragplatte (55) sowie eine von dieser getrennte Aufnahmeplatte (56) umfasst, wobei die Tragplatte (55) der Aufnahmeplatte (56) in Extrusionsrichtung (6) gesehen unmittelbar vorgeordnet ist und zwischen der Tragplatte (55) und der Aufnahmeplatte (56) eine Gelenkanordnung (60) vorgesehen ist, mit welcher die Tragplatte (55) bezüglich der Aufnahmeplatte (56) relativ dazu räumlich verschwenkbar um die Gelenkanordnung (60) ausgebildet ist, wodurch die Kalibrierachsen (63, 64) von in Extrusionsrichtung (6) gesehen hintereinander angeordneten Kalibrierwerkzeugen (10 bis 12) winkelig zueinander verschwenkbar sind.

2. Traganordnung (145) nach Anspruch 1, **dadurch gekennzeichnet, dass** die Tragplatte (55) über die Gelenkanordnung (60) an der Aufnahmeplatte (56) abgestützt ist.

3. Traganordnung (145) nach einem der vorhergehenden Ansprüche, **dadurch gekennzeichnet, dass** der Tragplatte (55) an der von der Gelenkanordnung (60) abgewendeten Seite zur horizontalen sowie vertikalen Verstellung jeweils zumindest eine Verstellvorrichtung (68, 69) zugeordnet ist.

4. Traganordnung (145) nach einem der vorhergehenden Ansprüche, **dadurch gekennzeichnet, dass** der Aufnahmeplatte (56) Distanz- bzw. Stützelemente (57) zugeordnet sind, über welche die Aufnahmeplatte (56) am Kalibriertisch (21) abstützbar ist.

5. Traganordnung (145) nach einem der vorhergehenden Ansprüche, **dadurch gekennzeichnet, dass** die Gelenkanordnung (60) an einander zugewendeten Stirnflächen (146, 147) der Tragplatte (55) sowie der Aufnahmeplatte (56) jeweils eine die Stirnfläche (146, 147) überragende Tragleiste (148) sowie Stützleiste (149) umfasst.

6. Traganordnung (145) nach Anspruch 5, **dadurch gekennzeichnet, dass** sich die Tragleiste (148) über einen Teilbereich einer Dicke (152) der Tragplatte (55) erstreckt.

7. Traganordnung (145) nach Anspruch 5 oder 6, **dadurch gekennzeichnet, dass** die Tragleiste (148) ebenflächig zu einer dem Kalibrierwerkzeug (10 bis 12) zuwendbaren Auflagefläche (150) ausgerichtet ist.

8. Traganordnung (145) nach einem der Ansprüche 5 bis 7, **dadurch gekennzeichnet, dass** die Tragleiste (148) auf der von der Auflagefläche (150) abgewendeten Seite quer zur Längserstreckung der Tragplatte (55) sowie parallel zur Auflagefläche (150) gesehen zueinander V-förmig in von der Auflagefläche (150) abgewendeter Richtung geneigt zusammenlaufende Begrenzungsflächen (155, 156) aufweist.

9. Traganordnung (145) nach Anspruch 8, **dadurch gekennzeichnet, dass** im Bereich der aufeinander V-förmig zusammenlaufenden Begrenzungsflächen (155, 156) zwischen diesen eine parallel zur Auflagefläche (150) ausgerichtete erste Stützfläche (157) angeordnet ist.

10. Traganordnung (145) nach einem der Ansprüche 5 bis 9, **dadurch gekennzeichnet, dass** in der Tragleiste (148) in einem Schnittpunkt zwischen einer Längsachse (59) der Tragplatte (55) und den V-förmig aufeinander zulaufenden Begrenzungsflächen (155, 156) ein in senkrechter Richtung bezüglich der Auflagefläche (150) ausgerichtetes Innengewinde (158) angeordnet ist.

11. Traganordnung (145) nach einem der Ansprüche 5 bis 10, **dadurch gekennzeichnet, dass** die Stützleiste (149) auf der der Auflagefläche (151) zugewendeten Seite eine ebenflächig ausgebildete weitere Stützfläche (159) aufweist.

12. Traganordnung (145) nach Anspruch 11, **dadurch gekennzeichnet, dass** die weitere Stützfläche (159) der Stützleiste (149) bezüglich der Auflagefläche (151) in senkrechter Richtung zu dieser versetzt angeordnet ist.

13. Traganordnung (145) nach Anspruch 12, **dadurch gekennzeichnet, dass** die Versetzung der weiteren Stützfläche (159) der Stützleiste (149) gegenüber der Auflagefläche (151)
einer Stärke (154) der Tragleiste (148) in senkrechter Richtung bezüglich der Auflagefläche (150, 151) entspricht.

14. Traganordnung (145) nach einem der Ansprüche 5 bis 13, **dadurch gekennzeichnet, dass** die Stützleiste (149) auf der von der Auflagefläche (151) abgewendeten Seite quer zur Längserstreckung der Aufnahmeplatte (56) sowie parallel zur Auflagefläche (151) gesehen zueinander V-förmig in die von der Auflagefläche (151) abgewendeten Richtung geneigt zusammenlaufende weitere Begrenzungsflächen (160, 161) aufweist.

15. Traganordnung (145) nach einem der Ansprüche 5 bis 14, **dadurch gekennzeichnet, dass** die Stärke (154, 162) der Tragleiste (148) sowie die der Stützleiste (149) in Summe geringer ist als die Dicke (152, 153) der Trag- bzw. Aufnahmeplatte (55, 56).

16. Traganordnung (145) nach einem der Ansprüche 5 bis 15, **dadurch gekennzeichnet, dass** die Stirnfläche (146) der Tragplatte (55) an einer dieser zugewendeten Stirnfläche (163) der Stützleiste (149) abgestützt ist.

17. Traganordnung (145) nach Anspruch 16, **dadurch gekennzeichnet, dass** die der Tragplatte (55) zugewendete Stirnfläche (163) der Stützleiste (149) in senkrechter Richtung auf die Auflagefläche (151) gesehen zumindest im Bereich der Längsachse (59) V-förmig hin in Richtung auf die Tragplatte (55) aufeinander zulaufend ausgebildet ist.

18. Traganordnung (145) nach einem der Ansprüche 5 bis 17, **dadurch gekennzeichnet, dass** in der Stützleiste (149) in einem Schnittpunkt zwischen der Längsachse (59) der Aufnahmeplatte (56) und den V-förmig aufeinander zulaufenden weiteren Begrenzungsflächen (160, 161) ein in senkrechter Richtung bezüglich der Auflagefläche (151) ausgerichteter Durchbruch (164), insbesondere eine Bohrung, angeordnet ist.

19. Traganordnung (145) nach einem der Ansprüche 5 bis 18, **dadurch gekennzeichnet, dass** der Durchbruch (164) von einem Verbindungselement (165), insbesondere einer Schraube durchsetzt ist, und in das Innengewinde (158) der Tragleiste (148) eingreift.

20. Traganordnung (145) nach einem der Ansprüche 5 bis 19, **dadurch gekennzeichnet, dass** eine Breite (166) der Stützleiste (149) im Bereich der Längsachse (59) sowie in Richtung derselben größer ist als eine Breite (167) der Tragleiste (148) im gleichen Bereich sowie der gleichen Richtung.

21. Verfahren zur Herstellung eines extrudierten Gegenstandes (5), umfassend einen ersten Teilabschnitt (66) mit einer Hohlkammer sowie einen weiteren Teilabschnitt (67) aus einem Vollprofil, bei dem der Gegenstand (5) durch mehrere in Extrusionsrichtung (6) hintereinander angeordnete und an einem Kalibriertisch (21) einer Extrusionsanlage (1) auf einer Traganordnung (145) gehalterte Kalibrierwerkzeuge (10 bis 12) einer Kalibriervorrichtung (8) hindurchgeführt wird und die hintereinander angeordneten Kalibrierwerkzeugen (10 bis 12) durch diese hindurchführende Kalibrieröffnungen (65) mit Kalibrierachsen (63, 64) aufweisen, **dadurch gekennzeichnet, dass** die Traganordnung (145) durch eine Tragplatte (55) sowie eine von dieser getrennten Aufnahmeplatte (56) gebildet wird, und dabei die Tragplatte (55) der Aufnahmeplatte (56) in Extrusionsrichtung (6) gesehen unmittelbar vorgeordnet wird, und weiters die Kalibrierachsen (63, 64) von in Extrusionsrichtung (6) gesehen hintereinander angeordneten Kalibrierwerkzeugen (10 bis 12) um eine zwischen der Tragplatte (55) und der Aufnahmeplatte (56) angeordnete Gelenkanordnung (60) relativ zueinander räumlich verschwenkt werden und dabei der erste Teilabschnitt (66) mit der Hohlkammer bezüglich des weiteren Teilabschnittes (67) mit dem Vollprofil im Übertrittsbereich zwischen der Tragplatte (55) und der Aufnahmeplatte (56) gestreckt wird.

## Claims

1. Support arrangement (145) for holding several calibration tools (10 to 12) disposed one after the other in an extrusion direction (6) on a calibrating table (21) of an extrusion system (1), which calibration tools (10 to 12) disposed one after the other have calibration orifices (65) with calibration axes (63, 64) extending through them, **characterised in that** the support arrangement (145) comprises a supporting plate (55) and a holding plate (56) separate from it, and the supporting plate (55) is disposed directly upstream of the holding plate (56) as viewed in the extrusion direction (6) and the holding plate (56) is provided with a joint arrangement (60) by means of which the supporting plate (55) is able to pivot spatially about the joint arrangement (60) relative to the holding plate (56) so that the calibration axes (63, 64) of calibration tools (10 to 12) disposed one after the other as viewed in the extrusion direction (6) can be pivoted at an angle with respect to one another.

2. Support arrangement (145) as claimed in claim 1, **characterised in that** the supporting plate (55) is supported on the holding plate (56) by means of the joint arrangement (60).

3. Support arrangement (145) as claimed in one of the preceding claims, **characterised in that** the supporting plate (55) is provided with at least one adjusting device (68, 69) on the side facing away from the joint arrangement (60) to permit a horizontal and vertical adjustment respectively.

4. Support arrangement (145) as claimed in one of the preceding claims, **characterised in that** the holding plate (56) is provided with spacing and support elements (57) by means of which the holding plate (56) can be supported on the calibrating table.

5. Support arrangement (145) as claimed in one of the preceding claims, **characterised in that**, on mutually facing end faces (146, 147) of the supporting plate (55) and holding plate (56), the joint arrangement (60) has a bearing ledge (148) and supporting ledge (149) respectively extending out from the end face (146, 147).

6. Support arrangement (145) as claimed in claim 5, **characterised in that** the bearing ledge (148) extends across a part-region of a thickness (152) of the supporting plate (55).

7. Support arrangement (145) as claimed in claim 5 or 6, **characterised in that** the bearing ledge (148) is oriented in a flat arrangement with respect to a supporting surface (150) which can be turned towards the calibration tool (10 to 12).

8. Support arrangement (145) as claimed in one of claims 5 to 7, **characterised in that**, on the side remote from the supporting surface (150) as viewed transversely to the longitudinal extension of the supporting plate (55) and parallel with the supporting surface (150), the bearing ledge (148) has boundary surfaces (155, 156) extending towards one another at an angle in a V-shape in the direction remote from the supporting surface (150).

9. Support arrangement (145) as claimed in claim 8, **characterised in that** a first support surface (157) oriented parallel with the supporting surface (150) is disposed in the region of and between the boundary surfaces (155, 156) extending towards one another in a V-shape.

10. Support arrangement (145) as claimed in one of claims 5 to 9, **characterised in that** an internal thread (158) oriented in the direction perpendicular to the supporting surface (150) is provided in the bearing ledge (148) at an intersection point between a longitudinal axis (59) of the supporting plate (55) and the mutually converging boundary surfaces (155, 156).

11. Support arrangement (145) as claimed in one of claims 5 to 10, **characterised in that** the supporting ledge (149) has another supporting surface (159) of a flat design on the side facing the supporting surface (151).

12. Support arrangement (145) as claimed in claim 11, **characterised in that** the other supporting surface (159) of the supporting ledge (149) is disposed in an arrangement offset from the supporting surface (151) in the direction perpendicular to the latter.

13. Support arrangement (145) as claimed in claim 12, **characterised in that** the offset of the other supporting surface (159) of the supporting ledge (149) from the supporting surface (151) corresponds to a thickness (154) of the bearing ledge (148) in the direction perpendicular to the supporting surface (150, 151).

14. Support arrangement (145) as claimed in one of claims 5 to 13, **characterised in that** the supporting ledge (149) has otherboundary surfaces (160, 161) extending at an angle from the supporting surface (151) towards one another in a V-shape on the side facing away from the supporting surface (151) as viewed transversely to the longitudinal extension of the holding plate (56) and parallel with the supporting surface (151).

15. Support arrangement (145) as claimed in one of claims 5 to 14, **characterised in that** the thickness (154, 162) of the bearing ledge (148) and the supporting ledge (149) in total is smaller than the thickness (152, 153) of the supporting and holding plate (55, 56).

16. Support arrangement (145) as claimed in one of claims 5 to 15, **characterised in that** the end face (146) of the supporting plate (55) is supported on an end face (163) of the supporting ledge (149) directed towards it.

17. Support arrangement (145) as claimed in claim 16, **characterised in that** the end face (163) of the supporting ledge (149) directed towards the supporting plate (55) extends in the direction towards the supporting plate (55) in a mutually converging V-shape at least in the region of the longitudinal axis (59) as viewed in the vertical direction towards the supporting surface (151).

18. Support arrangement (145) as claimed in one of claims 5 to 17, **characterised in that** an orifice (164), in particular a bore, oriented in the direction perpendicular to the supporting surface (151) is provided in the supporting ledge (149) at an intersection point between the longitudinal axis (59) of the holding plate (56) and the other boundary surfaces (160, 161) mutually converging in a V-shape.

19. Support arrangement (145) as claimed in one of claims 5 to 18, **characterised in that** a connecting element (165), in particular a screw, extends through the orifice (164) and locates in the internal thread (158) of the bearing ledge (148).

20. Support arrangement (145) as claimed in one of claims 5 to 19, **characterised in that** a width (166) of the supporting ledge (149) in the region of the longitudinal axis (59) and in the direction thereof is wider than a width (167) of the supporting ledge (148) in the same region and the same direction.

21. Method of producing an extruded object (5), comprising a first part-portion (66) with a cavity and another part-portion (67) comprising of a solid profile, whereby the object (5) is fed through several calibration tools (10 to 12) of a calibration device (8) disposed one after the other in an extrusion direction (6) retained on a calibrating table (21) of an extrusion system (1) on a support arrangement (145), and the calibration tools (10 to 12) disposed one after the other have calibration orifices (65) with calibration axes (63, 64) extending through them, **characterised in that** the support arrangement (145) is provided in the form of a supporting plate (55) and a holding plate (56) separate from it, and the supporting plate (55) is disposed directly upstream of the holding plate (46) as viewed in the extrusion direction (6), and the calibration axes (63, 64) of calibration tools (10 to 12) disposed one after the other as viewed in the extrusion direction (6) are also spatially pivoted relative to one another about a joint arrangement (60) disposed between the supporting plate (55) and holding plate (56), and the first part-portion (66) with the cavity is stretched between the supporting plate (55) and the holding plate (56) relative to the other part-portion (67) with the solid profile.

## Revendications

1. Agencement de support (145) pour la retenue de plusieurs outils de calibrage (10 à 12) disposés dans la direction d'extrusion (6) les uns derrière les autres d'un dispositif de calibrage (8) à une table de calibrage (21) d'une installation d'extrusion (1), où les outils de calibrage (10 à 12) disposés les uns derrière les autres présentent des ouvertures de calibrage (65) passant à travers ceux-ci avec des axes de calibrage (63, 64), **caractérisé en ce que** l'agencement de support (145) présente une plaque de support (55) et une plaque de réception (56) séparée de celle-ci, où la plaque de support (55) de la plaque de réception (56), vue dans la direction d'extrusion (6), est disposée directement en amont et qu'il est prévu entre la plaque de support (55) et la plaque de réception (56) un agencement d'articulation (60) au moyen duquel la plaque de support (55) est réalisée relativement à la plaque de réception (56) relativement à celle-ci d'une manière spatialement pivotante autour de l'agencement d'articulation (60), moyennant quoi les axes de calibrage (63, 64) d'outils de calibrage (10 à 12) disposés, vus dans la direction d'extrusion (6), les uns derrière les autres peuvent être amenés à pivoter angulairement les uns vers les autres.

2. Agencement de support (145) selon la revendication 1, **caractérisé en ce que** la plaque de support (55) s'appuie par l'agencement d'articulation (60) à la plaque de réception (56).

3. Agencement de support (145) selon l'une des revendications précédentes, **caractérisé en ce qu'**est associé à la plaque de support (55) au côté éloigné de l'agencement d'articulation (60), pour le déplacement horizontal et vertical, à chaque fois au moins un dispositif de déplacement (68, 69).

4. Agencement de support (145) selon l'une des revendications précédentes, **caractérisé en ce que** sont associés à la plaque de réception (56) des éléments d'écartement ou d'appui (57) par lesquels la plaque de réception (56) peut s'appuyer sur la table de calibrage (21).

5. Agencement de support (145) selon l'une des revendications précédentes, **caractérisé en ce que** l'agencement d'articulation (60), à des faces frontales (146, 147) orientées l'une vers l'autre de la plaque de support (55) et de la plaque de réception (56) comprend à chaque fois une baguette de support (148) et baguette d'appui (149) faisant saillie sur la face frontale (146, 147).

6. Agencement de support (145) selon la revendication 5, **caractérisé en ce que** la baguette de support (148) s'étend sur une zone partielle d'une épaisseur (152) de la plaque de support (55).

7. Agencement de support (145) selon la revendication 5 ou 6, **caractérisé en ce que** la baguette de support (148) est orientée d'une manière plane à une face d'application (150) orientée vers l'outil de calibrage (10 à 12).

8. Agencement de support (145) selon l'une des revendications 5 à 7, **caractérisé en ce que** la baguette de support (148) présente au côté éloigné de la face d'application (150), vue transversalement à l'extension longitudinale de la plaque de support (55) et parallèlement à la face d'application (150), des faces de délimitation (155, 156) convergeant en forme de V dans la direction éloignée de la face d'application (150).

9. Agencement de support (145) selon la revendication 8, **caractérisé en ce qu'**il est disposé dans la zone des faces de délimitation (155, 156) convergeant en forme de V, entre celles-ci, une première face d'appui (157) orientée parallèlement à la face d'application (150).

10. Agencement de support (145) selon l'une des revendications 5 à 9, **caractérisé en ce qu'**il est disposé dans la baguette de support (148), à une intersection entre un axe longitudinal (59) de la plaque de support (55) et les faces de délimitation (155, 156) convergeant en forme de V, un filetage intérieur (158) orienté dans la direction verticale relativement à la face d'application (150).

11. Agencement de support (145) selon l'une des revendications 5 à 10, **caractérisé en ce que** la baguette d'appui (149) présente au côté orienté vers la face d'application (151) une autre face d'appui (159) réalisée d'une manière plane.

12. Agencement de support (145) selon la revendication 11, **caractérisé en ce que** l'autre face d'appui (159) de la baguette d'appui (149) est décalée relativement à la face d'application (151) dans la direction verticale à celle-ci.

13. Agencement de support (145) selon la revendication 12, **caractérisé en ce que** le décalage de l'autre face d'appui (159) de la baguette d'appui (149) par rapport à la face d'application (151) correspond à une épaisseur (154) de la baguette de support (148) dans la direction verticale relativement à la face d'application (150, 151).

14. Agencement de support (145) selon l'une des revendications 5 à 13, **caractérisé en ce que** la baguette d'appui (149), sur le côté éloigné à la face d'application (151), vue transversalement à l'extension longitudinale de la plaque de réception (56) et parallèlement à la face d'application (151), présente d'autres faces de délimitation (160, 161) convergeant d'une manière inclinée en forme de V dans la direction éloignée de la face d'application (151).

15. Agencement de support (145) selon l'une des revendications 5 à 14, **caractérisé en ce que** l'épaisseur (154, 162) de la baguette de support (148) et celle de la baguette d'appui (149), en somme, est plus petite que l'épaisseur (152, 153) de la plaque de support ou de réception (55, 56).

16. Agencement de support (145) selon l'une des revendications 5 à 15, **caractérisé en ce que** la face frontale (146) de la plaque de support (55) s'appuie à une face frontale (163) orientée vers celle-ci de la baguette d'appui (149).

17. Agencement de support (145) selon la revendication 16, **caractérisé en ce que** la face frontale (163) de la baguette d'appui (149) orientée vers la plaque de support (55), vue dans la direction verticale sur la face d'application (151), est réalisée d'une manière convergente au moins dans la zone de l'axe longitudinal (59) en forme de V en direction de la plaque de support (55).

18. Agencement de support (145) selon l'une des revendications 5 à 17, **caractérisé en ce qu'**est disposé dans la baguette d'appui (149), à une intersection entre l'axe longitudinal (59) de la plaque de réception (56) et les autres faces de délimitation (160, 161) convergeant en forme de V, un perçage (164), en particulier, un alésage.

19. Agencement de support (145) selon l'une des revendications 5 à 18, **caractérisé en ce que** le perçage (164) est traversé par un élément de liaison (156), en particulier une vis, qui s'engage dans le taraudage (158) de la baguette de support (148).

20. Agencement de support (145) selon l'une des revendications 5 à 19, **caractérisé en ce qu'**une largeur (166) de la baguette d'appui (149), dans la zone de l'axe longitudinal (59) et dans la direction de celle-ci est plus grande qu'une largeur (167) de la baguette de support (148) dans la même zone et dans la même direction.

21. Procédé de fabrication d'un objet extrudé (5), comprenant une première section partielle (66) avec une chambre creuse et une autre section partielle (67) en un profilé plein, dans lequel l'objet (5) est amené à passer à travers plusieurs outils de calibrage (10 à 12) d'un dispositif de calibrage (8) disposés dans la direction d'extrusion (6) les uns derrière les autres et retenus à une table de calibrage (21) d'une installation d'extrusion (1) sur un agencement de support (145), et les outils de calibrage (10 à 12) disposés les uns derrière les autres présentent des ouvertures de calibrage (65) avec des axes de calibrage (63, 64) passant à travers celles-ci, **caractérisé en ce que** l'agencement de support (145) est formé par une plaque de support (55) et une plaque de réception (56) séparée de celle-ci, et ce faisant la plaque de support (55) est disposée directement en amont de la plaque de réception (56) vue dans la direction d'extrusion (6), et en outre les axes de calibrage (63, 64) d'outils de calibrage (10 à 12) disposés, vue dans la direction d'extrusion (6), les uns derrière les autres, sont amenés à pivoter spatialement les uns relativement aux autres autour d'un agencement d'articulation (60) disposé entre la plaque de support (55) et la plaque de réception (56) et, ce faisant, la première section partielle (66) avec la chambre creuse est étirée relativement à l'autre section partielle (67) avec le profilé plein dans la zone de passage entre la plaque de support (55) et la plaque de réception (56).
